# EUROPÄISCHE PATENTSCHRIFT

(11) **EP 4 046 153 B1**
(45) Veröffentlichungstag und Bekanntmachung des Hinweises auf die Patenterteilung: **06.08.2025**
(21) Anmeldenummer: 20785948.9
(22) Anmeldetag: 30.09.2020
(51) Int. Cl.: G09F 19/12, G09F 13/06, G09F 9/35, G09F 9/33, G09F 9/30

(54) **DEKORFOLIE, DEKORFOLIENKÖRPER, DISPLAYKÖRPER SOWIE VERFAHREN ZU DESSEN HERSTELLUNG**
DECORATIVE FILM, DECORATIVE FILM BODY, DISPLAY BODY AND METHODS FOR PRODUCTION THEREOF
FILM DÉCORATIF, CORPS DE FILM DÉCORATIF, CORPS D'AFFICHAGE ET PROCÉDÉS DE PRODUCTION ASSOCIÉS

(30) Priorität: 14.10.2019 DE 102019127630
(43) Veröffentlichungstag der Anmeldung: 24.08.2022
(73) Patentinhaber: LEONHARD KURZ Stiftung & Co. KG, 90763 Fürth (DE)
(72) Erfinder: HERRMANN, Bernd, 90522 Oberasbach (DE); UCKE, Michael Otto, 4592 Leonstein (AT)
(74) Vertreter: Louis Pöhlau Lohrentz
(86) Internationale Anmeldenummer: PCT/EP2020/077395
(87) Internationale Veröffentlichungsnummer: WO 2021/073876

(56) Entgegenhaltungen:
- WO-A1-2004/077388
- DE-A1- 102010 051 166
- JP-A- 2002 023 670
- JP-A- 2002 040 952
- JP-A- 2007 271 862

## Beschreibung

Die Erfindung betrifft eine Dekorfolie, einen Dekorfolienkörper und einen Displaykörper sowie Verfahren zu deren Herstellung.

Es ist bekannt, symbolförmige Durchtrennungen in eine Dekorfolie einzubringen und die Dekorfolie vor einer Lichtquelle zu platzieren, so dass für einen Betrachter bei eingeschalteter Lichtquelle ein Symbol erscheint. Hierbei ist die Formgebung dieses Symbols an die Form der Durchtrennungen gebunden.

Weiter ist es bekannt, Bildschirme hinter oder in einer rahmenförmigen Dekorfolie zu platzieren. Um den Bildschirm herum bzw. benachbart zum Bildschirm zeigt die Dekorfolie also statische Motive und die Fläche innerhalb des Rahmens dient lediglich als Anzeigefläche des Bildschirms. Weitere Funktionen übernimmt die Anzeigefläche hierbei nicht.

Das Dokument JP 2007271862 A betrifft eine Tür mit einer Musterlichtfunktion, die in der Lage ist, Licht eines gewünschten Musters, wie Buchstaben und Muster, auf einer hölzernen Oberflächenschicht schweben zu lassen.

Das Dokument WO 2004/077388 A1 betrifft eine Metallstruktur mit einem oder mehreren lichtdurchlässigen Bereichen. Die lichtdurchlässigen Bereiche können Symbole bilden und somit kann die Metallstruktur als Informationsanzeige oder Eingabegerät dienen.

Das Dokument JP 2002 023670 A betrifft eine lichtdurchlässige Anzeigeplatte und eine damit versehene elektronische Anzeigevorrichtung.

Das Dokument JP 2002 040952 A betrifft eine Anzeigeplatte und ein elektronisches Anzeigegerät mit einer solchen Anzeigeplatte.

Es ist somit Aufgabe der vorliegenden Erfindung, eine verbesserte Dekorfolie, einen verbesserten Dekorfolienkörper und einen verbesserten Displaykörper sowie Verfahren zu deren Herstellung anzugeben.

Die Aufgabe wird gelöst durch eine Dekorfolie nach Anspruch 1, einen Dekorfolienkörper nach Anspruch 7, einen Displaykörper nach Anspruch 8, ein Verfahren nach Anspruch 14, ein Verfahren nach Anspruch 16 sowie ein Verfahren nach Anspruch 17.

Die Aufgabe wird gelöst durch eine Dekorfolie zum Aufbringen auf ein dynamisch ansteuerbares Display nach Anspruch 1, umfassend:
- eine Trägerlage,
- eine erste Dekorlage.

Die erste Dekorlage weist in einem Displaybereich ein erstes Dekor und ein oder mehrere Transparenzbereiche auf. In den ein oder mehreren Transparenzbereichen ist die Dekorfolie für von dem dynamisch ansteuerbaren Display abgestrahltes Licht durchlässig.

Die Aufgabe wird weiter gelöst durch einen Dekorfolienkörper zum Aufbringen auf ein dynamisch ansteuerbares Display mit einer Dekorfolie nach einem der Ansprüche 1 bis 6. Der Dekorfolienkörper zeichnet sich dadurch aus, dass er eine weitere Dekorlage umfasst. Insbesondere ist die weitere Dekorlage auf einer der Trägerlage abgewandten Seite der ersten Dekorlage oder einer der ersten Dekorlage abgewandten Seite der Trägerlage aufgebracht.

Die Aufgabe wird weiter gelöst durch einen Displaykörper. Der Displaykörper umfasst ein dynamisch ansteuerbares Display und eine Dekorfolie nach einem der Ansprüche 1 bis 6 oder der Displaykörper umfasst ein dynamisch ansteuerbares Display und einen Dekorfolienkörper nach Anspruch 7.

Die Aufgabe wird weiter gelöst mittels eines Verfahrens zum Herstellen einer Dekorfolie, insbesondere nach einem der Ansprüche 1 bis 6, zum Aufbringen auf ein dynamisch ansteuerbares Display umfassend die folgenden Schritte, vorzugsweise in der angegebenen Reihenfolge:
- Bereitstellen einer Trägerlage,
- Aufbringen einer ersten Dekorlage auf die Trägerlage, wobei die erste Dekorlage ein erstes Dekor in einem Displaybereich aufweist,
- Erzeugen von ein oder mehreren Transparenzbereichen in dem Displaybereich, wobei die Dekorfolie in den ein oder mehreren Transparenzbereichen für von dem dynamisch ansteuerbaren Display abgestrahltes Licht durchlässig ist.

Weiter wird die Aufgabe gelöst durch ein Verfahren, insbesondere umfassend ein Verfahren nach einem der Ansprüche 14 und 15, zum Herstellen eines Dekorfolienkörpers, vorzugsweise nach Anspruch 7, zum Aufbringen auf ein dynamisch ansteuerbares Display, wobei die erste Dekorlage mit einer weiteren Dekorlage verbunden wird.

Insbesondere wird die erste Dekorlage mit der weiteren Dekorlage mittels Heißprägen, Heißlaminieren, Kaltprägen, Laminieren, Kaschieren, Verkleben und/oder Spritzgießen, insbesondere Inmould-Decoration und/oder Hinterspritzen, verbunden.

Die Aufgabe wird weiter gelöst durch ein Verfahren, insbesondere umfassend ein Verfahren nach einem der Ansprüche 14 und 15, zum Herstellen eines Displaykörpers, vorzugsweise nach Anspruch 8, umfassend die folgenden Schritte:
- Bereitstellen einer Dekorfolie nach einem der Ansprüche 1 bis 6 oder eines Dekorfolienkörpers nach Anspruch 7,
- Verbinden der Dekorfolie oder des Dekorfolienkörpers mit einem dynamisch ansteuerbaren Display, insbesondere mittels Heißprägen, Heißlaminieren, Kaltprägen, Laminieren, Kaschieren, Verkleben und/oder Spritzgießen, insbesondere Inmould-Decoration und/oder Hinterspritzen.

Die Aufgabe wird weiter gelöst durch eine Verwendung einer Dekorfolie nach einem der Ansprüche 1 bis 6 und/oder eines Dekorfolienkörpers nach Anspruch 7 als Insert, Heißprägefolie und/oder In-Mould-Folie, insbesondere als In-Mould-Decoration-Folie, In-Mould-Labeling-Folie und/oder Print-Mould-Design-Folie.

Die Aufgabe wird weiter gelöst durch eine Verwendung einer Dekorfolie nach einem der Ansprüche 1 bis 6, eines Displaykörpers nach Anspruch 8 und/oder eines Dekorfolienkörpers nach Anspruch 7 als einer oder in einem der folgenden Gegenstände:
- Fahrzeugaußenteil, insbesondere Vorderseitenverkleidung, vorzugsweise Kühlergrill, Seitenverkleidung, vorzugsweise B-Säule, Rückseitenverkleidung, Beplankung und/oder Dachaufsatz, bevorzugt als Werbeanzeige, Informationsanzeige und/oder Warnhinweis,
- Fahrzeuginnenteil, insbesondere als Armaturenbrett, Armaturenbrettelement, Türverkleidung, Türverkleidungselement, Warnhinweis und/oder Informationsanzeige,
- Haushaltsgerät, insbesondere Kühlschrank, Waschmaschine, Geschirrspüler und/oder Herd - Möbelstück,
- Informationsanzeige, insbesondere Werbeanzeige.

Mittels der Dekorfolie, dem Dekorfolienkörper und dem Displaykörper sowie deren Verwendung und Verfahren zu deren Herstellung wird beispielsweise der Vorteil erzielt, dass ein dynamisch ansteuerbares Display um ein insbesondere von dem ersten Dekor erzeugtes statisches Motiv erweitert werden kann. Dieses statische Motiv ist bevorzugt auch ohne Energieverbrauch des dynamisch ansteuerbaren Displays in dem Displaybereich sichtbar und ermöglicht es bevorzugt, dass das dynamisch ansteuerbare Display optisch verborgen werden kann. Es wird also insbesondere eine optische Abschirmung des dynamisch ansteuerbaren Displays ermöglicht. In dem Displaybereich ist es bevorzugt auch möglich, dass insbesondere mittels des dynamisch ansteuerbaren Displays neben statischen Motiven auch dynamische Motive angezeigt werden können und insbesondere ein statisches Motiv mittels des dynamisch ansteuerbaren Displays optisch verborgen werden kann.

Optisch verborgen bedeutet insbesondere in einen für das menschliche Auge nicht oder schwer erkennbaren Zustand versetzt. Ein Dekor wird bevorzugt zum Ausbilden eines Motivs verwendet. Wird ein Dekor optisch verborgen, ist insbesondere das auszubildende Motiv für das menschliche Auge optisch verborgen und damit bevorzugt nicht oder schwer erkennbar.

Unter einem statischen Motiv ist hier insbesondere ein bevorzugt für das menschliche Auge ohne Zuhilfenahme optischer Hilfsmittel erkennbares Motiv zu verstehen, welches sich vorzugsweise selbst nicht bewegt und/oder dessen für das menschliche Auge erkennbare Formgebung, beispielsweise Konturen und/oder Kanten, keine Bewegung aufweisen.

Unter einem Motiv wird beispielsweise ein Muster verstanden. Ein Muster ist insbesondere ein graphisch gestalteter Umriss, eine figürliche Darstellung, ein Bild, ein Symbol, ein Logo, ein Portrait, ein alphanumerisches Zeichen, ein Text, eine Rasterung und/oder dergleichen oder eine Kombination eines oder mehrerer der vorstehenden Muster.

Ein statisches Motiv ist insbesondere auch eine bevorzugt für das menschliche Auge ohne Zuhilfenahme optischer Hilfsmittel erkennbare homogene Farbfläche, ein optisches Erscheinungsbild von Holz, Metall und/oder Stein. Vorzugsweise weist ein statisches Motiv weniger als einen Bildwechsel pro Sekunde, insbesondere weniger als 5 Bildwechsel pro Sekunde, auf. Insbesondere weist ein statisches Motiv weniger als 10 verschiedene Einzelbilder, bevorzugt mit verschiedenen Formen auf.

Dynamische Motive sind insbesondere Bewegtbilder, vorzugsweise Animationen, Filme und/oder Videos. Ein Bewegtbild ist insbesondere eine Folge von Bildern, die durch Anzeigen in kurzen Zeitabständen vorzugsweise mit geeigneter Technik für den Betrachter die Illusion der Bewegung erzeugen. Ein dynamisches Motiv ist insbesondere eine Bildfolge mit mehr als einem Bildwechsel pro Sekunde, vorzugsweise mit mehr als 5 Bildwechseln pro Sekunde. Ein Bildwechsel äußert sich bevorzugt zumindest in einer Bewegung einer für das menschliche Auge erkennbaren Formgebung, beispielsweise von Konturen und/oder Kanten. Insbesondere weist ein dynamisches Motiv mehr als 10, insbesondere mehr als 100, bevorzugt mehr als 1000 verschiedene Einzelbilder, bevorzugt mit verschiedenen Formen, auf.

Ein weiterer Vorteil der Erfindung ist, dass eine hohe Flexibilität in der Möglichkeit, verschiedene statische Motive und/oder dynamische Motive anzuzeigen, erreicht wird. Beispielsweise wird gegenüber herkömmlichen hinterleuchteten Durchtrennungen zur Erzeugung von statischen Motiven insbesondere ermöglicht, dass die für das menschliche Auge erkennbare Formgebung eines Motivs nicht oder nur gering durch die Formgebung von den ein oder mehreren Transparenzbereichen, beispielsweise in der Form von Durchtrennungen, eingeschränkt ist.

Es ist weiterhin möglich, dass die Dekorfolie und/oder der Dekorfolienkörper für das dynamisch ansteuerbare Display eine Schutzfunktion, insbesondere vor mechanischen, chemischen und/oder durch Strahlung verursachte Einwirkungen, übernimmt. Damit ist es möglich, dass ein vergleichsweises empfindliches Display unter anspruchsvolleren Umgebungsbedingungen einsetzbar ist, zum Beispiel in Außenbereichen, und/oder die Haltbarkeit verbessert wird.

Eine Lage und/oder eine Schicht ist insbesondere ein im Wesentlichen flächiges Gebilde und ist vorzugsweise selbst ein- oder mehrschichtig.

Vorteilhafte Ausgestaltungen der Erfindung sind in den Unteransprüchen bezeichnet.

Vorzugsweise ist der Displaybereich, insbesondere bei einer Betrachtung senkrecht auf eine von der Dekorfolie aufgespannte Ebene, von einem Umriss um die ein oder mehreren Transparenzbereiche begrenzt und/oder von einem Bereich definiert, auf welchen das dynamisch ansteuerbare Display aufgebracht ist, wird oder aufzubringen ist. Es ist insbesondere möglich, dass der Dekorfolienkörper und/oder der Displaykörper beispielsweise ein Bauteil, vorzugsweise mit ein oder mehreren gekrümmten Oberflächen, bevorzugt an zumindest einer Außenseite des Bauteils, ist.

Die Dekorfolie ist in den ein oder mehreren Transparenzbereichen insbesondere für von dem dynamisch ansteuerbaren Display abgestrahltes Licht durchlässig, indem die ein oder mehreren Transparenzbereiche semitransparent oder transparent sind und/oder eine Transparenz im sichtbaren Wellenlängenbereich von mindestens 0,5 %, bevorzugt von wenigstens 1 %, aufweisen.

Unter semitransparent wird bevorzugt eine Transmissivität im sichtbaren Wellenlängenbereich zwischen 15 % und 60 % und unter transparent vorzugsweise eine Transmissivität in zumindest einem Teilbereich im sichtbaren Wellenlängenbereich von mehr als 60 % verstanden. Unter opak wird bevorzugt eine Transmissivität im sichtbaren Wellenlängenbereich von weniger als 15 % verstanden.

Unter den ein oder mehreren Transparenzbereichen der ersten Dekorlage werden hier insbesondere ein oder mehrere Bereiche bezeichnet, in welchen die erste Dekorlage entfernt ist oder wird. Es ist auch möglich, dass in den ein oder mehreren Transparenzbereichen die Opazität der ersten Dekorlage, insbesondere in Relation zu umgebenden Bereichen der ersten Dekorlage, verringert ist oder wird und/oder die Transparenz der ersten Dekorlage, insbesondere in Relation zu umgebenden Bereichen der ersten Dekorlage, erhöht ist oder wird. Es ist weiter denkbar, dass die ein oder mehreren Transparenzbereiche von einem zusammenhängenden Transparenzbereich oder mehreren voneinander getrennten Transparenzbereichen gebildet werden.

Die ein oder mehreren Transparenzbereiche sind bevorzugt Ausnehmungen, Aussparungen, Durchtrennungen, Leerstellen und/oder Löcher der ersten Dekorlage. Vorzugsweise werden oder sind die ein oder mehreren Transparenzbereiche durch ein Einbringen und/oder Zurücklassen von Ausnehmungen, Aussparungen, Durchtrennungen, Leerstellen und/oder Löchern, bevorzugt zumindest in der ersten Dekorlage, erzeugt. Insbesondere ist es möglich, dass die ein oder mehreren Transparenzbereiche perforiert werden und/oder eine Perforation, bevorzugt der ersten Dekorlage, bilden. Die ein oder mehreren Transparenzbereiche durchdringen bevorzugt zumindest eine und/oder alle Schichten der ersten Dekorlage. Die ein oder mehreren Transparenzbereiche werden oder sind bevorzugt mittels eines Bearbeitungswerkzeugs, insbesondere mittels Laser, und/oder Lift-Off erzeugt, vorzugsweise in einem ein- oder zweidimensionalen regelmäßigen Muster, bevorzugt Lochmuster.

Das Bearbeitungswerkzeug ist vorzugsweise ein Laser, insbesondere in der Auslegung als CO²-Laser oder in der Auslegung als YAG-Festkörper-Laser. Zweckmäßigerweise liegt die Leistung des CO²-Lasers in einem Bereich von 5 Watt bis 50 Watt, vorzugsweise in einem Bereich von 5 Watt bis 25 Watt. Die Geschwindigkeit des CO²-Lasers, insbesondere die Verfahrgeschwindigkeit der Laserquelle des CO²-Lasers, liegt vorzugsweise in einem Bereich von 2 mm/s bis 100 mm/s, bevorzugt in einem Bereich von 2 mm/s bis 50 mm/s. Die Wellenlänge, insbesondere die Peak-Wellenlänge, des Lasers, vorzugsweise in der Auslegung als CO²-Laser, beträgt bevorzugt 1060 nm.

Zweckmäßigerweise liegt die Leistung des YAG-Festkörper-Lasers in einem Bereich von 5 Watt bis 50 Watt, bevorzugt in einem Bereich von 5 Watt bis 20 Watt. Die Geschwindigkeit des YAG-Festkörper-Lasers, insbesondere die Verfahrgeschwindigkeit der Laserquelle des YAG-Festkörper-Lasers, liegt bevorzugt in einem Bereich von 50 mm/s bis 3000 mm/s liegt. Es ist auch möglich, dass die Wellenlänge, insbesondere die Peak-Wellenlänge, des Lasers, vorzugsweise in der Auslegung als YAG-Festkörper-Laser, bevorzugt 1064 nm, insbesondere bei einer Frequenz von 150 KHz, beträgt.

Lift-Off ist insbesondere ein Verfahren, bei welchem eine lösliche Schicht gedruckt wird, bevorzugt auf die Trägerlage gedruckt wird. Vorzugsweise wird anschließend eine bereichsweise zu lösende Dekorschicht auf die lösliche Schicht, bevorzugt auf die Trägerlage mit der löslichen Schicht, gedruckt. Bevorzugt wird dann die lösliche Schicht mit der darüberliegenden bereichsweise zu lösenden Dekorschicht gelöst, beispielsweise durch das Einwirkenlassen von Lösemitteln, in denen die lösliche Schicht bevorzugt lösbar ist. Dies können beispielsweise organische Lösungsmittel und/oder Wasser sein. Insbesondere werden die ein oder mehreren Transparenzbereiche dabei erzeugt, indem bevorzugt die lösliche Schicht in den ein oder mehreren Transparenzbereichen mit der zu lösenden Dekorschicht von der Trägerlage abgelöst wird. Weiter ist es denkbar, dass die ein oder mehreren Transparenzbereiche mittels Stanzen oder Fräsen erzeugt werden.

Es ist möglich, dass die erste Dekorlage und/oder das erste Dekor, insbesondere im Displaybereich, bevorzugt außerhalb der ein oder mehreren Transparenzbereiche, zumindest bereichsweise opak oder semitransparent oder vollflächig opak oder semitransparent ist. Insbesondere weist die erste Dekorlage und/oder die Dekorfolie eine zumindest bereichsweise opake Schicht oder bevorzugt mehrere Schichten, welche eine mehrschichtige zumindest bereichsweise opake Lage bilden, auf.

Bevorzugt stellt die erste Dekorlage und/oder das erste Dekor, bevorzugt zumindest in dem Displaybereich, ein erstes Motiv oder einen ersten Teilbereich eines ersten Motivs bereit, wobei das erste Motiv ein statisches Motiv ist. Mittels der ersten Dekorlage und/oder dem ersten Dekor ist also bevorzugt das erste Motiv oder ein erster Teilbereich des ersten Motivs in einen für das menschliche Auge ohne Zuhilfenahme optischer Hilfsmittel sichtbaren Zustand versetzbar. Das erste Motiv ist insbesondere im Auflicht für das menschliche Auge erkennbar, bevorzugt bei einer Betrachtung auf die Dekorfolie, den Dekorfolienkörper und/oder den Displaykörper, insbesondere von einer Seite der ersten Dekorlage ausgehend von der Trägerlage oder dem dynamisch ansteuerbaren Display. Die Dekorfolie und/oder der Dekorfolienkörper wird dabei vorzugsweise nicht oder nur geringfügig durchleuchtet, bevorzugt nicht stärker von einer der Betrachtungsseite gegenüberliegenden Seite beleuchtet und/oder durchleuchtet als mit einer Leuchtdichte von 30 cd/m². Die Leuchtdichte des einfallenden Lichts auf die Dekorfolie und/oder den Dekorfolienkörper von der Betrachtungsseite her beträgt bevorzugt nicht mehr als 10000 cd/m².

Insbesondere weist die erste Dekorlage und/oder das erste Dekor außerhalb des Displaybereichs ein statisches Motiv auf und/oder stellt dieses bereit, welches den Displaybereich vorzugsweise umgibt und/oder begrenzt, beispielsweise in Form einer Umrandung, bevorzugt in einer zum Dekor, insbesondere zum ersten Dekor und/oder zum ersten Motiv, innerhalb des Displaybereichs kontrastierenden Farbe, und/oder in Form einer Metallisierung, beispielsweise aus Chrom. Es ist auch möglich, dass das erste Dekor und/oder das statische Motiv der ersten Dekorlage und/oder des ersten Dekors außerhalb des Displaybereichs bevorzugt mit dem ersten Dekor innerhalb des Displaybereichs übereinstimmt und/oder dies nahtlos und/oder übergangslos fortsetzt, vorzugsweise sodass der Displaybereich als solcher nicht ohne weiteres erkennbar ist, insbesondere nicht ohne weiteres anhand des ersten Dekors erkennbar ist.

Weiter ist es möglich, dass die erste Dekorlage und/oder das erste Dekor außerhalb des Displaybereichs zumindest bereichsweise transparent oder semitransparent ist und/oder außerhalb des Displaybereichs hinterleuchtet und/oder durchleuchtet ist, insbesondere wobei diese Hinterleuchtung und/oder Durchleuchtung bevorzugt nicht mit dem dynamisch ansteuerbaren Display, sondern mit weiteren Leuchtelementen erfolgen kann.

Es ist beispielsweise möglich, dass das statische Motiv vorzugsweise außerhalb des Displaybereichs insbesondere im Displaykörper sichtbar ist, bevorzugt für den Fall, dass das dynamisch ansteuerbare Display eingeschaltet ist und/oder für den Fall, dass das dynamisch ansteuerbare Display ausgeschaltet ist.

Das dynamisch ansteuerbare Display ist oder wird bevorzugt auf einer Seite der Dekorfolie angeordnet, welche, insbesondere ausgehend von einer Berührungsfläche zwischen der Trägerlage und der ersten Dekorlage, der ersten Dekorlage zugewandt oder abgewandt angeordnet ist.

Das dynamisch ansteuerbare Display ist insbesondere in einen ausgeschalteten Zustand und einen eingeschalteten Zustand versetzbar. Bei dem Verbinden der Dekorfolie oder des Dekorfolienkörpers mit dem dynamisch ansteuerbaren Display wird vorzugsweise das dynamisch ansteuerbare Display mit der Trägerlage der Dekorfolie, der ersten Dekorlage und/oder der weiteren Dekorlage verbunden. Bevorzugt strahlt das dynamisch ansteuerbare Display, insbesondere nach dem Verbinden, im eingeschalteten Zustand Licht in Richtung der ein oder mehreren Transparenzbereiche der ersten Dekorlage ab.

Es ist es möglich, dass bei einer Betrachtung des Displaykörpers von der Seite der Dekorfolie der Displaybereich im ausgeschalteten Zustand des dynamisch ansteuerbaren Displays das, insbesondere für das menschliche Auge erkennbare, erste Motiv ausbildet, welches bevorzugt ein statisches Motiv ist. Vorzugsweise ist das dynamisch ansteuerbare Display dabei optisch verborgen, also vorzugsweise für das menschliche Auge nicht oder schwer erkennbar. Insbesondere bei einer Betrachtung des Displaybereichs der Dekorfolie, des Dekorfolienkörpers und/oder des Displaykörpers im ausgeschalteten Zustand des dynamisch ansteuerbaren Displays wird also vorzugsweise neben der optischen Wahrnehmung des ersten Dekors, beispielsweise in der Form eines Material, wie bevorzugt Holz, Stein und/oder Metall, bevorzugt keine weitere technische Funktion sichtbar oder vermutet.

Weiter ist es möglich, dass bei einer Betrachtung des Displaykörpers von der Seite der Dekorfolie der Displaybereich im eingeschalteten Zustand des dynamisch ansteuerbaren Displays ein, insbesondere für das menschliche Auge erkennbares, zweites Motiv aufweist. Das zweite Motiv ist insbesondere dynamisch veränderbar und/oder ein dynamisches Motiv. Das erste Motiv ist dabei vorteilhafterweise optisch verborgen, bevorzugt also für das menschliche Auge nicht oder schwer erkennbar. Ein dynamisch veränderbares Motiv ist insbesondere in der Lage, dynamische Motive aufzuweisen und/oder ist ein Motiv, welches, vorzugsweise zeitgleich und/oder zeitversetzt, statische und/oder dynamische Motive aufweist. Bevorzugt wird hiermit ein besonderer optischer Effekt erzielt, welcher insbesondere durch einen "Materialkonflikt" entsteht, vorzugsweise durch den Wechsel von einem statischen Motiv zu zumindest bereichsweise einem dynamischen Motiv. Zum Beispiel wird eine bevorzugt inaktive Fläche in einem statischen, toten Holz-, Metall- oder Stein-Look plötzlich aktiv, dynamisch und "lebendig". Es ist also möglich, dass der zuvor im ausgeschalteten Zustand des Displays als ein Material, wie zum Beispiel Holz, Stein und/oder Metall, wahrgenommene Displaybereich als kommunikative und/oder interaktive Fläche fungiert, wobei in dem Displaybereich bevorzugt eine Information und/oder Botschaft gezeigt wird.

Vorzugsweise ist das dynamisch ansteuerbare Display im eingeschalteten Zustand und/oder im ausgeschalteten Zustand optisch verborgen, insbesondere wobei im eingeschalteten Zustand des dynamisch ansteuerbaren Displays im Displaybereich lediglich das zweite Motiv sichtbar ist und/oder im ausgeschalteten Zustand des dynamisch ansteuerbaren Displays das zweite Motiv nicht sichtbar ist und/oder nicht erzeugt wird.

Es ist auch denkbar, dass der Displaybereich im eingeschalteten Zustand des dynamisch ansteuerbaren Displays in einem ersten Bereich das erste Motiv und/oder einen Teilbereich des ersten Motivs und in einem zweiten Bereich das zweite Motiv und/oder einen Teilbereich des zweiten Motivs aufweist, wobei der erste und der zweite Bereich vorzugsweise nicht überlappen.

Bevorzugt ist es auch denkbar, dass das zweite Motiv insbesondere kein statisches Motiv aufweist und/oder dass insbesondere im eingeschalteten Zustand des dynamisch ansteuerbaren Displays der Displaykörper vorzugsweise kein statisches Motiv ausbildet oder erzeugt, insbesondere indem das erste Motiv durch das zweite Motiv optisch verborgen wird, wobei das zweite Motiv bevorzugt ausschließlich ein oder mehrere dynamische Motive aufweist.

Der Betrachtungsabstand, vorzugsweise in welchem das zweite Motiv erkennbar, bevorzugt besonders gut erkennbar ist und/oder das zweite Motiv das erste Motiv optisch verbirgt, ist vorzugsweise größer als 2,8 m. Weiter ist es möglich, dass bei einem Abstand von größer als 2,8 m das dynamisch ansteuerbare Display optisch verborgen ist. Die Abmaße der ein oder mehreren Transparenzbereiche liegen, insbesondere bei einem Abstand von mindestens 2,8 m, beispielsweise bevorzugt unter dem Auflösungsvermögen des menschlichen Auges.

Der Betrachtungswinkel bei einer Betrachtung des Displaykörpers von der Seite der Dekorfolie, in welchem das zweite Motiv besonders gut erkennbar ist und/oder das zweite Motiv das erste Motiv für das menschliche Auge verbirgt, liegt insbesondere in einem Bereich von -80° bis 80°, weiter bevorzugt in einem Bereich von -70° bis 70°, vorzugsweise wobei der Betrachtungswinkel bei einer Betrachtung senkrecht auf die Dekorfolie und/oder den Displaykörper einen Winkel von 0° aufweist. Insbesondere bei einer solchen Betrachtung ist das zweite Motiv besonders gut erkennbar und/oder das erste Motiv optisch verborgen, insbesondere durch das zweite Motiv optisch verborgen, und/oder das dynamisch ansteuerbare Display im ausgeschalteten Zustand optisch verborgen. Die Dekorfolie und/oder der Displaykörper weisen hiermit insbesondere in Anwendungsgebieten mit einem wesentlichen Anteil derartiger Betrachtungseigenschaften vorteilhafte Eigenschaften auf.

Es ist möglich, dass die weitere Dekorlage ein zweites Dekor aufweist, wobei das zweite Dekor, vorzugsweise zumindest in dem Displaybereich, ein statisches Motiv oder einen zweiten Teilbereich des ersten Motivs bereitstellt. Vorzugsweise bildet die weitere Dekorlage eine einem Betrachter im Gebrauch des Displaykörpers zugewandte Seite und/oder Vorderseite des Displaykörpers. Mittels des zweiten Dekors ist also bevorzugt ein statisches Motiv oder ein zweiter Teilbereich des ersten Motivs in einen sichtbaren Zustand versetzbar. Es ist somit bevorzugt möglich, dass das zweite Dekor mit dem ersten Dekor das erste Motiv oder einen dritten Teilbereich eines statischen Motivs, insbesondere des ersten Motivs, bereitstellt. Insbesondere bilden die ein oder mehreren Transparenzbereiche, bevorzugt mit dem dynamisch ansteuerbaren Display im ausgeschalteten Zustand, mit dem dritten Teilbereich ein statisches Motiv. Die erste und/oder weitere Dekorlage stellen insbesondere jeweils oder gemeinsam das erste Motiv oder einen weiteren Teilbereich des ersten Motivs bereit.

Weiter ist es möglich, dass die weitere Dekorlage eine weitere Trägerlage aufweist, welche bevorzugt auf der der ersten Dekorlage abgewandten Seite der weiteren Dekorlage angeordnet ist oder wird. Hiermit ist es beispielsweise möglich, dass die weitere Trägerlage eine Schutzfunktion übernimmt, insbesondere beim Transport des Dekorfolienkörpers und/oder des Displaykörpers. Hierbei ist es möglich, dass die weitere Dekorlage ein oder mehrere weitere Schichten, insbesondere in der Form von Dekorschichten, aufweist, wobei die weitere Trägerlage bevorzugt ablösbar von den ein oder mehreren weiteren Schichten der weiteren Dekorlage ist. Es ist zweckmäßig, dass die weitere Dekorlage zwischen der weiteren Trägerlage und den ein oder mehreren Schichten der weiteren Dekorlage eine Ablöseschicht aufweist.

Weiter ist es möglich, dass die weitere Dekorlage ähnlich wie die erste Dekorlage ausgebildet ist. Es ist also möglich, dass der Dekorfolienkörper eine mehrlagige Folie ist. Insbesondere weist die weitere Dekorlage bevorzugt zumindest eine Lage aus einem farblosen oder farbigen transparenten oder transluzenten thermoplastischen Material auf, insbesondere aus ABS, ABS/PC, PC/ABS, PC, PP oder PMMA. Diese dient bevorzugt als Trägerlage für die ein oder mehreren weiteren Schichten, insbesondere in der Form von ein oder mehreren Dekorschichten, der weiteren Dekorlage.

Bevorzugt umfassen die ein oder mehreren weiteren Schichten, insbesondere in der Form von ein oder mehreren Dekorschichten, der weiteren Dekorlage wenigstens eine hochglänzende oder matte und/oder mit einer taktilen Struktur versehene Schutzlackschicht. Die Schutzlackschicht ist bevorzugt farblos oder farbig transluzent oder transparent oder weist auch opake Bereiche auf. Es ist auch möglich, dass die Schutzlackschicht insbesondere bereichsweise unterschiedlich ausgebildet ist oder wird und hochglänzende und matte Flächenbereiche und Flächenbereiche mit einer taktilen Struktur gleichzeitig aufweist oder nur zwei unterschiedliche der vorgenannten Flächenbereiche aufweist. So ist es beispielsweise möglich, dass ein äußerer Randbereich der Schutzlackschicht anders als ein von dem Randbereich umgebenen Bereich ausgebildet ist oder wird. Beispielsweise ist es möglich, dass der äußere Randbereich der Schutzlackschicht matt und/oder taktil ausgebildet ist oder wird und vorzugsweise der von dem Randbereich umgebene Bereich insbesondere hochglänzend ausgebildet ist oder wird.

Insbesondere ist die weitere Dekorlage zumindest bereichsweise oder vollflächig semitransparent und/oder weist zumindest bereichsweise oder vollflächig eine Transparenz im für das menschliche Auge sichtbaren Wellenlängenbereich in einem Bereich von 5 % bis 100 %, insbesondere in einem Bereich von 20 % bis 80 %, auf. Weiter ist es möglich, dass die weitere Dekorlage und/oder der Dekorfolienkörper, insbesondere bei einer Betrachtung von der Seite der weiteren Dekorlage, einen Reflexionsgrad im Displaybereich und außerhalb der ein oder mehreren Transparenzbereiche in einem Bereich von 1 % bis 99 % und/oder in den ein oder mehreren Transparenzbereichen in einem Bereich von 1 % bis 99 % aufweist. Mittels einer derartigen Transparenz und/oder Reflexion ist es bevorzugt möglich, dass die weitere Dekorlage insbesondere neben der Schutzfunktion auch dazu beiträgt, dass das dynamisch ansteuerbare Display und/oder das erste Motiv oder zumindest ein Teilbereich, insbesondere der erste Teilbereich, des ersten Motivs im ausgeschalteten Zustand des dynamisch ansteuerbaren Displays optisch verborgen werden kann. Vorzugsweise in einer Kombination mit der Anordnung der Transparenzbereiche, und/oder einem bevorzugt leuchtstarken dynamisch ansteuerbaren Display ergibt sich insbesondere der weitere Vorteil, dass ein Betrachter kein Display hinter der Dekorfolie erwarten würde, das zweite Motiv im eingeschalteten Zustand des dynamisch ansteuerbaren Displays jedoch überraschend gut erkennbar ist. Vorzugsweise gewährleistet die weitere Dekorlage außerdem, dass für die Trägerlage, die erste Dekorlage sowie das dynamisch ansteuerbare Display empfindlichere Materialen verwendet werden können, deren Haltbarkeit und/oder Einsatzmöglichkeit verbessert wird.

Weiter hat es sich als vorteilhaft erwiesen, dass die Dekorfolie und/oder die erste Dekorlage im Displaybereich und außerhalb der ein oder mehreren Transparenzbereiche eine Transparenz im für das menschliche Auge sichtbaren Wellenlängenbereich in einem Bereich von 10 % bis 75 %, insbesondere in einem Bereich von 35 % bis 65 %, aufweist und/oder innerhalb der ein oder mehreren Transparenzbereiche eine Transparenz im für das menschliche Auge sichtbaren Wellenlängenbereich in einem Bereich von 10 % bis 75 %, insbesondere in einem Bereich von 35 % bis 65 %, aufweist.

Es ist weiter möglich, dass die erste Dekorlage und/oder die Dekorfolie in den ein oder mehreren Transparenzbereichen eine Transparenz im für das menschliche Auge sichtbaren Wellenlängenbereich aufweist, welche sich um mindestens 5%, vorzugsweise mindestens 10 % bis 75 %, von der Transparenz im für das menschliche Auge sichtbaren Wellenlängenbereich im Displaybereich außerhalb der ein oder mehreren Transparenzbereiche unterscheidet. Insbesondere weist die erste Dekorlage und/oder die Dekorfolie vor dem Erzeugen der ein oder mehreren Transparenzbereiche, vorzugsweise in den Bereichen mit den zu erzeugenden ein oder mehreren Transparenzbereichen, eine Transparenz im für das menschliche Auge sichtbaren Wellenlängenbereich von weniger als 50%, vorzugsweise von weniger als 20%, bevorzugt von weniger als 5% auf. Weiter ist es möglich, dass die erste Dekorlage und/oder die Dekorfolie nach dem Erzeugen der ein oder mehreren Transparenzbereiche in den ein oder mehreren Transparenzbereichen eine Transparenz im für das menschliche Auge sichtbaren Wellenlängenbereich von mehr als 50 %, insbesondere von mehr als 75 %, aufweist.

Weiter ist es bevorzugt möglich, dass die Dekorfolie und/oder die erste Dekorlage im Displaybereich und außerhalb der ein oder mehreren Transparenzbereiche einen Reflexionsgrad im Bereich von 5 % bis 90 % aufweist und/oder innerhalb der ein oder mehreren Transparenzbereiche einen Reflexionsgrad im Bereich von 20 % bis 80 % aufweist.

Weiter ist es denkbar, dass die Dekorfolie und/oder die erste Dekorlage ein Verhältnis der Transparenz im für das menschliche Auge sichtbaren Wellenlängenbereich im Displaybereich außerhalb der ein oder mehreren Transparenzbereiche zur Transparenz im für das menschliche Auge sichtbaren Wellenlängenbereich der ein oder mehreren Transparenzbereiche in einem Bereich von 5 % bis 90 % aufweist. Es ist auch denkbar, dass die Dekorfolie, insbesondere bei einer Betrachtung auf eine der Trägerlage abgewandte Seite der Dekorfolie, und/oder die erste Dekorlage ein Verhältnis des Reflexionsgrads im Displaybereich außerhalb der ein oder mehreren Transparenzbereiche zum Reflexionsgrad der ein oder mehreren Transparenzbereiche in einem Bereich von 20 % bis 80 % aufweist.

Es ist auch möglich, dass im ausgeschalteten Zustand des dynamisch ansteuerbaren Displays bei einer Betrachtung des Displaykörpers von der Seite der Dekorfolie das Verhältnis des Reflexionsgrads im Displaybereich außerhalb der ein oder mehreren Transparenzbereiche zum Reflexionsgrad in den ein oder mehreren Transparenzbereichen in einem Bereich von 5 % bis 90 %, insbesondere in einem Bereich von 40 % bis 70 %, liegt.

Weiter ist es möglich, dass im ausgeschalteten Zustand des dynamisch ansteuerbaren Displays bei einer Betrachtung des Displaykörpers von der Seite der Dekorfolie der Displaykörper im Displaybereich und außerhalb der ein oder mehreren Transparenzbereiche einen Reflexionsgrad im Bereich von 5 % bis 90 % aufweist und/oder innerhalb der ein oder mehreren Transparenzbereiche einen Reflexionsgrad im Bereich von 20 % bis 80 % aufweist.

Derartige Reflexions- und Transmissionsgrade tragen insbesondere dazu bei, dass das dynamisch ansteuerbare Display im ausgeschalteten Zustand besonders schwer erkennbar ist und im eingeschalteten Zustand des Displays das zweite Motiv besonders gut erkennbar ist sowie vorzugsweise das erste Motiv besonders gut optisch verborgen wird. Weiter wird insbesondere ermöglicht, dass das dynamisch ansteuerbare Display optisch besser verborgen wird.

Bevorzugt weist die erste Dekorlage Farben mit Wellenlängen im Bereich von 380 nm bis 550 nm auf und/oder weist Farben und/oder optische Effekte auf, welche einzeln oder in Kombination ausgewählt werden aus: Holz-Naturtöne, metallisch-silbrige Töne, Töne von Gold über Rotgold bis Kupferfarben, insbesondere in matt bis hochglänzend, bevorzugt mit und/oder ohne Bürstung. Die weitere Dekorlage weist insbesondere Farben mit Wellenlängen im Bereich von 380 nm bis 550 nm und/oder Farben und/oder optische Effekte auf, welche einzeln oder in Kombination ausgewählt werden aus: Holz-Naturtöne, metallisch-silbrige Töne, Töne von Gold über Rotgold bis Kupferfarben.

Derartige Kombinationen von Farben und/oder optischen Effekten verbessern bevorzugt die Möglichkeit, das erste Motiv optisch zu verbergen und/oder insbesondere das zweite Motiv mit einer verbesserten Qualität darzustellen.

Mittels der ein oder mehreren Transparenzbereiche bildet die erste Dekorlage eine bevorzugt einheitliche und insbesondere homogene Lochmaske. Es hat sich insbesondere als vorteilhaft erwiesen, dass die ein oder mehreren Transparenzbereiche, insbesondere bei einer Betrachtung in einer Draufsicht auf die Dekorfolie und/oder auf die erste Dekorlage, in einem Raster angeordnet sind. Unter einem Raster ist insbesondere ein eindimensionales oder zweidimensionales regelmäßiges Muster zu verstehen. Beispielsweise umfasst die erste Dekorlage hierzu eine vorzugsweise strukturierte metallische Schicht und/oder eine partielle Dekorschicht mit Löchern und/oder eine Perforation.

Es ist insbesondere von Vorteil, dass das Raster der ein oder mehreren Transparenzbereiche eine Rasterweite in einem Bereich von 1 mm bis 5 mm, aufweist. Weiter ist es zweckmäßig, dass die ein oder mehreren Transparenzbereiche, insbesondere in einer Draufsicht auf die erste Dekorlage, jeweils eine Kreisfläche bilden und/oder einen Durchmesser im Bereich von 0,25 mm bis 0,75 mm aufweisen. Es ist weiter denkbar, dass die Transparenzbereiche eine Form oder eine Kombination verschiedener Formen aufweisen, beispielsweise ausgewählt aus: Kreis, Ellipse, Dreieck, Viereck, Vieleck, unregelmäßiges Vieleck, Raute, Kreuz. Die ein oder mehreren Transparenzbereiche weisen, insbesondere in einer Draufsicht auf die erste Dekorlage, jeweils eine Fläche in einem Bereich von 0,04 mm² bis 0,5 mm², bevorzugt in einem Bereich von 0,04908 mm² bis 0,44179 mm², auf und/oder bedecken einen Anteil in einem Bereich von 0,5 % bis 3 % der Gesamtfläche des Displaybereichs. Es ist möglich, dass der Displaybereich eine Fläche in einem Bereich von 0,1 m² bis 1,0 m² aufweist.

Weiter hat es sich als vorteilhaft erwiesen, dass die ein oder mehreren Transparenzbereiche entlang zueinander parallel angeordneter Reihen angeordnet sind. Vorzugsweise sind dabei in jeder zweiten Reihe angeordnete Transparenzbereiche in Richtung der Reihe zu Transparenzbereichen der jeweils benachbarten Reihen um die Hälfte der Rasterweite versetzt angeordnet.

Bevorzugt ist also in einem Raster mit Transparenzbereichen in mehreren vertikal untereinander angeordneten parallelen horizontalen Reihen vorzugsweise jeder Transparenzbereich einer in vertikaler Richtung gezählten zweiten Reihe in horizontaler Richtung um die Hälfte des horizontalen Abstands zweier direkt benachbarter Transparenzbereiche versetzt angeordnet. Insbesondere ist der vertikale Abstand zwei direkt benachbarter Reihen hierbei genauso groß wie der horizontale Abstand zweier direkt benachbarter Transparenzbereiche.

Vorteilhafterweise weist das dynamisch ansteuerbare Display eine Leuchtdichte von mindestens 300 cd/m², insbesondere mindestens 500 cd/m² auf. Die Abkürzung "cd" steht bevorzugt für Candela. Angaben hinsichtlich der Helligkeit und/oder Leuchtdichte werden vorzugsweise auch in Nits gemacht. Hierbei gilt insbesondere 1000 Nits = 1000 cd/m².

Weiter ist es zweckmäßig, dass das dynamisch ansteuerbare Display ein Kontrastverhältnis von mindestens 2000:1 und/oder in einem Bereich von 2000:1 bis 10000:1 aufweist. Weiter ist es hierdurch insbesondere möglich das von dem dynamisch ansteuerbaren Display abgestrahlte Licht zum Beispiel mit kontrastierenden Effekten derart an das erste Dekor und/oder zweite Dekor anzupassen, dass das erste Motiv optisch besonders gut verborgen wird.

Insbesondere ist das zweite Motiv im eingeschalteten Zustand des dynamisch ansteuerbaren Displays besonders gut erkennbar, wenn das Umgebungslicht bevorzugt gering ist, beispielsweise nachts. Insbesondere bei geringem Umgebungslicht, beispielsweise nachts, ist bevorzugt eine minimale Leuchtdichte des dynamisch ansteuerbaren Displays nötig, die vorzugsweise unterhalb der minimalen Leuchtdichte bei stärkerem Umgebungslicht, insbesondere tagsüber, nötig ist. Es ist also möglich, dass im eingeschalteten Zustand des dynamisch ansteuerbaren Displays das dynamisch ansteuerbare Display vorzugsweise eine minimale Leuchtdichte von 300 cd/m² bei geringem Umgebungslicht, insbesondere nachts, und/oder bei einer Beleuchtungsstärke weniger als 1 Ix oder im Bereich von 0,00013 Ix bis 1 Ix aufweist. Es ist weiter möglich, dass im eingeschalteten Zustand des dynamisch ansteuerbaren Displays das dynamisch ansteuerbare Display vorzugsweise eine minimale Leuchtdichte von 400 cd/m² bei stärkerem Umgebungslicht, insbesondere tagsüber, und/oder bei einer Beleuchtungsstärke von mehr als 1 Ix oder im Bereich von 1 Ix bis 130000 Ix aufweist.

Weiter ist es möglich, dass das dynamisch ansteuerbare Display Leuchtelemente aufweist. Weiter ist es möglich, dass die Leuchtelemente in einem Raster angeordnet sind, insbesondere mit einer Rasterweite in einem Bereich von 0,5 mm bis 10 mm, bevorzugt im Bereich von 1 mm bis 10 mm. Insbesondere sind die Leuchtelemente teilweise oder vollständig überlappend mit den ein oder mehreren Transparenzbereichen und/oder in den ein oder mehreren Transparenzbereichen angeordnet. Weiter ist es möglich, dass der Abstand, bevorzugt gemessen von Mittelpunkt zu Mittelpunkt, zweier direkt benachbarter Leuchtelemente ein ganzzahliges Vielfaches der Rasterweite der ein oder mehreren Transparenzbereiche oder die Rasterweite der ein oder mehreren Transparenzbereiche ein ganzzahliges Vielfaches des Abstands zweier direkt benachbarter Leuchtelemente ist.

Es ist weiter denkbar, dass das dynamisch ansteuerbare Display eine Leuchtmatrix, bevorzugt aus Leuchtelementen, aufweist, insbesondere mit Leuchtelementen in der Form von Mini-LEDs und/oder Mikro-LEDs. Es ist auch möglich, dass das dynamisch ansteuerbare Display Leuchtelemente in der Form von Pixeln aufweist. Die Leuchtelemente weisen bevorzugt eine Breite im Bereich von 1,5 mm bis 3 mm und/oder eine Länge im Bereich von 1,5 mm bis 3 mm auf. Vorzugsweise weisen die Leuchtelemente jeweils eine Fläche im Bereich von 2,25 mm² bis 9 mm² auf.

Es ist möglich, dass die Leuchtmatrix mit einer Vielzahl von Leuchtelementen eine äußere Form, insbesondere in der Form einer Rechteckform, als Freiform oder in der Form eines Kreises, einer Ellipse, eines Dreiecks oder eines Vielecks, aufweist. Die äußere Form ist insbesondere eine Umrissform um die äußeren Leuchtelemente der Leuchtmatrix herum. Zusätzlich oder alternativ ist es möglich, dass die äußere Form der Leuchtmatrix mittels einer zusätzlichen opaken Maskenschicht mit transparentem Durchbruch so abgedeckt ist oder wird, dass die Leuchtmatrix im Ergebnis bevorzugt das Erscheinungsbild der äußeren Form des transparenten Durchbruchs aufweist. Beispielsweise ist es denkbar, dass eine rechteckige Leuchtmatrix mit einer Maske mit dreieckigem transparentem Durchbruch abgedeckt wird oder ist, sodass die Leuchtmatrix im Ergebnis ein dreieckiges Erscheinungsbild aufweist. In anderen Worten ist oder wird die zusätzliche opake Maskenschicht insbesondere in einem Bereich angeordnet, welcher die äußere Form der Leuchtmatrix umfasst, bevorzugt wobei die zusätzliche opake Maskenschicht in diesem Bereich opak ist und innerhalb in einem von diesem Bereich eingeschlossenen Bereich transparent ist.

Es ist auch möglich, dass das dynamisch ansteuerbare Display ein OLED-Display ist und insbesondere die das OLED ausbildenden Schichten auf einem flexiblen Substrat angeordnet sind. Dadurch ist es möglich, dass das Display dreidimensional oder 2,5D-dimensional verformbar ist und/oder verformt ist oder wird.

Das dynamisch ansteuerbare Display weist insbesondere eine Dichte der Leuchtelemente im Bereich von 4000 Leuchtelemente pro m² bis 12000 Leuchtelemente pro m² auf. Insbesondere ist eine Pixel-Periode und/oder ein Pitch des dynamisch ansteuerbaren Displays in einem Bereich von 1,5 mm bis 3 mm denkbar. Vorzugsweise handelt es sich bei dem Display um ein Farbdisplay. Das dynamisch ansteuerbare Display weist vorzugsweise eine Farbtiefe und/oder Graustufen im Bereich von 8 Bit bis 48 Bit auf. Die Bildwiederholfrequenz des dynamisch ansteuerbaren Displays liegt vorzugsweise in einem Bereich von 25 Hz bis 200 Hz, bevorzugt in einem Bereich von 40 Hz bis 100 Hz.

Es ist möglich, dass das dynamisch ansteuerbare Display zumindest ein Displayelement aufweist, bevorzugt mit einer Länge und/oder Breite im Bereich von 100 mm bis 1500 mm. Weiter ist es möglich, dass das zumindest eine Displayelement eine Tiefe im Bereich von 5 mm bis 55 mm aufweist. Die Auflösung des dynamisch ansteuerbaren Displays und/oder des zumindest einen Displayelements liegt vorzugsweise bei mindestens 24 px x 24 px oder in einem Bereich von 12 x 12 px bis 350 x 350 px (px = Pixel). Weiter ist es denkbar, dass das dynamisch ansteuerbare Display mehrere Displayelemente, insbesondere mit den genannten Abmaßen, umfasst. Das zumindest eine Displayelement ist insbesondere eben oder 2D- oder 2,5D- oder 3D-gekrümmt.

Derartige Displayeigenschaften verbessern insbesondere die Qualität des zweiten Motivs sowie dessen Sichtbarkeit im eingeschalteten Zustand des dynamisch ansteuerbaren Displays und/oder tragen dazu bei, dass das erste Dekor und/oder das erste Motiv im eingeschalteten Zustand des Displays besonders gut verborgen wird.

Das dynamisch ansteuerbare Display weist bevorzugt einen Abstand von der ersten Dekorlage und/oder der Trägerlage in einem Bereich von 3 mm bis 30 mm, vorzugsweise in einem Bereich von 5 mm bis 15 mm, auf, wobei der Abstand bevorzugt ein maximaler Abstand ist.

Der ausgeschaltete Zustand und der eingeschaltete Zustand des dynamisch ansteuerbaren Displays ist insbesondere mittels einer elektronischen Steuerkomponente vorzugsweise aktivierbar und deaktivierbar und/oder das dynamisch ansteuerbare Display ist bevorzugt mittels einer elektronischen Steuerkomponente insbesondere dynamisch ansteuerbar.

Insbesondere weist die Steuerkomponente ein Speichermedium auf. Bevorzugt ist in dem Speichermedium, insbesondere mittels eines digitalen Datensatzes, vorzugsweise in einem digitalen Videoformat, die Ansteuerung des dynamisch ansteuerbaren Displays zur Erzeugung eines dynamischen Motivs, insbesondere des zweiten Motivs, definiert. Hierdurch wird insbesondere die Flexibilität der möglichen Motive erhöht. Das digitale Videoformat liegt beispielsweise im Format MPEG, MOV, AVI, WMV, FLV, MKV vor.

Das zweite Motiv, insbesondere das Video, die Animation und/oder der Film, ist bevorzugt auf die Dekorfolie und/oder den Dekorfolienkörper optimiert. Es ist insbesondere möglich, dass der digitale Datensatz Dekordaten über die Dekorfolie und/oder den Dekorfolienkörper berücksichtigt und/oder umfasst, welche insbesondere zur Ansteuerung des dynamisch ansteuerbaren Displays verwendet werden. Die Dekordaten umfassen und/oder berücksichtigen beispielsweise Werte der Transparenz und/oder der Farbe in verschiedenen Bereichen der Dekorfolie und/oder des Dekorfolienkörpers. Hierbei ist es möglich, dass die Dekordaten und/oder die verschiedenen Bereiche Leuchtelementen zugeordnet werden, wodurch insbesondere die zu erzeugende Leuchtdichte und/oder Farbe der Leuchtelemente, insbesondere zur Erzeugung des zweiten Motivs, entsprechend der jeweiligen Dekordaten angepasst wird.

Es ist auch möglich, dass die Steuerkomponente zumindest einen Sensor, insbesondere zumindest einen Helligkeitssensor, Annäherungssensor und/oder Touchsensor umfasst. Es ist beispielsweise möglich, dass mittels des zumindest einen Sensors ein Signal erzeugt und verarbeitet wird, derart, dass die Steuerkomponente das dynamisch ansteuerbare Display einschaltet und insbesondere das dynamisch ansteuerbare Display mittels des digitalen Datensatzes auf dem Speichermedium derart ansteuert, dass das zweite Motiv, vorzugsweise in der Form eines dynamischen Motivs, erzeugt wird und/oder das dynamisch ansteuerbare Display ausgeschaltet wird. Ein derartiger Sensor ermöglicht bevorzugt eine Interaktion mit einem Benutzer oder Betrachter, beispielsweise ist es möglich, dass bevorzugt eine Radarfunktion eine Interaktion auslöst.

Weiter ist es, insbesondere für den Fall, dass die Steuerkomponente einen Touchsensor aufweist, möglich, dass das erste Dekor, das erste Motiv und/oder das zweite Motiv ein oder mehrere Muster, bevorzugt Symbole, aufweisen oder beinhalten, vorzugsweise welche auf entsprechende Touchfunktionen hinweisen. Insbesondere ist es möglich, im zweiten Motiv ein Symbol vorzusehen, welches das Stoppen und Weiterablaufen des zweiten Motivs oder andere Steuermöglichkeiten anzeigen und bevorzugt mittels Touchfunktion ermöglichen.

Insbesondere ist oder wird der Touchsensor vollständig oder nur teilweise überlappend mit dem dynamisch ansteuerbaren Display angeordnet oder alternativ nicht mit dem dynamisch ansteuerbaren Display überlappend angeordnet, also vorzugsweise benachbart zu dem dynamisch ansteuerbaren Display angeordnet. Weiter ist es möglich, dass benachbart zu dem dynamisch ansteuerbaren Display ein Steuerbereich vorgesehen ist, in welchem Touchfunktionen vorliegen, die insbesondere zur Steuerung des dynamisch ansteuerbaren Displays und/oder zur Steuerung anderer Funktionen dienen können, beispielsweise für den Fall, dass der Touchsensor vorzugsweise benachbart zum dynamisch ansteuerbaren Display angeordnet ist.

Es ist weiter denkbar, dass das dynamisch ansteuerbare Display in den eingeschalteten Zustand oder den ausgeschalteten Zustand versetzt wird, wenn ein Gegenstand einen bestimmten Abstand zum Displaykörper überschreitet oder unterschreiten und/oder wenn ein Helligkeitswert überschritten oder unterschritten wird. Es ist auch denkbar, dass der Displaykörper das erste Motiv oder das zweite Motiv zeigt, wenn ein Gegenstand einen bestimmten Abstand zum Displaykörper überschreitet oder unterschreiten und/oder wenn ein Helligkeitswert überschritten oder unterschritten wird. Damit ist es insbesondere möglich, dass der Displaykörper bevorzugt zusätzlich zu einer Dekorfunktion und insbesondere einer Schutzfunktion eine interaktive und/oder kommunikative Funktion erfüllt.

Die Trägerlage der Dekorfolie ist zweckmäßigerweise transparent. Vorzugsweise umfasst die Trägerlage ein bevorzugt thermoplastisches Material oder eine Kombination von bevorzugt thermoplastischen Materialien ausgewählt aus: ABS, ABS/PC, PC/ABS, PC, PP oder PMMA. Bevorzugt weist die Trägerlage eine Schichtdicke im Bereich von 0,5 mm bis 30 mm, insbesondere im Bereich von 0,5 mm bis 0,75 mm, auf. Die erste Dekorlage 3 weist bevorzugt eine Schichtdicke in einem Bereich von 0,5 µm bis 10 µm auf. Die weitere Dekorlage 8 weist bevorzugt eine Schichtdicke im Bereich von 0,5 µm bis 30 µm auf.

Eine Dekorlage, insbesondere die erste und/oder weitere Dekorlage, und/oder die Trägerlage ist vorzugsweise ein- oder mehrschichtig.

Die erste Dekorlage wird bevorzugt, insbesondere zur Herstellung des ersten Dekors, zumindest teilweise in einem Druckverfahren, insbesondere in einem Tiefdruckverfahren und/oder Siebdruckverfahren und/oder Inkjetdruckverfahren, hergestellt. Es ist vorzugsweise möglich, dass die erste Dekorlage auf die Trägerlage geprägt und/oder gedruckt wird. Es ist insbesondere auch möglich, dass die Trägerlage direkt mit ein oder mehreren Druckschichten bedruckt wird oder mit ein oder mehreren weiteren Dekorschichten der ersten und/oder weiteren Dekorlage versehen wird.

Insbesondere ist es möglich, dass die erste Dekorlage, vorzugsweise zur Herstellung des ersten Dekors, und/oder die zweite Dekorlage, insbesondere zur Herstellung des zweiten Dekors, bevorzugt jeweils teilflächig und/oder vollflächig, ein oder mehrere Dekorschichten und/oder eine Kombination der folgenden Dekorschichten umfasst:
Ein oder mehrere Farbschichten. Die ein oder mehreren Farbschichten sind insbesondere ein oder mehrere Lackschichten. Diese Lackschichten enthalten vorzugsweise Farbstoffe und/oder Pigmente, insbesondere farbige Pigmente, optisch variable Pigmente, thermochrome Pigmente, lumineszente Farbstoffe und/oder Pigmente, magnetische Pigmente und/oder elektrisch leitfähige Pigmente. Die Lackschichten sind hierbei bevorzugt opak, semitransparent und/oder transparent ausgebildet.

Die ein oder mehreren Lackschichten sind insbesondere ein oder mehrere Druckschichten und/oder werden bevorzugt mittels Drucken aufgebracht, insbesondere mittels Tiefdruck, Hochdruck, Siebdruck, Flexodruck und/oder mittels digitaler Druckverfahren. Es ist auch möglich, dass das Aufbringen mittels weiterer Beschichtungstechniken, wie beispielsweise Schlitzgießen und/oder Sprühen erfolgt. Insbesondere werden die ein oder mehreren Lackschichten partiell und/oder vollflächig aufgebracht.

Ein oder mehrere Schichten enthaltend ein Flüssigkristallmaterial. Diese Flüssigkristallmaterialen werden vorzugsweise an einer jeweiligen Orientierungsschicht ausgerichtet. Hierbei ist es auch möglich, dass das Flüssigkristallmaterial der jeweiligen Schicht Bereiche aufweist, in denen das Flüssigkristallmaterial unterschiedlich orientiert ist und damit unterschiedliche optische Eigenschaften aufweist. Beispielsweise eine unterschiedliche Polarisation und/oder einen unterschiedlichen optisch variablen Farbwechseleffekt. Als Flüssigkristallmaterial wird insbesondere ein cholesterisches oder nematisches Flüssigkristallmaterial eingesetzt.

Ein oder mehrere Schichten enthaltend ein Dünnfilmsystem zur Generierung von blickwinkelabhängigen Farbverschiebungseffekten. Ein derartiges Dünnfilmsystem zeichnet sich insbesondere dadurch aus, dass dieses Dünnfilmsystem ein oder mehrere Abstandsschichten aufweist, welche die λ/4- oder λ/2-Bedingung insbesondere für eine Wellenlänge λ im sichtbaren Wellenlängenbereich erfüllen. An den Grenzflächen dieser Abstandsschicht wird das einfallende Licht reflektiert / gebrochen, wodurch ein entsprechender Farbwechseleffekt durch Interferenz generiert wird. Vorzugsweise weist ein derartiges Dünnfilmsystem eine Absorberschicht, insbesondere eine semitransparente Absorberschicht, bevorzugt aus einem metallischen Material, eine dielektrische Abstandsschicht und bevorzugt eine Reflexionsschicht, insbesondere eine opake oder semitransparente metallische Schicht, auf. Ein Dünnfilmschichtsystem kann im Weiteren vorzugsweise auch von einer Abfolge von hoch- und niedrigbrechenden dielektrischen Schichten gebildet sein, von denen ein oder mehrere, vorzugsweise zwei oder mehr, die oben angeführte λ/4- oder λ/2-Bedingung erfüllen. Hochbrechende Schichten sind insbesondere Schichten mit einem Brechungsindex von mehr als 1,5. Niedrigbrechende Schichten sind insbesondere Schichten mit einem Brechungsindex von weniger als 1,5.

Ein oder mehrere metallische Schichten. Die ein oder mehreren metallischen Schichten weisen vorzugsweise zwei oder mehr Schichten aus unterschiedlichen Metallen auf. Hierzu werden vorzugsweise Metalle oder Metalllegierungen verwendet, welche für den menschlichen Betrachter über ein unterschiedliches optisches Erscheinungsbild verfügen, beispielsweise aus Al, Cu, Au, Ag, Cr, In und/oder Sn. Die metallischen Schichten können hierbei opak, semitransparent und/oder transparent ausgebildet sein. Es ist denkbar, dass eine metallische Schicht beispielsweise gebürstet oder hochglänzend ist.

Ein oder mehrere Volumenhologrammschichten. Eine Volumenhologrammschicht besteht hierbei vorzugsweise aus einem fotosensitiven Material, welches in einem holografischen Belichtungsprozess mit einem Interferenzmuster belichtet ist, bei dem zumindest ein Objektstrahl und zumindest ein Referenzstrahl überlagert werden.

Vorzugsweise wird als Hologramm-Master hierbei ein Master eingesetzt, welcher ein mikrostrukturiertes, insbesondere ein diffraktives und/oder refraktives, Oberflächenrelief aufweist. Bei dem in die Volumenhologrammschicht eingeschriebenen Volumenhologramm kann es sich hierbei um ein Reflexionshologramm oder um ein Transmissionshologramm handeln. Weiter ist es möglich, dass die Volumenhologrammschicht nach Einbelichten des Volumenhologramms noch nachbehandelt wird. Beispielsweise ist es möglich, dass in Teilbereichen oder vollflächig durch eine derartige Nachbehandlung, beispielsweise das Aufbringen entsprechender Stoffe oder durch Strahlung, der Abstand zwischen den Bragg-Ebenen des Volumenhologramms verändert wird, und somit entsprechend die Farbe des Volumenhologramms vollflächig oder teilflächig verändert wird.

Ein oder mehrere Schichten aufweisend eine optisch aktive Oberflächenstruktur oder ein optisch aktives Oberflächenrelief. Diese Schichten bestehen vorzugsweise aus einer Replizierschicht, insbesondere einer Schicht aus einem thermoplastischen und/oder UV-härtbaren Lack. In diese Schicht wird vorzugsweise mittels eines Prägewerkzeugs die jeweilige Oberflächenstruktur eingebracht, insbesondere mittels thermischer Replikation und/oder UV-Replikation.

Bei der Oberflächenstruktur bzw. dem Oberflächenrelief handelt es sich vorzugsweise um eine diffraktive Oberflächenstruktur. Eine derartige Oberflächenstruktur kann einzeln oder in Kombination folgende Elemente aufweisen: computergeneriertes Hologramm, Beugungsstruktur erster oder höherer Ordnung, insbesondere bestehend aus sinusförmigen oder blazeartigen diffraktiven Gittern oder Fresnelartigen Mikrostrukturen, und/oder Beugungsstruktur nullter Ordnung.

Bei der Oberflächenstruktur kann es sich um eine holografische Oberflächenstruktur handeln, welche insbesondere von einem in einem holografischen Prozess hergestellten Oberflächenrelief gebildet wird.

Bei der Oberflächenstruktur handelt es sich vorzugsweise um eine Mattstruktur, insbesondere ein anisotrope oder isotrope Mattstruktur. Derartige Mattstrukturen können hierbei Bereiche aufweisen, in denen sich die Strukturparameter der Mattstruktur voneinander unterscheiden und welche so das Licht in unterschiedlicher Weise streuen, beispielsweise in unterschiedliche Vorzugsrichtungen streuen oder mit einem unterschiedlichen Streuwinkel streuen.

Bei der Oberflächenstruktur handelt es sich vorzugsweise um eine Makrostruktur. Derartige Makrostrukturen weisen vorzugsweise im Wesentlichen refraktiv wirkende Strukturelemente auf. Diese Makrostrukturen weisen vorzugsweise eine Mikrolinsenstruktur, eine Mikroprismenstruktur und/oder eine Mikrospiegelstruktur, deren jeweilige Strukturelemente von Linsen, im Wesentlichen refraktiv wirkenden Prismen und/oder Mikrospiegeln gebildet werden.

Ein oder mehrere Reflexionsschichten. Diese Reflexionsschichten werden insbesondere von metallischen Schichten gebildet, welche transparent, semitransparent und/oder opak sind. Es ist jedoch auch möglich, dass die Reflexionsschichten von dielektrischen Reflexionsschichten gebildet werden. Hierzu werden vorzugsweise Schichten aus einem transparenten niedrig- oder hochbrechenden Material, wie beispielsweise ZnS oder TiO₂ eingesetzt.

Insbesondere ist es möglich, dass die oben aufgeführten Schichten als Muster angeordnet sind.

Weiter ist es möglich, dass die Dekorfolie zwischen der ersten Dekorlage und der Trägerlage eine Pufferschicht umfasst. Die Pufferschicht ist insbesondere vollflächig transparent und/oder wird oder ist vollflächig auf die Trägerlage der Dekorfolie aufgebracht. Die Pufferschicht ist bevorzugt vollflächig auf die Trägerlage der Dekorfolie aufgebracht. Die Pufferschicht ist bevorzugt als Kleberschicht ausgebildet und/oder umfasst einen Klebstoff. Die Pufferschicht minimiert insbesondere nachteilige Effekte von Toleranzen bei dem Erzeugen der Transparenzbereiche, indem die Pufferschicht in den Transparenzbereichen teilweise entfernt werden kann, insbesondere wobei die Transparenz oder sonstige Materialeigenschaften in diesen Bereichen nur minimal oder nicht negativ beeinflusst werden. Die Pufferschicht dient also insbesondere als eine Schutzschicht für die Trägerlage. Beispielsweise ist es mittels der Pufferschicht auch möglich, eine laserempfindliche Trägerlage zu verwenden, da diese von einem Laser nicht "verletzt" wird. Insbesondere erhöht die Pufferschicht somit bevorzugt die für die Dekorfolie einsetzbaren Materialen. Weiter ist es denkbar, dass eine weitere vollflächig aufgebrachte und/oder vollflächig transparente Schicht, beispielsweise umfassend PC und/oder PMMA, auf der der Trägerlage abgewandten Seite der Pufferschicht angeordnet ist.

Die erste Dekorlage weist, insbesondere zur Ausbildung des ersten Dekors, ein oder mehrere erste Dekorschichten auf, welche bevorzugt aus den oben genannten Dekorschichten ausgewählt sind.

Vorzugsweise ist zumindest eine erste Dekorschicht der ein oder mehreren ersten Dekorschichten eine Farbschicht, insbesondere in der Form einer Hintergrundfarbschicht, welche insbesondere eine Lackschicht umfasst. Es ist denkbar, dass die ein oder mehreren ersten Dekorschichten lediglich die zumindest eine erste Dekorschicht umfassen.

Weiter ist es möglich, dass zumindest eine zweite Dekorschicht der ein oder mehreren ersten Dekorschichten eine opake Farbschicht und/oder eine metallische Schicht ist. Die zumindest eine zweite Dekorschicht der ein oder mehreren ersten Dekorschichten ist bevorzugt auf der der Trägerlage abgewandten Seite der zumindest einen ersten Dekorschicht der ein oder mehreren ersten Dekorschichten angeordnet. Die zumindest eine zweite Dekorschicht der ein oder mehreren ersten Dekorschichten dient bevorzugt als Mindest-Farbauftrag. Auf die Hintergrundfarbschicht werden oder sind insbesondere ein oder mehrere weitere partielle und/oder musterförmige Dekorschichten, vorzugsweise Lackschichten, aufgetragen, beispielsweise als Holzmaserung oder anderweitiges Muster.

Es ist auch möglich, dass die ein oder mehreren ersten Dekorschichten ein oder mehrere der folgenden Schichten, insbesondere in der folgenden Reihenfolge ausgehend von der Trägerlage, umfassen:
- Ein oder mehrere Druckschichten,
- Ein oder mehrere Lackschichten, bevorzugt Farblackschichten, insbesondere umfassend die zumindest eine erste Dekorschicht der ein oder mehreren ersten Dekorschichten.

Weiter ist es möglich, dass die ein oder mehreren ersten Dekorschichten ein oder mehrere der folgenden Schichten, insbesondere in der folgenden Reihenfolge ausgehend von der Trägerlage, umfassen:
- Ein oder mehrere metallische Schichten, welche bevorzugt mittels Bedampfung aufgebracht sind,
- Ein oder mehrere Lackschichten, welche bevorzugt bedampfbar sind.

Weiter ist es möglich, dass die erste Dekorlage ein oder mehrere weitere Dekorschichten auf der der Trägerlage abgewandten Seite der ein oder mehreren ersten Dekorschichten umfasst.

Die erste Dekorlage weist auf ihrer der Trägerlage abgewandten äußeren Seite bevorzugt eine Schutzschicht auf. Insbesondere weist die erste Dekorlage auf ihrer der Trägerlage zugewandten äußeren Seite eine Kleberschicht auf. Eine Kleberschicht umfasst insbesondere ein oder mehrere der folgenden Materialen: Acrylate, ABS, PVC.

Alternativ oder zusätzlich ist es insbesondere auch möglich, dass die Dekorfolie eine weitere Schutzschicht auf einer der ersten Dekorlage gegenüberliegenden Seite der Trägerlage aufweist. Hierbei ist es denkbar, dass auf die Trägerlage auf der der ersten Dekorlage abgewandten Seite der Trägerlage die Schutzschicht, insbesondere als eine transparente Schutzschicht, aufgebracht ist oder wird. Diese Schutzschicht ist oder wird beispielsweise mittels Überflutung, insbesondere PU-Überflutung, Nasslackierung und/oder Folienapplikation aufgebracht, bevorzugt vollflächig aufgebracht. PU ist insbesondere Polyurethan.

Es ist weiter möglich, dass zumindest eine metallische Schicht zumindest bereichsweise in der Form einer Inselschicht aufgebracht ist, vorzugsweise mittels Bedampfung, wobei die metallische Schicht bevorzugt Indium umfasst. Es hat sich insbesondere gezeigt, dass Indium bei der Bedampfung eine Inselschicht bildet und die metallische Schicht dadurch bevorzugt durchlässig für Strahlung, insbesondere für Radarstrahlung, Bluetooth, WLAN, UKW, DAB, DAB+, DVB-T, DVB-T2 und/oder Strahlung weiterer Wellenlängen ist. Hierdurch werden zum Beispiel Einsatzmöglichkeiten von Sensoren sowie deren zuverlässige Erreichbarkeit erhöht. Dies ist beispielsweise bei der Anwendung eines Displaykörpers in Fahrzeugen vorteilhaft, da insbesondere die Voraussetzungen für autonomes Fahren verbessert werden. Es ist zweckmäßig, dass die zumindest eine metallische Schicht zumindest bereichsweise und/oder vollflächig semitransparent und/oder opak ist.

Bevorzugt sind die ein oder mehreren Transparenzbereiche lediglich in dem Displaybereich eingebracht, in welchem auch das dynamisch ansteuerbare Display angeordnet ist oder angebracht wird. Insbesondere sind damit außerhalb des Displaybereichs bevorzugt keine Ausnehmungen, Durchtrennungen, Leerstellen und/oder Löcher in der zumindest einen metallischen Schicht vorhanden. Bevorzugt wird zumindest ein Sensor benachbart zu dem Displaybereich, und insbesondere nicht im Displaybereich angeordnet, und als zumindest eine metallische Schicht eine Inselschicht verwendet, wodurch insbesondere die Durchlässigkeit für Strahlung außerhalb des Displaybereichs gewährleistet und damit die Erreichbarkeit des Sensors verbessert wird.

Weiter ist es möglich, dass die erste Dekorlage in einem Spritzgussvorgang mit der Trägerlage verbunden wird, insbesondere wobei die erste Dekorlage mittels einer Transferfolie, bevorzugt einer IMD-Transferfolie, bereitgestellt wird. Weiter ist es denkbar, dass zwischen die erste Dekorlage und die weitere Dekorlage ein Abstandskörper mittels einer Spritzgussmasse eingespritzt wird und/oder die erste Dekorlage gemeinsam mit der weiteren Dekorlage von einer Spritzgussmasse hinterspritzt wird, insbesondere wobei sich die erste Dekorlage und die weitere Dekorlage verbinden.

Weiter ist es möglich, dass die weitere Dekorlage vollflächig auf die erste Dekorlage aufgebracht ist oder wird und/oder die erste Dekorlage überdeckt und/oder die ein oder mehreren Transparenzbereiche überdeckt.

Insbesondere ist zwischen der weiteren Dekorlage und der ersten Dekorlage und/oder der Trägerlage ein Abstandskörper angeordnet. Der Abstandskörper weist bevorzugt eine Dicke im Bereich von 1 mm bis 20 mm, bevorzugt in einem Bereich von 4 mm bis 20 mm, auf. Insbesondere weist der Abstandskörper bevorzugt eine Transparenz im Bereich von 15 % bis 80 % auf. Weiter ist es möglich, dass der Abstandskörper eine Spritzgussmasse umfasst oder daraus besteht. Es ist also möglich, dass der Dekorfolienkörper ein Kunststoffkörper mit der ersten und/oder der weiteren Dekorlage ist. Es ist auch denkbar, dass die erste Dekorlage, die weitere Dekorlage, das dynamisch ansteuerbare Display und/oder die Trägerlage in einem Spritzgussprozess verbunden werden oder sind.

Zur Herstellung des Dekorfolienkörpers ist insbesondere ein Verfahren mit den folgenden Schritten denkbar, insbesondere in der angegebenen Reihenfolge:
- Bereitstellen der Dekorfolie mit der ersten Dekorlage,
- Erzeugen der ein oder mehreren Transparenzbereiche in der Dekorfolie und/oder der ersten Dekorlage,
- Bereitstellen einer weiteren Dekorfolie mit der weiteren Dekorlage;
- Einlegen der ersten Dekorlage und der weiteren Dekorlage in eine Spritzgussform mit einer ersten und zweiten Formhälfte, die gemeinsam eine Kavität zum Abformen des Dekorfolienkörpers ausbilden, wobei die Dekorfolie an einer ersten Wandung der Kavität und die weitere Dekorfolie an einer zweiten, der ersten Wandung gegenüber liegenden Wandung der Kavität angebracht wird;
- Hinterspritzen der Dekorfolie und der weiteren Dekorfolie mit einer Spritzgussmasse, so dass die Dekorfolie eine erste Oberfläche und die weitere Dekorfolie eine zweite, der ersten Oberfläche gegenüberliegende Oberfläche des Dekorfolienkörpers ausbildet.

In einem weiteren Schritt wird bevorzugt das dynamisch ansteuerbare Display mit dem Dekorfolienkörper verbunden. Es ist auch denkbar, dass das dynamisch ansteuerbare Display zumindest bereichsweise die zweite Wandung darstellt und beim Hinterspritzen mit dem Dekorfolienkörper, insbesondere mit der zweiten Oberfläche des Dekorfolienkörpers, verbunden wird.

Weiter ist es möglich, dass die erste und/oder weitere Dekorlage vor dem Einlegen in die Spritzgussform vorzugsweise tiefgezogen wird. Dadurch können sogenannte Inserts erzeugt werden, die vor dem Hinterspritzen insbesondere vergleichsweise so stark dreidimensional verformt werden können, wie es während dem Hinterspritzen oftmals nicht möglich ist.

Hierbei werden beispielsweise übliche Tiefziehverfahren angewendet. Es ist möglich, dass die erste und/oder weitere Dekorlage als Bogenware bereitgestellt und in ein Tiefziehwerkzeug, welches die gewünschte Endkontur aufweist, eingelegt wird. Durch die Applikation von Wärme, bevorzugt einer Temperatur von 80°C bis 200°C, wird die erste und/oder weitere Dekorlage vorzugsweise verformbar gemacht. Insbesondere wird die erste/und oder weitere Dekorlage anschließend durch Applikation von Vakuum und/oder durch Applikation eines Formstempels und/oder Luftüberdruck an die Form des Tiefziehwerkzeuges angepasst und damit bevorzugt in die gewünschte Endkontur gebracht. Beim Abkühlen härtet das Material der ersten und/oder zweiten Dekorlage dann vorzugsweise wieder aus, so dass diese bevorzugt die Endkontur beibehält.

Vorzugsweise wird zum Ausbilden der taktilen Struktur beim Hinterspritzen ein insbesondere taktiles Oberflächenrelief in die von der Spritzgussmasse abgewandte Oberfläche der weiteren Dekorlage abgeformt, insbesondere aufgrund einer Musterschicht, die zwischen der Wandung der Kavität und einer Trägerfolie, der weiteren Trägerlage oder der weiteren Dekorlage angeordnet ist.

Die taktile Struktur bildet sich also vorzugsweise während des Spritzgießens, wenn die weitere Dekorlage aufgrund der Hitze und des Drucks der eingespritzten Spritzgussmasse plastisch verformbar ist. Die Musterschicht ist oder wird bevorzugt direkt von der Wandung der Kavität gebildet oder vorzugsweise durch einen separaten Einleger, insbesondere durch die Trägerfolie, die weitere Dekorlage und/oder weitere Trägerlage der weiteren Dekorlage selbst, bereitgestellt.

Es ist insbesondere auch möglich, dass das dynamisch ansteuerbare Display an die erste Dekorlage mittels mechanischer Befestigung, beispielsweise mittels Clips und/oder Schrauben und/oder mittels Hinterspritzen und/oder Umspritzen befestigt ist oder wird. Weiter ist es denkbar, dass das dynamisch ansteuerbare Display 7 an die Trägerlage 2 mittels mechanischer Befestigung, beispielsweise mittels Clips und/oder Schrauben und/oder mittels Hinterspritzen und/oder Umspritzen befestigt ist.

Im Folgenden wird die Erfindung anhand von mehreren Ausführungsbeispielen unter Zuhilfenahme der beiliegenden Zeichnungen beispielhaft erläutert. Dabei zeigen:
- Fig. 1a bis 1d: Verfahren zur Herstellung einer Dekorfolie,
- Fig. 2: Verfahren zur Herstellung eines Displaykörpers,
- Fig. 3: eine Dekorfolie,

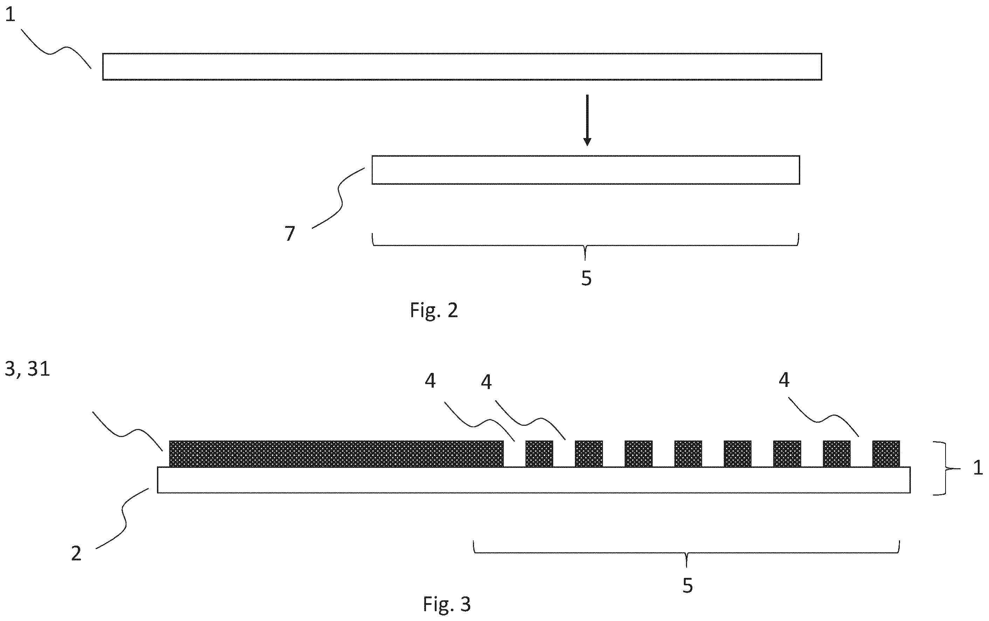

- Fig. 3 bis 8: Dekorfolien,

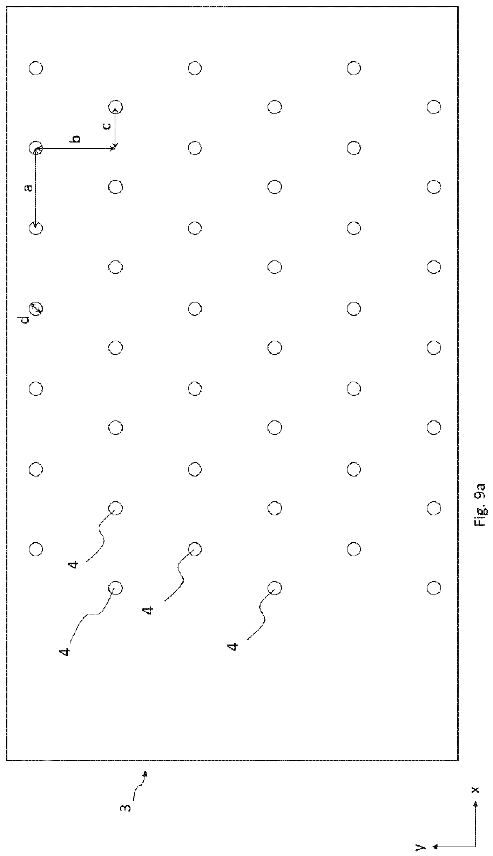

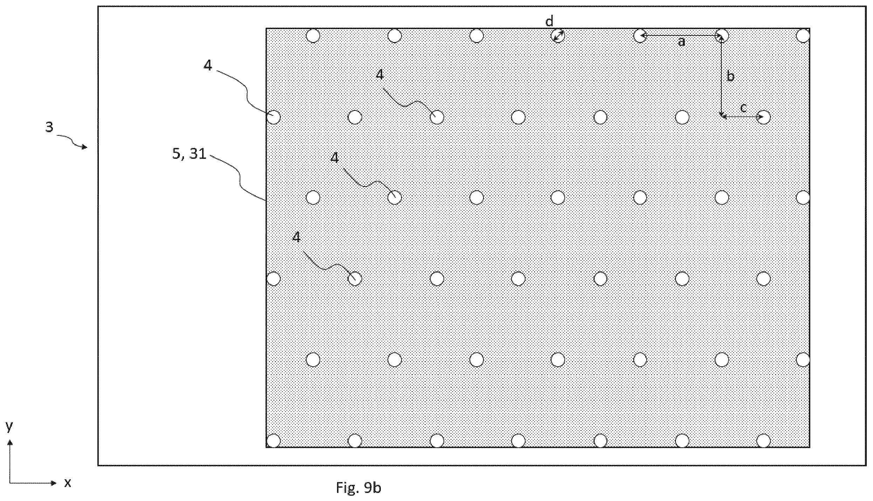

- Fig. 9a und 9b: Dekorlagen,

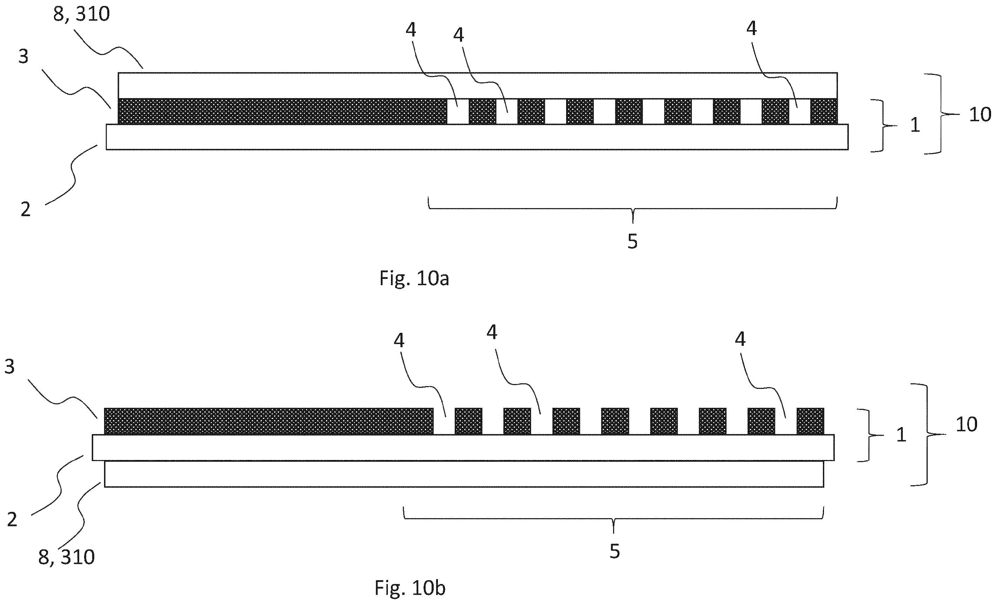

- Fig. 10a bis 10c: Dekorfolienkörper,

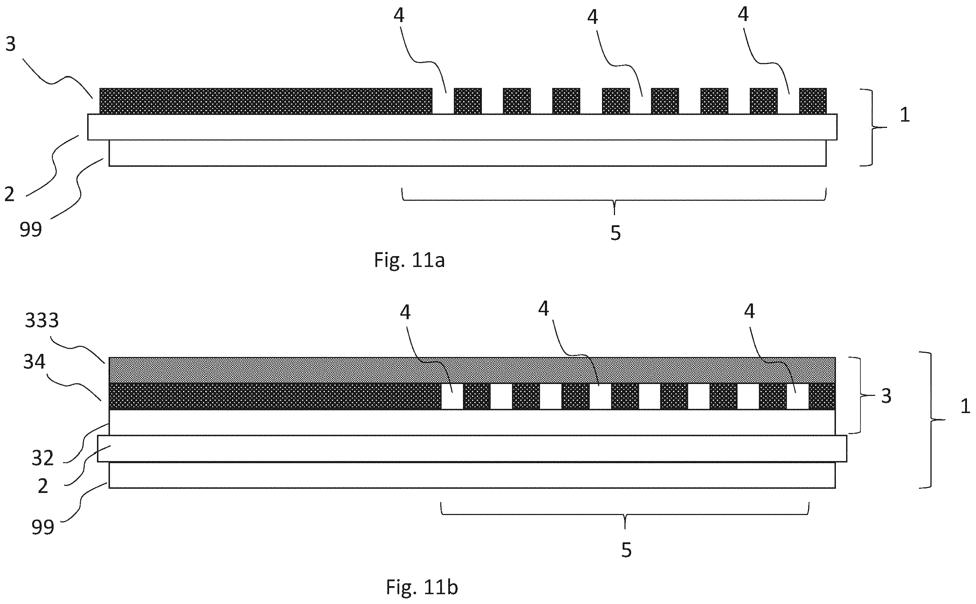

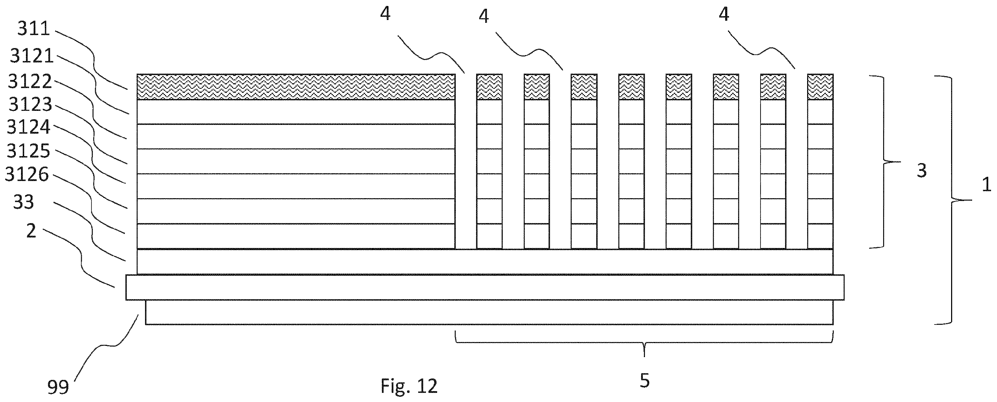

- Fig. 11a, 11b, 12: Dekorfolien,

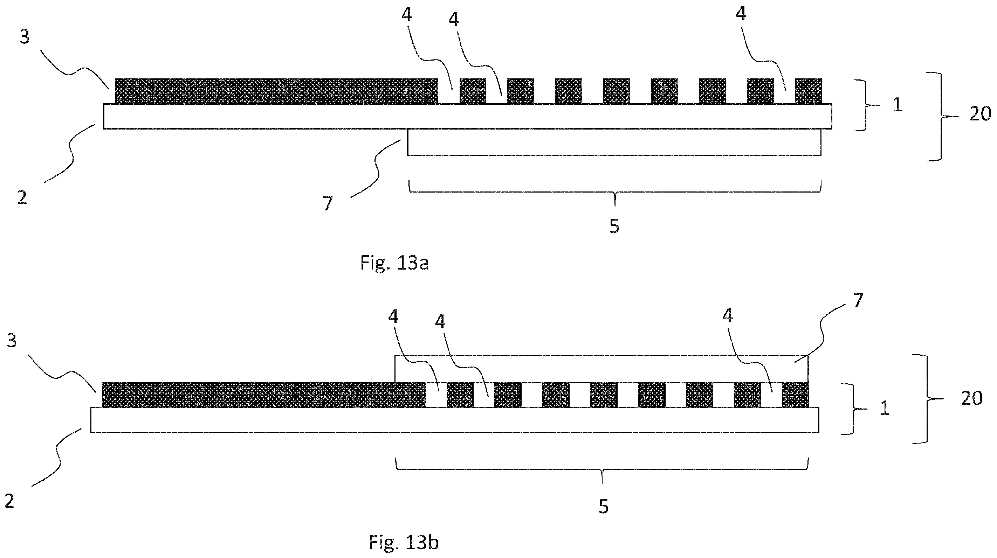

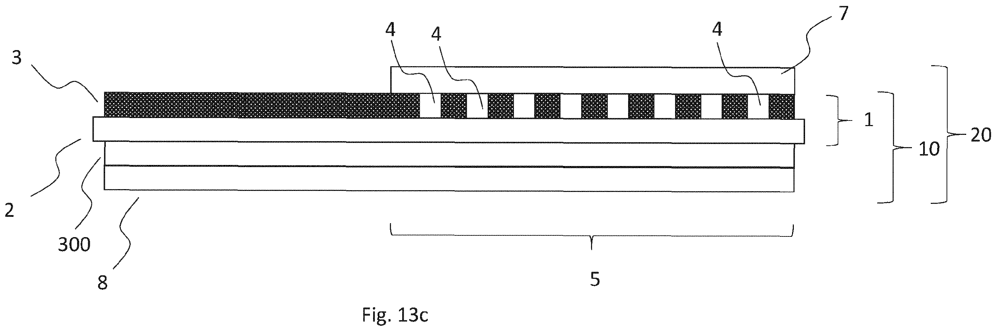

- Fig. 13a,13b und 13c: Displaykörper,

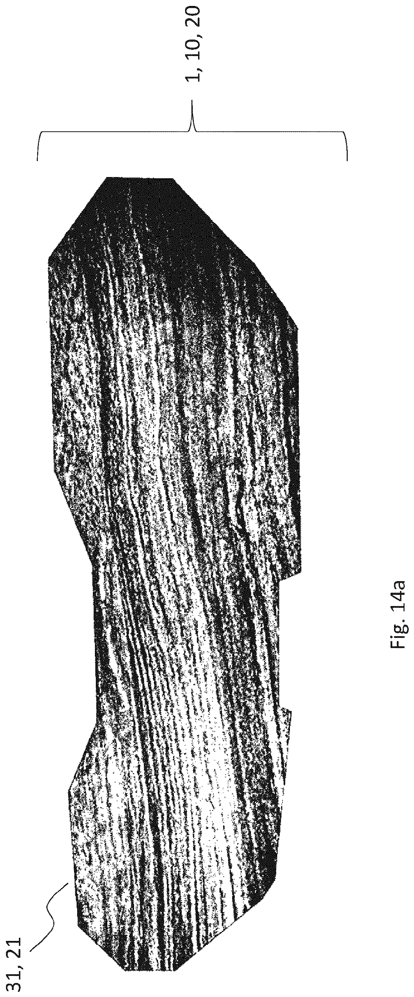

- Fig. 14a: einen Displaykörper, Dekorfolienkörper oder eine Dekorfolie,

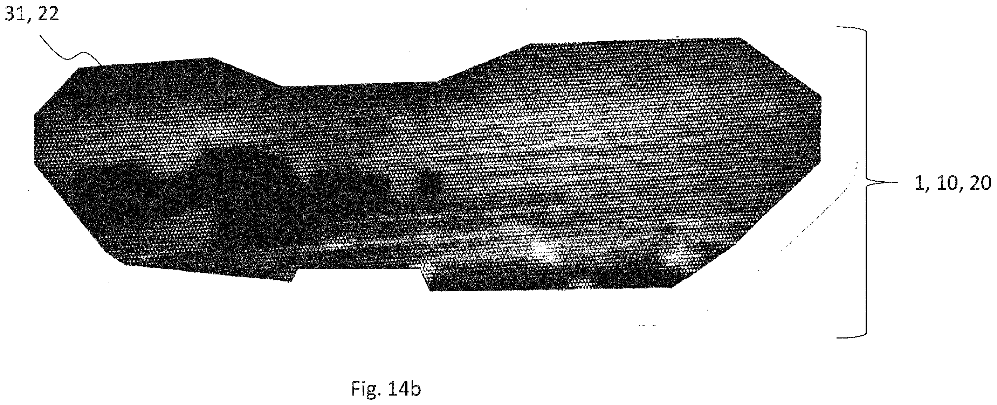

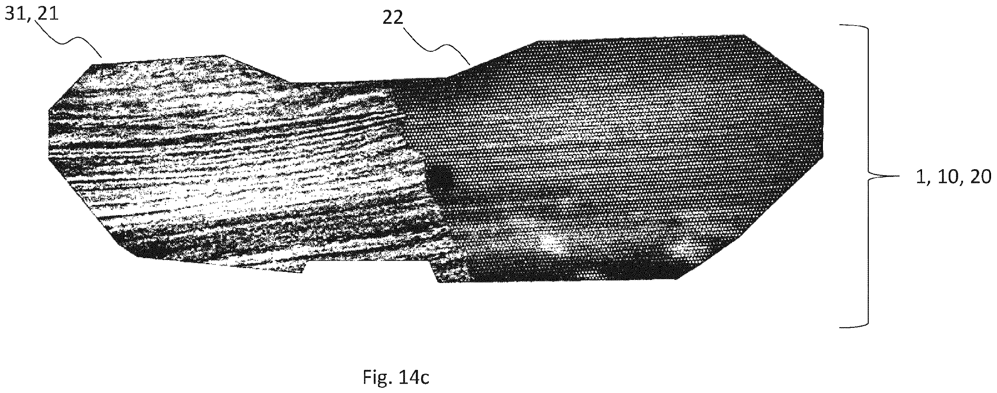

- Fig. 14b und 14c: Displaykörper,

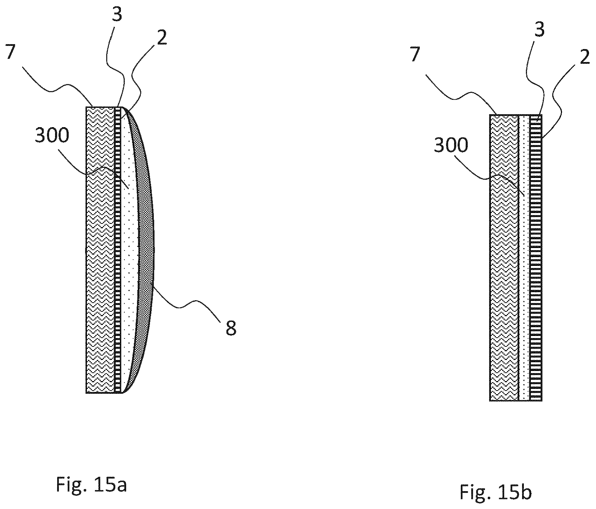

- Fig. 15a und 15b: Displaykörper.

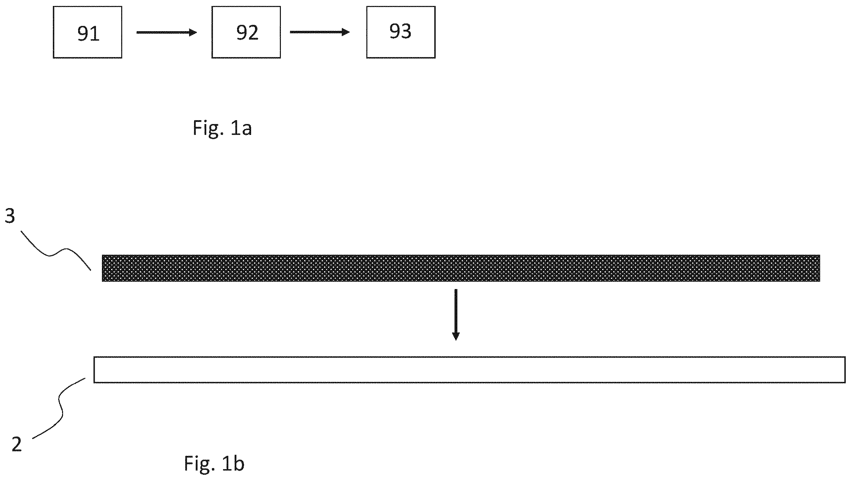

Fig. 1a zeigt schematisch ein Verfahren zum Herstellen einer Dekorfolie zum Aufbringen auf ein dynamisch ansteuerbares Display. Ein derartiges Verfahren umfasst insbesondere die folgenden Schritte, vorzugsweise in der angegebenen Reihenfolge:
- Bereitstellen 91 einer Trägerlage 2.
- Aufbringen 92 einer ersten Dekorlage 3 auf die Trägerlage 2, wobei die erste Dekorlage 3 ein erstes Dekor 8 in einem Displaybereich 5 aufweist,
- Erzeugen 93 von ein oder mehreren Transparenzbereichen 4 in dem Displaybereich 5, wobei die Dekorfolie 1 in den ein oder mehreren Transparenzbereichen 4 für von dem dynamisch ansteuerbaren Display 7 abgestrahltes Licht durchlässig ist.

Fig. 1b zeigt schematisch ein Beispiel für das Bereitstellen 91 einer Trägerlage 2 und das Aufbringen 92 der ersten Dekorlage 3 auf die Trägerlage 2. Beispielsweise ist es möglich, dass die erste Dekorlage 3 als Laminierfolie oder Transferlage einer Transferfolie auf die Trägerlage 2 aufgebracht wird. Hierbei ist es möglich, dass zur Herstellung der ersten Dekorlage 3 ein oder mehrere Druckschichten auf die Trägerlage 2 oder eine Trägerlage einer Transferfolie gedruckt werden, insbesondere wobei die ein oder mehreren Druckschichten anschließend nacheinander oder gemeinsam auf die Trägerlage 2 aufgebracht, insbesondere geprägt, werden.

Vorzugsweise wird die erste Dekorlage 3, insbesondere zur Ausbildung des ersten Dekors 31, in einem Druckverfahren, bevorzugt in einem Tiefdruckverfahren, hergestellt. Es ist dabei auch denkbar, dass die erste Dekorlage 3 auf die Trägerlage 2 gedruckt wird. Weiter ist es möglich, dass die erste Dekorlage in einem Siebdruckverfahren und/oder Inkjetdruckverfahren hergestellt wird oder ist.

Es ist also insbesondere möglich, dass die erste Dekorlage 3 auf die Trägerlage 2 geprägt und/oder gedruckt wird. Es ist also auch denkbar, dass die erste Dekorlage 3 vor dem Aufbringen auf die Trägerlage 2 bevorzugt nicht schichtförmig, sondern zum Beispiel zumindest teilweise als ein oder mehrere Farbmittel vorliegt. Hinsichtlich weiterer Druckverfahren und möglicher Ausgestaltung der Druckschichten ist insbesondere auf obige Ausführungen verwiesen.

Es ist weiter möglich, dass die erste Dekorlage 3 in einem Spritzgussvorgang mit der Trägerlage 2 verbunden wird. Hierbei wird die erste Dekorlage 3 beispielsweise mittels einer Transferfolie, bevorzugt einer IMD-Transferfolie, bereitgestellt.

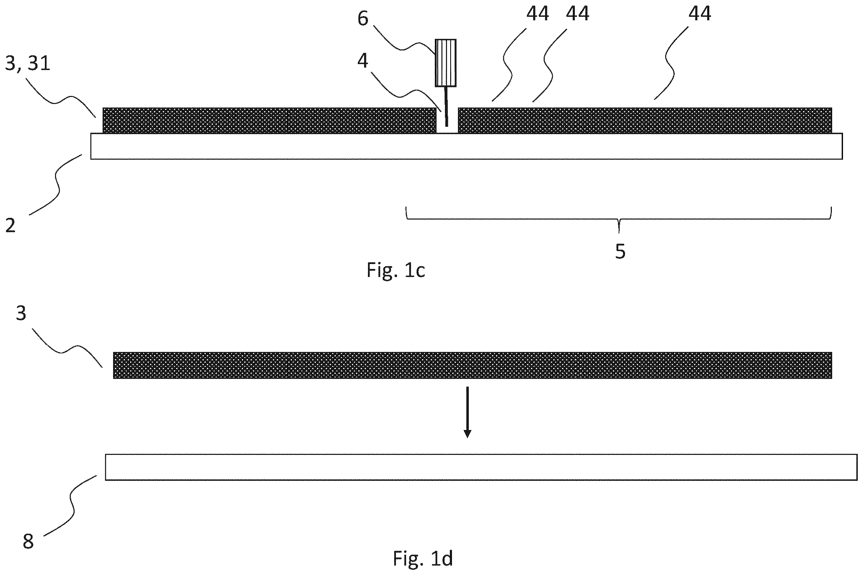

Wie insbesondere in Fig. 1c schematisch gezeigt wird, werden die ein oder mehreren Transparenzbereiche 4 vorzugsweise mittels eines Lasers 6 erzeugt, insbesondere nach dem Aufbringen der ersten Dekorlage 3 auf die Trägerlage 2.

Die ein oder mehreren Transparenzbereiche 4 sind bevorzugt Ausnehmungen, Aussparungen, Durchtrennungen, Leerstellen und/oder Löcher der ersten Dekorlage 3. Vorzugsweise werden oder sind die ein oder mehreren Transparenzbereiche 4 durch ein Einbringen und/oder Zurücklassen von Ausnehmungen, Aussparungen, Durchtrennungen, Leerstellen und/oder Löchern, bevorzugt zumindest in der ersten Dekorlage 3, erzeugt. Die ein oder mehreren Transparenzbereiche 4 durchdringen bevorzugt zumindest eine und/oder alle Schichten der ersten Dekorlage 3. Die ein oder mehreren Transparenzbereiche 4 werden oder sind dabei bevorzugt mittels eines Bearbeitungswerkzeugs, insbesondere mittels Laser, und/oder Lift-Off, erzeugt, vorzugsweise in einem ein- oder zweidimensionalen regelmäßigen Muster, bevorzugt Lochmuster.

Das Bearbeitungswerkzeug ist vorzugsweise ein Laser 6, insbesondere in der Auslegung als CO²-Laser oder in der Auslegung als YAG-Festkörper-Laser. Die Leistung des CO²-Lasers liegt hier beispielsweise bei 8 Watt. Zweckmäßigerweise liegt die Leistung des CO²- Lasers in einem Bereich von 5 Watt bis 50 Watt, vorzugsweise in einem Bereich von 5 Watt bis 25 Watt. Die Geschwindigkeit des CO²-Lasers 6, insbesondere die Verfahrgeschwindigkeit der Laserquelle, liegt beispielsweise bei 5 mm/s. Es ist insbesondere möglich, dass die Geschwindigkeit in einem Bereich von 2 mm/s bis 100 mm/s, bevorzugt in einem Bereich von 2 mm/s bis 50 mm/s, liegt. Die Wellenlänge, insbesondere die Peak-Wellenlänge, des Lasers 6, vorzugsweise in der Auslegung als CO²-Laser, beträgt bevorzugt 1060 nm.

Die Leistung des YAG-Festkörper-Lasers liegt hier beispielsweise bei 8 Watt. Zweckmäßigerweise liegt die Leistung des YAG-Festkörper-Lasers in einem Bereich von 5 Watt bis 20 Watt. Die Geschwindigkeit des YAG-Festkörper-Lasers 6, insbesondere die Verfahrgeschwindigkeit der Laserquelle, liegt beispielsweise bei 350 mm/s. Es ist insbesondere möglich, dass die Geschwindigkeit in einem Bereich von 50 mm/s bis 3000 mm/s liegt. Die Wellenlänge, vorzugsweise die Peak-Wellenlänge, des Lasers 6, insbesondere in der Auslegung als YAG-Festkörper-Laser, beträgt bevorzugt 1064 nm, insbesondere bei einer Frequenz von 150 Khz.

Es ist auch möglich, dass die ein oder mehreren Transparenzbereiche 4 mittels Lift-Off erzeugt werden. Lift-Off ist insbesondere ein Verfahren, bei welchem eine lösliche Schicht gedruckt wird, bevorzugt auf die Trägerlage 2 gedruckt wird. Vorzugsweise wird anschließend eine bereichsweise zu lösende Dekorschicht auf die lösliche Schicht, bevorzugt auf die Trägerlage 2 mit der löslichen Schicht, gedruckt. Bevorzugt wird dann die lösliche Schicht mit der darüberliegenden bereichsweise zu lösenden Dekorschicht gelöst, beispielsweise durch das Einwirkenlassen von Lösemitteln, in denen die lösliche Schicht bevorzugt lösbar ist. Dies können beispielsweise organische Lösungsmittel sein und/oder Wasser. Insbesondere werden die ein oder mehreren Transparenzbereiche 4 dabei erzeugt, indem bevorzugt die lösliche Schicht in den ein oder mehreren Transparenzbereichen 4 mit der zu lösenden Dekorschicht von der Trägerlage 2 abgelöst wird.

Weitere mögliche Verfahren zum Erzeugen der ein oder mehreren Transparenzbereiche 4 sind beispielsweise Fräsen und/oder Stanzen.

Unter den ein oder mehreren Transparenzbereichen 4 der ersten Dekorlage 3 werden hier insbesondere ein oder mehrere Bereiche bezeichnet, in welchen die erste Dekorlage 3 entfernt ist. Es ist auch möglich, dass in den ein oder mehreren Transparenzbereichen 4 die Opazität der ersten Dekorlage, insbesondere in Relation zu umgebenden Bereichen der ersten Dekorlage 3, verringert wird oder ist und/oder die Transparenz der ersten Dekorlage 3, insbesondere in Relation zu umgebenden Bereichen der ersten Dekorlage 3, erhöht wird oder ist.

Es ist bevorzugt möglich, dass die erste Dekorlage 3 und/oder die Dekorfolie 1 in den ein oder mehreren Transparenzbereichen 4 eine Transparenz im für das menschliche Auge sichtbaren Wellenlängenbereich aufweist, welche sich um mindestens 5%, vorzugsweise mindestens 10 % bis 75 %, von der Transparenz im für das menschliche Auge sichtbaren Wellenlängenbereich im Displaybereich 5 außerhalb der ein oder mehreren Transparenzbereiche 4 unterscheidet.

Insbesondere weist die erste Dekorlage 3 und/oder die Dekorfolie 1 vor dem Erzeugen der ein oder mehreren Transparenzbereiche 4, vorzugsweise in den Bereichen 44 mit den zu erzeugenden ein oder mehreren Transparenzbereichen 4, eine Transparenz im für das menschliche Auge sichtbaren Wellenlängenbereich von weniger als 50%, vorzugsweise von weniger als 20%, bevorzugt von weniger als 5% auf. Weiter ist es möglich, dass die erste Dekorlage 3 und/oder die Dekorfolie 1 nach dem Erzeugen der ein oder mehreren Transparenzbereiche 4 in den ein oder mehreren Transparenzbereichen 4 eine Transparenz im für das menschliche Auge sichtbaren Wellenlängenbereich von mehr als 50 %, insbesondere von mehr als 75 %, aufweist.

Fig. 1d zeigt schematisch ein Verfahren zum Herstellen eines Dekorfolienkörpers 10 zum Aufbringen auf ein dynamisch ansteuerbares Display 7. Die erste Dekorlage 3 wird hierbei bevorzugt mit der weiteren Dekorlage 8 verbunden, insbesondere mittels Heißprägen, Heißlaminieren, Kaltprägen, Laminieren und/oder Spritzgießen, insbesondere Inmould-Decoration und/oder Hinterspritzen. Weiter ist es möglich, dass die Dekorfolie 1 mit der ersten Dekorlage 3 mit der weiteren Dekorlage 8 verbunden wird.

Es ist beispielsweise möglich, dass zwischen die erste Dekorlage 3 und die weitere Dekorlage 8 ein Abstandskörper mittels einer Spritzgussmasse eingespritzt wird und/oder die erste Dekorlage 3 gemeinsam mit der weiteren Dekorlage 8 von einer Spritzgussmasse hinterspritzt wird. Insbesondere verbinden sich die erste Dekorlage 3 und die weitere Dekorlage 8 bei dem Einspritzen der Spritzgussmasse und/oder bei dem Hinterspritzen der Spritzgussmasse. Es ist auch möglich, dass hierbei das dynamisch ansteuerbare Display 7 zumindest mit der Dekorfolie 1, insbesondere der Trägerlage 2 und/oder der ersten Dekorlage 3, verbunden wird.

Es ist auch möglich, dass die weitere Dekorlage 8 vollflächig auf die erste Dekorlage 3 aufgebracht wird und/oder die erste Dekorlage 3 überdeckt und/oder die ein oder mehreren Transparenzbereiche 4 überdeckt. Die Überdeckung ist hierbei vorzugsweise vollflächig.

Fig. 2 zeigt schematisch ein Verfahren zum Herstellen eines Displaykörpers 20, umfassend die folgenden Schritte:
- Bereitstellen einer Dekorfolie 1 oder eines Dekorfolienkörpers 20
- Verbinden der Dekorfolie 1 oder des Dekorfolienkörpers 20 mit einem dynamisch ansteuerbaren Display 7, insbesondere mittels Heißprägen, Heißlaminieren, Kaltprägen, Laminieren, Kaschieren, Verkleben und/oder Spritzgießen, insbesondere Inmould-Decoration und/oder Hinterspritzen.

Fig. 3 zeigt die Dekorfolie 1 zum Aufbringen auf ein dynamisch ansteuerbares Display, umfassend:
- die Trägerlage 2,
- die erste Dekorlage 3.

Die erste Dekorlage 3 weist in dem Displaybereich 5 ein erstes Dekor 31 und ein oder mehrere Transparenzbereiche 4 auf. **In** den ein oder mehreren Transparenzbereichen 4 ist die Dekorfolie 1 für von dem dynamisch ansteuerbaren Display 7 abgestrahltes Licht durchlässig.

Hierbei ist es bevorzugt möglich, dass das erste Dekor 31 beispielsweise bereichsweise oder vollflächig in dem Dekorbereich 5, bevorzugt außerhalb der ein oder mehreren Transparenzbereiche 4, vorliegt. Weiter ist es insbesondere möglich, dass das erste Dekor 31 auch bereichsweise oder vollflächig außerhalb des Dekorbereichs 5 vorliegt. Es ist auch denkbar, dass die erste Dekorlage 3 das erste Dekor 31 lediglich in dem Displaybereich 5 aufweist.

Hierbei ist es möglich, dass es die ein oder mehreren Transparenzbereiche 4 bevorzugt von mehreren Ausnehmungen, Durchtrennungen, Löchern, Leerstellen und/oder Bereichen mit erhöhter Transparenz in der ersten Dekorlage 3 gebildet werden. Es ist weiter denkbar, dass die ein oder mehreren Transparenzbereiche 4 von einem zusammenhängenden Transparenzbereich oder mehreren voneinander getrennten Transparenzbereichen gebildet werden.

Der gezeigte Displaybereich 5 umfasst die Dekorfolie 1 insbesondere bereichsweise. Weiter ist es denkbar, dass der Displaybereich 5 die gesamte Dekorfolie 1 umfasst.

Die erste Dekorlage 3 und/oder das erste Dekor 31 ist hier vorzugsweise zumindest bereichsweise opak oder semitransparent oder vollflächig opak oder semitransparent. Insbesondere stellt die erste Dekorlage 3 und/oder das erste Dekor 31, vorzugsweise zumindest in dem Displaybereich 5, ein erstes Motiv oder einen ersten Teilbereich eines ersten Motivs bereit, wobei das erste Motiv ein statisches Motiv ist. Mittels der ersten Dekorlage 3 und/oder dem ersten Dekor ist bevorzugt das erste Motiv oder ein erster Teilbereich des ersten Motivs in einen für das menschliche Auge ohne Zuhilfenahme optischer Hilfsmittel sichtbaren Zustand versetzbar. Das erste Motiv und/oder der erste Teilbereich des ersten Motivs ist insbesondere im Displaybereich 5 und bevorzugt außerhalb der ein oder mehreren Transparenzbereiche 4 angeordnet. Es ist auch denkbar, dass die ein oder mehreren Transparenzbereiche 4 auch einen Teilbereich des ersten Motivs ausbilden.

Die erste Dekorlage 3 weist, insbesondere zur Ausbildung des ersten Dekors 31, ein oder mehrere erste Dekorschichten auf, welche bevorzugt aus den oben genannten Dekorschichten ausgewählt und entsprechend der obigen Ausführungen hergestellt sind.

Vorzugsweise ist zumindest eine erste Dekorschicht der ein oder mehreren ersten Dekorschichten eine Farbschicht, insbesondere in der Form einer Hintergrundfarbschicht, welche insbesondere eine Lackschicht umfasst. Es ist denkbar, dass die ein oder mehreren ersten Dekorschichten lediglich die zumindest eine erste Dekorschicht umfassen.

Weiter ist es möglich, dass zumindest eine zweite Dekorschicht der ein oder mehreren ersten Dekorschichten eine opake Farbschicht und/oder eine bevorzugt semitransparente metallische Schicht ist. Die zumindest eine zweite Dekorschicht der ein oder mehreren ersten Dekorschichten ist bevorzugt auf der der Trägerlage abgewandten Seite der zumindest einen ersten Dekorschicht der ein oder mehreren ersten Dekorschichten angeordnet. Die zumindest eine zweite Dekorschicht der ein oder mehreren ersten Dekorschichten dient bevorzugt als Mindest-Farbauftrag. Auf die Hintergrundfarbschicht werden oder sind insbesondere ein oder mehrere weitere partielle und/oder musterförmige Dekorschichten, vorzugsweise Lackschichten, aufgetragen, beispielsweise als Holzmaserung oder anderweitiges Muster.

Es ist auch möglich, dass die ein oder mehreren ersten Dekorschichten ein oder mehrere der folgenden Schichten, insbesondere in der folgenden Reihenfolge ausgehend von der Trägerlage, umfassen:
- Ein oder mehrere Druckschichten,
- Ein oder mehrere Farblackschichten, insbesondere umfassend die zumindest eine erste Dekorschicht der ein oder mehreren ersten Dekorschichten.

Weiter ist es möglich, dass die ein oder mehreren ersten Dekorschichten ein oder mehrere der folgenden Schichten, insbesondere in der folgenden Reihenfolge ausgehend von der Trägerlage, umfassen:
- Ein oder mehrere metallische Schichten, welche bevorzugt mittels Bedampfung aufgebracht sind,
- Ein oder mehrere Lackschichten, welche bevorzugt bedampfbar sind.

Weiter ist es möglich, dass die erste Dekorlage 3 ein oder mehrere weitere Dekorschichten auf der der Trägerlage abgewandten Seite der ein oder mehreren ersten Dekorschichten umfasst.

Die erste Dekorlage 3 umfasst beispielsweise zumindest eine opake Farbschicht, eine metallische Schicht, welche bevorzugt vollflächig semitransparent, gebürstet und/oder hochglänzend ist, oder eine andere Dekorschicht. Weiter ist es möglich, dass die erste Dekorlage 3 eine Hintergrundfarbschicht aufweist, insbesondere auf der der Trägerlage 2 zugewandten Seite der ersten Dekorlage 3. Es ist denkbar, dass die Hintergrundfarbschicht die einzige Schicht der ersten Dekorlage 3 ist.

Hierbei ist es möglich, dass die erste Dekorlage 3, insbesondere zur Ausbildung des ersten Dekors, ein oder mehrere Dekorschichten umfasst, wobei die ein oder mehreren Dekorschichten zumindest ein oder mehrere der folgenden Schichten oder eine Kombination der folgenden Schichten aufweisen, insbesondere angeordnet in einer Richtung wegführend von der Trägerlage in der genannten Reihenfolge: eine Kleberschicht, eine metallische Schicht, eine Farbschicht, eine Druckschicht, eine Farblackschicht, eine weitere Dekorschicht, eine Schutzschicht, insbesondere eine Schutzlackschicht. Diese weitere Dekorschicht umfasst wiederum bevorzugt ein oder mehrere der zuvor genannten Dekorschichten.

Die Trägerlage 2 ist vorzugsweise transparent und/oder die Trägerlage 2 umfasst ein Material oder eine Kombination von Materialien ausgewählt aus: ABS, ABS/PC, PC/ABS, PC, PP oder PMMA. Die Schichtdicke der Trägerlage 2 liegt beispielsweise bei 0,75 mm. Bevorzugt ist eine Schichtdicke der Trägerlage 2 im Bereich von 0,5 mm bis 30 mm, insbesondere im Bereich von 0,5 mm bis 0,75 mm, denkbar.

Insbesondere ist eine Verwendung einer Dekorfolie 1 und/oder eines Dekorfolienkörpers 10 als Insert, Heißprägefolie und/oder In-Mould-Folie, insbesondere als In-Mould-Decoration-Folie, Insert-Moulding-Folie, In-Mould-Labeling-Folie und/oder Print-Mould-Design-Folie möglich.

Insbesondere weist die erste Dekorlage 3 beispielsweise eine Schichtdicke von 0,5 µm auf. Es ist insbesondere möglich, dass die erste Dekorlage 3 eine Schichtdicke in einem Bereich von 0,5 µm bis 10 µm aufweist.

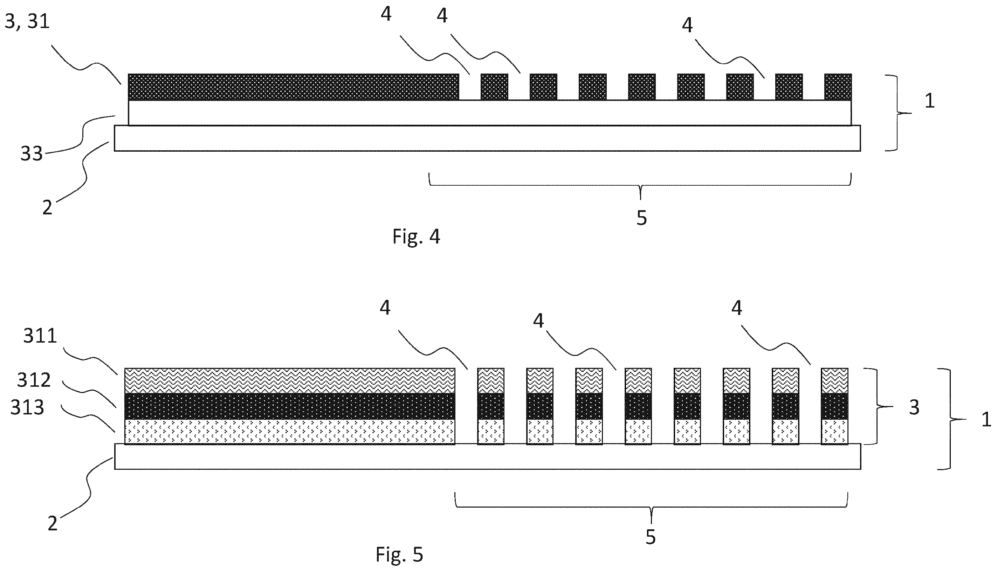

Fig. 4 zeigt schematisch insbesondere die in Fig. 3 gezeigte Dekorfolie 1, wobei die Dekorfolie 1 eine Pufferschicht 33 umfasst, welche bevorzugt zwischen der ersten Dekorlage 3 und der Trägerlage 2 angeordnet ist. Die Pufferschicht 33 ist oder wird hierbei bevorzugt vollflächig auf die Trägerlage 2 aufgebracht. Weiter ist die Pufferschicht 33 vorzugsweise transparent. Die Pufferschicht 33 ist bevorzugt wie eine Kleberschicht ausgebildet und/oder umfasst einen Klebstoff.

Fig. 5 zeigt insbesondere die in Fig. 3 gezeigte Dekorfolie 1, wobei die erste Dekorlage 3 mehrschichtig ist. Hierbei ist es möglich, dass die erste Dekorlage 3 eine erste Dekorschicht 312 aufweist, welche ein- oder mehrschichtig ist. Die erste Dekorschicht 312 umfasst bevorzugt eine opake Farbschicht, insbesondere eine opake Farblackschicht, und/oder eine metallische Schicht. Insbesondere weist die erste Dekorlage 3 auf der der Trägerlage 2 abgewandten Seite der Dekorschicht 312 eine optionale Schutzschicht 311, vorzugsweise eine Schutzlackschicht, auf. Zwischen der Dekorschicht 312 und der Trägerlage 2 ist insbesondere eine optionale Kleberschicht 313 angeordnet. Wie Fig. 5 zeigt, ist es somit möglich, dass die erste Dekorlage 3 auf ihrer der Trägerlage 2 abgewandten äußeren Seite bevorzugt eine Schutzschicht 311 aufweist und/oder auf ihrer der Trägerlage 2 zugewandten äußeren Seite eine Kleberschicht 313 aufweist.

Weiter ist es denkbar, dass die Dekorschicht 312 die Hintergrundfarbschicht umfasst oder daraus besteht. Hierdurch wird beispielsweise ein Dekor, insbesondere ein Holzdekor, gebildet. Es ist auch möglich, dass die erste Dekorlage 3 hierzu weitere Dekorschichten umfasst. Diese weiteren Dekorschichten umfassen vorzugsweise zumindest eine Vordergrundfarbschicht und/oder sind insbesondere partiell und/oder als Muster aufgebracht, vorzugsweise auf einer der Trägerlage 2 abgewandten und/oder zugewandten Seite der Dekorschicht 312, insbesondere der Hintergrundschicht.

Es ist auch möglich, dass die Schutzlackschicht insbesondere bereichsweise unterschiedlich ausgebildet ist oder wird und hochglänzende und matte Flächenbereiche und Flächenbereiche mit einer taktilen Struktur gleichzeitig aufweist oder nur zwei unterschiedliche der vorgenannten Flächenbereiche aufweist. So ist es beispielsweise möglich, dass ein äußerer Randbereich der Schutzlackschicht anders als ein von dem Randbereich umgebenen Bereich ausgebildet ist oder wird. Beispielsweise ist es möglich, dass der äußere Randbereich der Schutzlackschicht matt und/oder taktil ausgebildet ist oder wird und vorzugsweise der von dem Randbereich umgebene Bereich insbesondere hochglänzend ausgebildet ist oder wird.

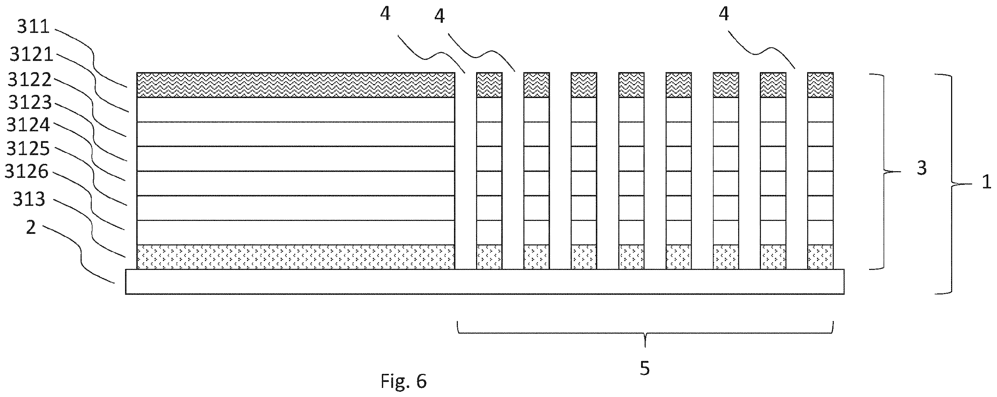

Fig. 6 zeigt die in Fig. 5 gezeigte Dekorfolie 1, wobei die erste Dekorlage 3 mehrschichtig ist und insbesondere mehrere Dekorschichten 3121 bis 3126 aufweist. Hierbei weisen die mehreren Dekorschichten 3121 auf ihrer der Trägerlage 2 zugewandten Seite die Druckschichten 3124 bis 3126 auf. Es ist insbesondere möglich, dass die Druckschichten 3124 bis 3126 überlappend und/oder nebeneinander aufgedruckt werden.

Auf ihrer der Trägerlage 2 abgewandten Seite und/oder zwischen der Schutzschicht 311 und der Trägerlage 2 weisen die Dekorschichten die Farblackschichten 3121 bis 3123 auf. Die Dekorschichten 3121 bis 3126, insbesondere die Farblackschichten 3121 bis 3124, umfassen hierbei insbesondere zumindest eine opake Farbschicht.

Es ist auch möglich, dass anstelle einer oder mehrerer der Farblackschichten 3121 bis 3124 und/oder zusätzlich eine metallische Schicht oder einer weitere Dekorschicht aufgebracht ist.

Hinsichtlich der Ausgestaltungen der Dekorschichten ist insbesondere auf obige Ausführungen verwiesen.

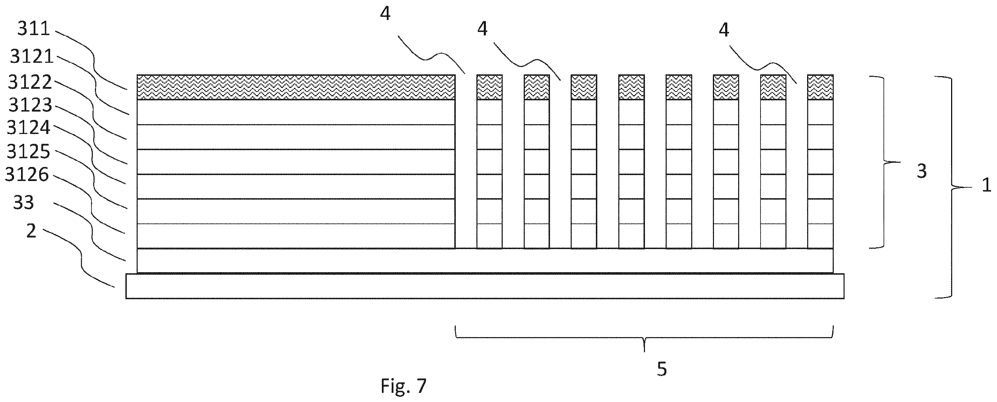

Fig. 7 zeigt die in Fig. 6 gezeigte Dekorfolie 1, wobei die Dekorfolie 1 zwischen der Dekorlage 3 und der Trägerlage 2 eine Pufferschicht 33, welche insbesondere auch in der Fig. 4 beschrieben ist, aufweist. Weiter ist insbesondere die in Fig. 6 gezeigte Kleberschicht 313 nicht abgebildet. Somit ist es möglich, dass die Pufferschicht 33 die Kleberschicht 313 ersetzt. Es ist weiter denkbar, dass die Kleberschicht 313 auf die Pufferschicht 2 aufgebracht ist. Weiter ist es denkbar, dass eine weitere vollflächige und transparente Schicht, beispielsweise umfassend PC und/oder PMMA, auf der der Trägerlage 2 abgewandten Seite der Pufferschicht 33 angeordnet ist.

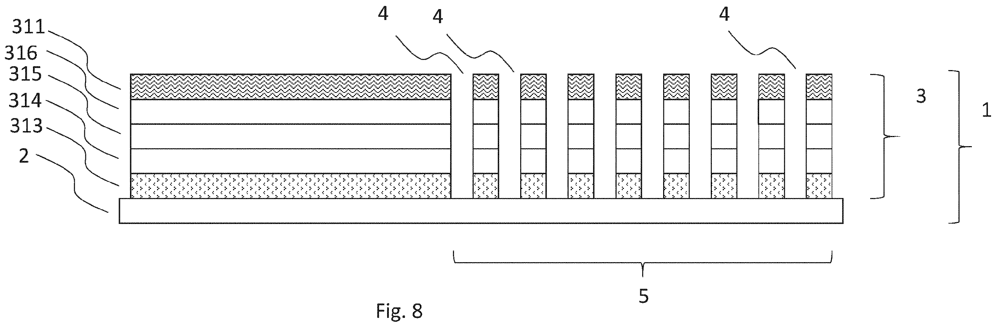

Fig. 8 zeigt schematisch insbesondere die in Fig. 5 gezeigte Dekorfolie 1, wobei die erste Dekorlage 3 eine metallische Schicht 314 und eine Lackschicht 315 aufweist. Die erste Dekorlage 3 weist optional die weitere Dekorschicht 316 auf, welche ein- oder mehrschichtig ist. Die weitere Dekorschicht 316 ist insbesondere auf der der Trägerlage 2 abgewandten Seite der Dekorschicht 312 und/oder zwischen der Dekorschicht 312 und der Schutzschicht 311 angeordnet und/oder umfasst insbesondere eine oder mehrere der oben genannten Dekorschichten.

Die metallische Schicht 314 ist insbesondere zumindest bereichsweise und/oder vollflächig transparent, semitransparent oder opak. Es ist bevorzugt möglich, dass die metallische Schicht 314 gebürstet oder hochglänzend ist. Weiter ist es möglich, dass die metallische Schicht 314 zumindest bereichsweise in der Form einer Inselschicht aufgebracht ist, vorzugsweise mittels Bedampfung, wobei die metallische Schicht bevorzugt Indium umfasst oder daraus besteht. Die Lackschicht 315 ist insbesondere bedampfbar und/oder die metallische Schicht 314 auf die Lackschicht 315 aufgedampft.

Bevorzugt sind die ein oder mehreren Transparenzbereiche 4 lediglich in dem Displaybereich 5 eingebracht, in welchem auch das dynamisch ansteuerbare Display 7 angeordnet ist oder angebracht wird. Insbesondere sind damit außerhalb des Displaybereichs 5 bevorzugt keine Ausnehmungen, Durchtrennungen, Leerstellen und/oder Löcher in der zumindest einen metallischen Schicht 314 vorhanden. Bevorzugt wird zumindest ein Sensor benachbart zu dem Displaybereich 5 angeordnet. Die metallische Schicht 314 als Inselschicht bringt dabei insbesondere die oben genannten Eigenschaften und/oder Vorteile hinsichtlich der Strahlendurchlässigkeit mit sich. Es ist weiter denkbar, dass die metallische Schicht 314 ein oder mehrere der oben genannten Metalle umfasst.

Fig. 9a zeigt schematisch eine Draufsicht auf die erste Dekorlage 3 und insbesondere die Dekorfolie 1 wie diese beispielsweise in Fig. 3 gezeigt ist. Die ein oder mehreren Transparenzbereiche 4, insbesondere bei einer Betrachtung in einer Draufsicht auf die Dekorfolie 1 und/oder auf die erste Dekorlage 3, sind hierbei bevorzugt in einem Raster angeordnet.

Die Transparenzbereiche 4 sind insbesondere entlang zueinander parallel angeordneter Reihen angeordnet. Die in dem Koordinatensystem gezeigte x-Richtung kann insbesondere als horizontale Richtung und die y-Richtung insbesondere als vertikale Richtung verstanden werden. Die Reihen bilden hier insbesondere horizontale Linien und/oder Linien in x-Richtung und/oder sind vertikal zueinander versetzt und/oder entlang der y-Richtung nebeneinander angeordnet.

Das Raster der ein oder mehreren Transparenzbereiche 4 weist insbesondere eine Rasterweite von 3 mm auf. Es ist bevorzugt auch möglich, dass die Rasterweite in einem Bereich von 1 mm bis 5 mm liegt. Die Rasterweite bestimmt bevorzugt den Abstand a und/oder b zwischen den Transparenzbereichen 4. Unter der Rasterweite ist also insbesondere der Abstand direkt benachbarter Transparenzbereiche 4 in x-Richtung und/oder y-Richtung zu verstehen. Unter Rasterweite wird hier bevorzugt auch der horizontale Abstand und/oder vertikale Abstand direkt benachbarter Transparenzbereiche verstanden. Zur Bestimmung der Rasterweite, des horizontalen Abstands und/oder des vertikalen Abstands wird insbesondere die Entfernung von Mittelpunkt zu Mittelpunkt direkt benachbarter Transparenzbereiche gemessen. Hiermit ist es beispielsweise möglich, dass mittels der ein oder mehreren Transparenzbereiche 4 die erste Dekorlage 3 eine bevorzugt einheitliche und insbesondere homogene Lochmaske bildet.

Die ein oder mehreren Transparenzbereiche 4 sind insbesondere entlang zueinander parallel angeordneter Reihen angeordnet. Bevorzugt sind in jeder zweiten Reihe angeordnete Transparenzbereiche 4 in Richtung der Reihe zu Transparenzbereichen 4 der jeweils benachbarten Reihen um die Hälfte der Rasterweite versetzt angeordnet. Die Hälfte der Rasterweite ist hier insbesondere mit c gezeigt. In diesem Beispiel weist jede zweite Reihe in y-Richtung Transparenzbereiche auf, die in x-Richtung um c = 1,5 mm versetzt, insbesondere versetzt zu Transparenzbereiche der bevorzugt in y-Richtung darüberliegenden oder darunterliegenden Reihe, angeordnet sind.

Die ein oder mehreren Transparenzbereiche 4, insbesondere in einer Draufsicht auf die erste Dekorlage 3, bilden jeweils insbesondere eine Kreisfläche. Der Durchmesser d beträgt hier 0,5 mm. Weiter ist es möglich, dass die ein oder mehreren Transparenzbereiche 4 vorzugsweise einen Durchmesser im Bereich von 0,25 mm bis 0,75 mm aufweisen. Es ist weiter denkbar, dass die Transparenzbereiche 4 eine Form oder eine Kombination verschiedener Formen aufweisen, beispielsweise ausgewählt aus: Kreis, Ellipse, Dreieck, Viereck, Vieleck, unregelmäßiges Vieleck, Raute, Kreuz. Weiter weisen die ein oder mehreren Transparenzbereiche 4 insbesondere jeweils eine Fläche in einem Bereich von 0,04 mm² bis 0,5 mm², bevorzugt in einem Bereich von 0,04908 mm² bis 0,44179 mm², auf, vorzugsweise wobei die Fläche in einer Draufsicht auf die erste Dekorlage 3 gemessen wird.

Fig. 9b zeigt die in Fig. 9a gezeigt erste Dekorlage 3, wobei hier weiter der Displaybereich 5 gezeigt wird, wobei der Displaybereich 5 vorzugsweise das Dekor 8 aufweist.

Die erste Dekorlage 3 und/oder das erste Dekor 31 ist beispielsweise im Displaybereich 5, bevorzugt außerhalb der ein oder mehreren Transparenzbereiche 4, zumindest bereichsweise opak oder vollflächig opak. Insbesondere weist die erste Dekorlage 3 eine zumindest bereichsweise opake Schicht auf oder bevorzugt mehrere Schichten auf, welche beispielsweise eine mehrschichtige zumindest bereichsweise opake Lage bilden.

Vorzugsweise wird der Displaybereich 5, insbesondere bei einer Betrachtung senkrecht auf eine von der Dekorfolie 1 aufgespannte Ebene, von dem Umriss um die Transparenzbereiche 4, begrenzt und/oder von einem Bereich definiert auf welchen das dynamisch ansteuerbare Display aufgebracht wird und/oder aufzubringen ist. Hierbei ist es auch denkbar, dass das dynamisch ansteuerbare Display in einem überdeckten Bereich über den Bereich des Displaybereichs 5 hinausgeht, insbesondere wobei in dem überdeckten Bereich das dynamisch ansteuerbare Display von der ersten Dekorlage 3 verdeckt ist und/oder die erste Dekorlage 3 in dem überdeckten Bereich bevorzugt keine Transparenzbereiche aufweist.

Die ein oder mehreren Transparenzbereiche 4 bedecken bevorzugt einen Anteil in einem Bereich von 0,5 % bis 3 % der Gesamtfläche des Displaybereichs 5. Der Displaybereich 5 weist insbesondere eine Fläche in einem Bereich von 0,1 m² bis 1,0 m² auf.

Die Transparenz im für das menschliche Auge sichtbaren Wellenlängenbereich der Dekorfolie 1 und/oder der ersten Dekorlage 3 im Displaybereich 5 und außerhalb der ein oder mehreren Transparenzbereiche 4 liegt bevorzugt in einem Bereich von 10 % bis 75 %, insbesondere in einem Bereich von 35 % bis 65 %. Die Transparenz im für das menschliche Auge sichtbaren Wellenlängenbereich der Dekorfolie 1 und/oder der ersten Dekorlage 3 innerhalb der ein oder mehreren Transparenzbereiche 4 liegt bevorzugt in einem Bereich von 10 % bis 75 %, insbesondere in einem Bereich von 35 % bis 65 %.

Es ist insbesondere möglich, dass die Dekorfolie 1 und/oder die erste Dekorlage 3 ein Verhältnis der Transparenz im sichtbaren Wellenlängenbereich im Displaybereich 5 außerhalb der ein oder mehreren Transparenzbereiche 4 zur Transparenz im sichtbaren Wellenlängenbereich der ein oder mehreren Transparenzbereiche 4 in einem Bereich von 5 % bis 90 % aufweist.

Vorzugsweise weist die Dekorfolie 1 und/oder die erste Dekorlage 3 im Displaybereich 5 und außerhalb der ein oder mehreren Transparenzbereiche 4 einen Reflexionsgrad im Bereich von 5 % bis 90 % auf und/oder innerhalb der ein oder mehreren Transparenzbereiche 4 einen Reflexionsgrad im Bereich von 20 % bis 80 % auf.

Es ist insbesondere möglich, dass die Dekorfolie 1, insbesondere bei einer Betrachtung auf eine der Trägerlage 2 abgewandte Seite der Dekorfolie 1, und/oder die erste Dekorlage 3 ein Verhältnis des Reflexionsgrads im Displaybereich 5 außerhalb der ein oder mehreren Transparenzbereiche 4 zum Reflexionsgrad der ein oder mehreren Transparenzbereiche 4 in einem Bereich von 20 % bis 80 % aufweist.

Derartige Reflexionsgrade und/oder Transmissionsgrade bzw. Transparenzwerte ermöglichen insbesondere, dass vorzugsweise ein mittels des dynamisch ansteuerbaren Displays erzeugtes Motiv gut sichtbar ist und/oder ein Motiv der Dekorfolie und/oder zumindest das erste Dekor optisch verborgen werden kann, insbesondere für das menschliche Auge verborgen werden kann. Weiter wird insbesondere ermöglicht, dass das dynamisch ansteuerbare Display optisch besser verborgen wird.

Weiter ist es denkbar, dass die erste Dekorlage 3 und/oder das erste Dekor 31 außerhalb des Displaybereichs 5 ein statisches Motiv aufweist, welches den Displaybereich 5 vorzugsweise umgibt und/oder begrenzt, beispielsweise in Form einer Umrandung, bevorzugt in einer zum Dekor, insbesondere zum ersten Dekor 31 und/oder zum ersten Motiv, innerhalb des Displaybereichs 5 kontrastierenden Farbe, und/oder in Form einer Metallisierung, beispielsweise aus Chrom. Es ist auch möglich, dass das erste Dekor 31 und/oder das statische Motiv der ersten Dekorlage 3 und/oder des ersten Dekors 31 außerhalb des Displaybereichs bevorzugt mit dem ersten Dekor 31 innerhalb des Displaybereichs 5 übereinstimmt und/oder dies nahtlos und/oder übergangslos fortsetzt, vorzugsweise sodass der Displaybereich 5 als solcher nicht ohne weiteres erkennbar ist, insbesondere nicht ohne weiteres anhand des ersten Dekors 31 erkennbar ist.

Weiter ist es möglich, dass die erste Dekorlage 3 und/oder das erste Dekor 31 außerhalb des Displaybereichs 5 zumindest bereichsweise transparent oder semitransparent ist und/oder außerhalb des Displaybereichs hinterleuchtet und/oder durchleuchtet ist, insbesondere wobei diese Hinterleuchtung und/oder Durchleuchtung bevorzugt nicht mit dem dynamisch ansteuerbaren Display, sondern mit weiteren Leuchtelementen erfolgen kann.

Fig. 10a zeigt schematisch ein Beispiel eines Dekorfolienkörpers 10 zum Aufbringen auf ein dynamisch ansteuerbares Display 7 mit der Dekorfolie 1.

Der Dekorfolienkörper 10 umfasst insbesondere eine weitere Dekorlage 8. Die weitere Dekorlage 8 ist vorzugsweise auf einer der Trägerlage 2 abgewandten Seite der ersten Dekorlage 3 aufgebracht. Bevorzugt ist die weitere Dekorlage 8 vollflächig auf die erste Dekorlage 3 aufgebracht. Die weitere Dekorlage 8 ist insbesondere vollflächig auf die erste Dekorlage 3 aufgebracht. Es ist auch möglich, dass die weitere Dekorlage 8 die erste Dekorlage 3 überdeckt, beispielsweise für den Fall, dass zwischen der weiteren Dekorlage 8 und der ersten Dekorlage 3 ein Abstandskörper, bevorzugt aus einer Spritzgussmasse, angeordnet ist. Weiter ist es denkbar, dass die weitere Dekorlage 8 die ein oder mehreren Transparenzbereiche 4 überdeckt. Die Überdeckung ist hierbei vorzugsweise vollflächig.

Zweckmäßigerweise ist die weitere Dekorlage 8 zumindest bereichsweise oder vollflächig semitransparent und/oder weist zumindest bereichsweise oder vollflächig eine Transparenz im für das menschliche Auge sichtbaren Wellenlängenbereich in einem Bereich von 5% bis 100%, insbesondere in einem Bereich von 20 % bis 80%, auf. Weiter ist es möglich, dass die weitere Dekorlage 8 und/oder der Dekorfolienkörper 10, insbesondere bei einer Betrachtung von der Seite der weiteren Dekorlage 8, einen Reflexionsgrad im Displaybereich 5 und außerhalb der ein oder mehreren Transparenzbereiche 4 im Bereich von 1 % bis 99 % und/oder in den ein oder mehreren Transparenzbereichen 4 im Bereich von 1 % bis 99 % aufweist.

Es ist möglich, dass die weitere Dekorlage 8 ein zweites Dekor 310 aufweist, wobei das zweite Dekor 310, vorzugsweise zumindest in dem Displaybereich 5, ein statisches Motiv oder einen zweiten Teilbereich des ersten Motivs ausbildet. Es ist somit bevorzugt möglich, dass das zweite Dekor 310 mit dem ersten Dekor 31 ein statisches Motiv oder einen dritten Teilbereich eines statischen Motivs ausbildet. Insbesondere bilden die ein oder mehreren Transparenzbereiche 4, bevorzugt mit dem dynamisch ansteuerbaren Display im ausgeschalteten Zustand, mit dem dritten Teilbereich ein statisches Motiv.

Es ist auch denkbar, dass die weitere Dekorlage 8, insbesondere zur Ausbildung des zweiten Dekors 310, ein oder mehrere Dekorschichten umfasst. Hinsichtlich der Ausgestaltungen der Dekorschichten ist insbesondere auf obige Ausführungen verwiesen.

Insbesondere weist die weitere Dekorlage 8 beispielsweise eine Schichtdicke von 5 µm auf. Es ist insbesondere möglich, dass die weitere Dekorlage 8 bevorzugt eine Schichtdicke in einem Bereich von 0,5 µm bis 30 µm aufweist.

Bevorzugt weist die erste Dekorlage 3 Farben mit Wellenlängen im Bereich von 380 nm bis 550 nm auf und/oder weist Farben und/oder optische Effekte auf, welche einzeln oder in Kombination ausgewählt werden aus: Holz-Naturtöne, metallisch-silbrige Töne, Töne von Gold über Rotgold bis Kupferfarben, insbesondere in matt bis hochglänzend, bevorzugt mit und/oder ohne Bürstung. Die weitere Dekorlage weist insbesondere Farben mit Wellenlängen im Bereich von 380 nm bis 550 nm und/oder Farben und/oder optische Effekte auf, welche einzeln oder in Kombination ausgewählt werden aus: Holz-Naturtöne, metallisch-silbrige Töne, Töne von Gold über Rotgold bis Kupferfarben.

Derartige Kombinationen von Farben und/oder optischen Effekten verbessern bevorzugt die Möglichkeit, das erste Motiv optisch zu verbergen und/oder insbesondere das zweite Motiv mit einer verbesserten Qualität darzustellen.

Es ist auch denkbar, dass die weitere Dekorlage 8 bevorzugt eine homogene Farbe und/oder Transparenz aufweist, bevorzugt vollflächig aufweist.

Fig. 10b zeigt den in Fig. 10a gezeigten Dekorfolienkörper 10, wobei die weitere Dekorlage 8 hier insbesondere auf einer der ersten Dekorlage 3 abgewandten Seite der Trägerlage 2 aufgebracht ist.

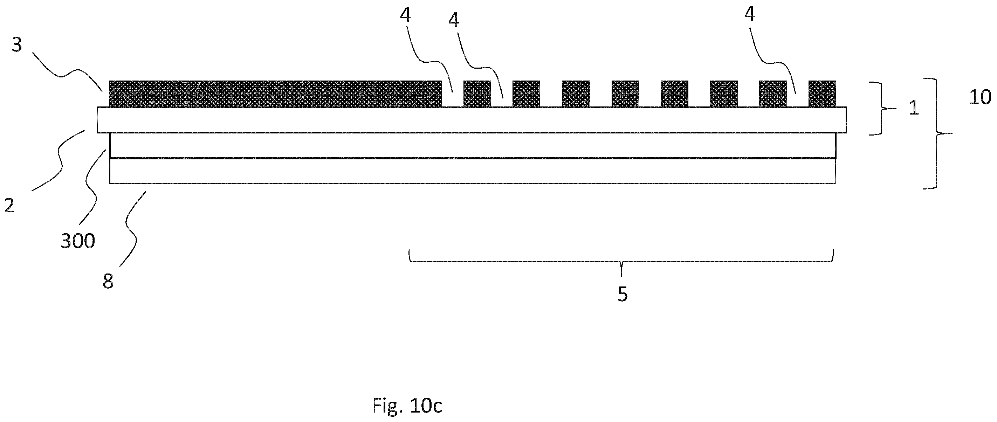

Fig. 10c zeigt schematisch einen Dekorfolienkörper 10 mit einer weiteren Dekorlage 8, wie diese beispielsweise auch in Fig. 10a beschrieben ist, wobei zwischen der weiteren Dekorlage 8 und der ersten Dekorlage 3 ein Abstandskörper 300 angeordnet ist. Hierbei ist es insbesondere möglich, dass der Abstandskörper 300 eine Spritzgussmasse umfasst oder daraus besteht. Vorzugsweise ist der Abstandskörper 300 semitransparent oder transparent. Insbesondere weist der Abstandskörper 300 bevorzugt eine Transparenz in einem Bereich von 15 % bis 80 % auf. Der Abstandskörper weist bevorzugt eine Dicke im Bereich von 1 mm bis 20 mm, bevorzugt im Bereich von 4 mm bis 20 mm, auf.

Das dynamisch ansteuerbare Display wird hierbei vorzugsweise auf der Seite der ersten Dekorlage 3 des Dekorfolienkörpers 10 aufgebracht und/oder die Seite der ersten Dekorlage 3 des Dekorfolienkörpers 10 ist vorzugsweise zum Aufbringen des dynamisch ansteuerbaren Displays vorgesehen.

Weiter ist es möglich, dass die weitere Dekorlage 8 eine Trägerlage aufweist, welche bevorzugt auf der der ersten Dekorlage 3 abgewandten Seite der weiteren Dekorlage 8 angeordnet ist. Hierbei ist es möglich, dass die weitere Dekorlage 8 ein oder mehrere weitere Schichten aufweist, wobei die weitere Trägerlage der weiteren Dekorlage 8 ablösbar von den ein oder mehreren weiteren Schichten der weiteren Dekorlage 8 ist.

Fig. 11a zeigt die in Fig. 3 gezeigte Dekorfolie 1, wobei die Dekorfolie 1 auf der der ersten Dekorlage 3 gegenüberliegenden Seite der Trägerlage 2 eine optionale weitere Schutzschicht 99 aufweist. Die weitere Schutzschicht 99 ist insbesondere transparent. Die weitere Schutzschicht 99 umfasst oder besteht bevorzugt aus PU und/oder wird mittels PU-Überflutung auf die Trägerlage 2 aufgebracht. Weiter ist es möglich, dass die weitere Schutzschicht 99 ein Nasslack ist und/oder mittels Nasslackierung auf die Trägerlage 2 aufgebracht wird. Es ist auch möglich, dass die weitere Schutzschicht 99 eine Folie, insbesondere eine Transferlage einer Transferfolie oder eine Laminierfolie, ist und/oder mittels Folienapplikation auf die Trägerlage 2 aufgebracht wird. Weiter ist es denkbar, dass anstelle der Schutzschicht 99 die weitere Dekorlage 8 angeordnet ist.

Fig. 11b zeigt die in Fig. 11a gezeigte Dekorfolie 1, wobei die Dekorfolie 1 weiter eine Farbschicht 333 aufweist. Die Schutzschicht 99 ist optional. Die Farbschicht 333 ist dabei vollflächig auf die erste Dekorlage 3 und die ein oder mehreren Transparenzbereiche 4 aufgebracht. Vorzugsweise ist die Farbschicht 333 transparent oder semitransparent und/oder weist eine Transparenz im Bereich von 15 % bis 80 % auf. Die erste Dekorlage 3 umfasst oder besteht hierbei bevorzugt aus einer Sperrlackschicht 34. Hierbei ist die Sperrlackschicht 34 beispielsweise eine opake Farbschicht. Bei der Schicht 32 handelt es sich vorzugsweise um eine optionale Kleberschicht, welche insbesondere vollflächig transparent ist. Es ist auch denkbar, dass die Schicht 32 nicht vorhanden ist oder eine Pufferschicht ist, die bevorzugt vollflächig transparent ist. Die Farbschicht 33 dient hierbei insbesondere auch als eine Schutzschicht.

Hierbei ist es insbesondere möglich, dass die erste Dekorlage 3 aus einer Transferfolie auf die Trägerlage 2 aufgebracht wird. Insbesondere wird die Farbschicht 333 auf eine Ablöseschicht einer Trägerlage der Transferfolie aufgebracht und bevorzugt auf die Farbschicht 33 die Sperrlackschicht 34 aufgebracht. Hierbei ist es möglich, dass die ein oder mehreren Transparenzbereiche 4 bereits in der Transferfolie erzeugt werden. Es ist insbesondere auch möglich, dass die Farbschicht 333 von der weiteren Dekorlage 8 gebildet wird oder anstelle der Farbschicht 333 die weitere Dekorlage 8 aufgebracht wird.

Fig. 12 zeigt die in Fig. 6 gezeigte Dekorfolie 1, wobei die Dekorfolie 1 auf der der ersten Dekorlage 3 gegenüberliegenden Seite der Trägerlage 2 die zu Fig. 11a beschriebene weitere Schutzschicht 99 aufweist.

Fig. 13a und Fig. 13b zeigen schematisch Beispiele eines Displaykörpers 20. Insbesondere umfasst der Displaykörper 20 die in Fig. 3 gezeigte Dekorfolie 1, wobei die Dekorfolie 1 auf ein dynamisch ansteuerbares Display 7 aufgebracht ist. Wie in Fig. 13a und Fig. 13b gezeigt ist, ist es möglich, dass das dynamisch ansteuerbare Display 7 auf einer Seite der Dekorfolie 1 angeordnet ist, welche insbesondere ausgehend von einer Berührungsfläche zwischen der Trägerlage 2 und der ersten Dekorlage 3, der ersten Dekorlage 3 zugewandt oder abgewandt angeordnet ist.

Fig. 13c zeigt einen Displaykörper mit dem in Fig. 10c gezeigten Dekorfolienkörper 10. Beispielhaft ist das dynamisch ansteuerbare Display 7 auf der der weiteren Dekorlage 8 abgewandten Seite des Dekorfolienkörpers 10 aufgebracht.

In Fig. 13a, Fig. 13b und Fig. 13c ist das dynamisch ansteuerbare Display 7 insbesondere derart aufgebracht, dass das von dem dynamisch ansteuerbaren Display 7 abgestrahlte Licht in Richtung der Dekorfolie 1, insbesondere in Richtung der ein oder mehreren Transparenzbereiche 4, gerichtet ist.

Fig. 14a zeigt beispielhaft eine mögliche Draufsicht auf die Dekorfolie 1, den Dekorfolienkörper 10 und/oder den Displaykörper 20 im ausgeschalteten Zustand des dynamisch ansteuerbaren Displays 7.

Fig. 14a zeigt weiter das Motiv 21, welches insbesondere ein statisches Motiv ist. Das Motiv 21 wird hierbei insbesondere zumindest von Teilbereichen der ersten Dekorlage 3, der weiteren Dekorlage 8, den ein oder mehreren Transparenzbereichen 4 und/oder des dem dynamisch ansteuerbaren Displays 7, beispielsweise dem ersten, zweiten und/oder dritten Teilbereich, im ausgeschalteten Zustand erzeugt. Beispielsweise ist es denkbar, dass insbesondere das dynamisch ansteuerbare Display 7 im ausgeschalteten Zustand in den ein oder mehreren Transparenzbereichen 4 einen Schwarzton eines Holzmotivs bildet, wobei bevorzugt die erste Dekorlage und/oder die weitere Dekorlage 8 oder insbesondere verschiedene Dekorschichten der ersten Dekorlage beispielsweise unterschiedliche Brauntöne bilden. In dem hier gezeigten Beispiel handelt es sich also bei dem Motiv 21 vorzugsweise um ein Motiv mit dem optischen Erscheinungsbild von Holz. Die Dekorfolie 1 weist also beispielsweise ein erstes Dekor 31 in der Form eines Holzdekors, welches insbesondere bei einer Betrachtung im Auflicht für den menschlichen Betrachter sichtbar ist. Das erste Motiv 21 ist insbesondere ein statisches Motiv, welches höchstens oder nicht mehr als ein Bildwechsel pro Sekunde, bevorzugt höchstens oder nicht mehr als 5 Bildwechsel pro Sekunde, aufweist.

Mittels zumindest der ersten Dekorlage 3 und/oder dem ersten Dekor 31 ist also bevorzugt das erste Motiv 21 oder ein erster Teilbereich des ersten Motivs 21 in einen für das menschliche Auge ohne Zuhilfenahme optischer Hilfsmittel sichtbaren Zustand versetzbar, wie dies Fig. 14a zeigt, beispielsweise indem das dynamisch ansteuerbare Display ausgeschaltet wird und/oder im ausgeschalteten Zustand angebracht wird. Das erste Motiv 21 ist insbesondere im Auflicht für das menschliche Auge erkennbar, bevorzugt bei einer Betrachtung auf die Dekorfolie 1, den Dekorfolienkörper 10 und/oder den Displaykörper 20, insbesondere von einer Seite der ersten Dekorlage 3 ausgehend von der Trägerlage 2 oder dem dynamisch ansteuerbaren Display 7. Die Dekorfolie 1 und/oder der Dekorfolienkörper 10 wird dabei vorzugsweise nicht oder nur geringfügig durchleuchtet, bevorzugt nicht stärker von einer der Betrachtungsseite gegenüberliegenden Seite beleuchtet und/oder durchleuchtet als mit einer Leuchtdichte von 30 cd/m². Die Leuchtdichte des einfallenden Lichts auf die Dekorfolie 1 und/oder den Dekorfolienkörper von der Betrachtungsseite her beträgt bevorzugt nicht mehr als 10000 cd/m².

Fig. 14b zeigt den Displaykörper 20, wie dieser insbesondere in der Fig. 13a, Fig. 13b, Fig. 13c und/oder Fig. 14a gezeigt ist, im eingeschalteten Zustand des Displays 7. Es ist also möglich, dass das dynamisch ansteuerbare Display 7 in einen ausgeschalteten Zustand und einen eingeschalteten Zustand versetzbar ist. Im eingeschalteten Zustand des dynamisch ansteuerbaren Displays ist es beispielsweise möglich, dass das oben beschriebene, insbesondere in Fig. 14a gezeigte, erste Motiv 21 optisch verborgen ist. Beispielsweise zeigt sich nun das zweite Motiv 22, wie dies in Fig. 14b zu sehen ist.

Es ist also möglich, dass bei einer Betrachtung des Displaykörpers 20 von der Seite der Dekorfolie 1 der Displaybereich 5 im ausgeschalteten Zustand des dynamisch ansteuerbaren Displays 7 ein, insbesondere für das menschliche Auge erkennbares, erstes Motiv 21 aufweist, welches ein statisches Motiv ist. Wie dies insbesondere in Fig. 14a gezeigt ist, ist insbesondere das dynamisch ansteuerbare Display 7 dabei optisch verborgen.

Vorzugsweise ist, wie insbesondere in Fig. 14b gezeigt ist, das erste Dekor 31 in der Dekorfolie 1 vorhanden, insbesondere wobei das erste Dekor 31 und/oder das erste Motiv 21 durch das zweite Motiv 22 optisch verborgen werden kann oder wird.

Vorteilhafterweise ist es möglich, dass bei einer Betrachtung des Displaykörpers 20 von der Seite der Dekorfolie 1 der Displaybereich 5 im eingeschalteten Zustand des dynamisch ansteuerbaren Displays 7 ein, insbesondere für das menschliche Auge erkennbares, zweites Motiv 22 erzeugt. Das zweite Motiv 22 ist dabei insbesondere dynamisch veränderbar und/oder ein dynamisches Motiv. Beispielsweise ist das zweite Motiv 22 ein Video, ein Film und/oder eine Animation und/oder weist mindestens einen Bildwechsel pro Sekunde, bevorzugt mindestens oder mehr als fünf Bildwechsel pro Sekunde auf.

Der Betrachtungsabstand, vorzugsweise in welchem das zweite Motiv 22 erkennbar, bevorzugt besonders gut erkennbar ist und/oder das zweite Motiv 22 das erste Motiv 21 optisch verbirgt, ist vorzugsweise größer als 2,8 m. Weiter ist es möglich, dass bei einem Abstand von größer als 2,8 m das dynamisch ansteuerbare Display 7 optisch verborgen ist. Die Abmaße der ein oder mehreren Transparenzbereiche 4 liegen, insbesondere bei einem Abstand von mindestens 2,8 m, beispielsweise bevorzugt unter dem Auflösungsvermögen des menschlichen Auges.

Bevorzugt ist es auch denkbar, dass das zweite Motiv 21 insbesondere kein statisches Motiv aufweist und/oder dass insbesondere im eingeschalteten Zustand des dynamisch ansteuerbaren Displays 7 der Displaykörper 20 vorzugsweise kein statisches Motiv ausbildet oder erzeugt, insbesondere indem das erste Motiv 21 durch das zweite Motiv 22 optisch verborgen wird, wobei das zweite Motiv 22 bevorzugt ausschließlich ein oder mehrere dynamische Motive aufweist.

Der Betrachtungswinkel bei einer Betrachtung des Displaykörpers 20 von der Seite der Dekorfolie 1, in welchem das zweite Motiv 22 besonders gut erkennbar ist und/oder das zweite Motiv 22 das erste Motiv 21 für das menschliche Auge verbirgt, liegt insbesondere in einem Bereich von -80° bis 80°, weiter bevorzugt in einem Bereich von -70° bis 70°, vorzugsweise wobei der Betrachtungswinkel bei einer Betrachtung senkrecht auf die Dekorfolie 1 und/oder den Displaykörper 20 einen Winkel von 0° aufweist. Insbesondere bei einer solchen Betrachtung ist das zweite Motiv 22 besonders gut erkennbar und/oder das erste Motiv 21 optisch verborgen, insbesondere durch das zweite Motiv 22 optisch verborgen, und/oder das dynamisch ansteuerbare Display 7 im ausgeschalteten Zustand optisch verborgen. Die Dekorfolie 1 und/oder der Displaykörper 20 weisen hiermit insbesondere in Anwendungsgebieten mit einem wesentlichen Anteil derartiger Betrachtungseigenschaften vorteilhafte Eigenschaften auf.

Es ist hierbei zweckmäßig, dass im ausgeschalteten Zustand des dynamisch ansteuerbaren Displays 7 bei einer Betrachtung des Displaykörpers 20 von der Seite der Dekorfolie 1 der Displaykörper 20 im Displaybereich 5 und außerhalb der ein oder mehreren Transparenzbereiche 4 einen Reflexionsgrad im Bereich von 5 % bis 90 % aufweist und/oder innerhalb der ein oder mehreren Transparenzbereiche 4 einen Reflexionsgrad im Bereich von 20 % bis 80 % aufweist. Weiter ist es möglich, dass im ausgeschalteten Zustand des dynamisch ansteuerbaren Displays 7 bei einer Betrachtung des Displaykörpers 20 von der Seite der Dekorfolie 1 das Verhältnis des Reflexionsgrads im Displaybereich 5 außerhalb der ein oder mehreren Transparenzbereiche 4 zum Reflexionsgrad in den ein oder mehreren Transparenzbereichen 4 im ausgeschalteten Zustand des dynamisch ansteuerbaren Displays 7 in einem Bereich von 5 % bis 90 %, insbesondere in einem Bereich von 40 % bis 70 %, liegt. Mit einer Betrachtung von der Seite der Dekorfolie 1 ist hier insbesondere eine Betrachtung gemeint, die nicht auf die Rückseite des dynamisch ansteuerbaren Displays 7 stattfindet.

Das dynamisch ansteuerbare Display 7 ist bevorzugt ein Farbdisplay. Beispielsweise weist das dynamisch ansteuerbare Display Graustufen mit einer Farbtiefe von 14 Bit auf. Es ist auch möglich, dass das dynamisch ansteuerbare Display 7 eine Farbtiefe und/oder Graustufen im Bereich von 8 Bit bis 48 Bit aufweist.

Das dynamisch ansteuerbare Display 7 weist beispielsweise eine Leuchtdichte von 1000 cd/m² auf. Es hat sich insbesondere als vorteilhaft erwiesen, dass das dynamisch ansteuerbare Display 7 eine Leuchtdichte von mindestens 300 cd/m², insbesondere mindestens 500 cd/m², aufweist. Das dynamisch ansteuerbare Display 7 weist beispielsweise ein Kontrastverhältnis von 5000:1 auf. Insbesondere ist es zweckmäßig, dass das dynamisch ansteuerbare Display 7 ein Kontrastverhältnis von mindestens 2000:1 und/oder in einem Bereich von 2000:1 bis 10000:1 aufweist.

Die Abkürzung "cd" steht bevorzugt für Candela. Angaben hinsichtlich der Helligkeit und/oder Leuchtdichte werden vorzugsweise auch in Nits gemacht. Hierbei gilt insbesondere 1000 Nits = 1000 cd/m².

Insbesondere beziehen die Werte der Leuchtdichte und des Kontrastverhältnisses, auf eine Messung, bei welcher das Display noch nicht auf die Dekorfolie oder den Dekorfolienkörper aufgebracht ist.

Weiter ist es möglich, dass das dynamisch ansteuerbare Display 7 Leuchtelemente aufweist.

Zweckmäßigerweise sind die Leuchtelemente in einem Raster angeordnet, insbesondere mit einer Rasterweite in einem Bereich von 0,5 mm bis 10 mm, bevorzugt in einem Bereich von 1 mm bis 10 mm.

Insbesondere sind die Leuchtelemente teilweise oder vollständig überlappend mit den ein oder mehreren Transparenzbereichen 4 und/oder in den ein oder mehreren Transparenzbereichen 4 angeordnet. Weiter ist es möglich, dass der Abstand, bevorzugt gemessen von Mittelpunkt zu Mittelpunkt, zweier direkt benachbarter Leuchtelemente ein ganzzahliges Vielfaches der Rasterweite der ein oder mehreren Transparenzbereiche 4 oder die Rasterweite der ein oder mehreren Transparenzbereiche 4 ein ganzzahliges Vielfaches des Abstands zweier direkt benachbarter Leuchtelemente ist.

Weiter ist es möglich, dass das dynamisch ansteuerbare Display 7 eine Leuchtmatrix, bevorzugt aus Leuchtelementen, aufweist, insbesondere mit Leuchtelementen in der Form von Mini-LEDs und/oder Mikro-LEDs. Es ist weiter möglich, dass das dynamisch ansteuerbare Display 7 ein OLED-Display ist und insbesondere die das OLED ausbildenden Schichten auf einem flexiblen Substrat angeordnet sind. Dadurch ist es möglich, dass das Display dreidimensional oder 2,5D-dimensional verformbar ist und/oder verformt ist oder wird. Es ist auch möglich, dass das dynamisch ansteuerbare Display 7 Leuchtelemente in der Form von Pixeln aufweist. Beispielsweise weist das dynamisch ansteuerbare Display 7 hierbei eine Pixeldichte von 125910 px/m² auf.

Insbesondere ist es möglich, dass die Leuchtmatrix mit einer Vielzahl von Leuchtelementen eine äußere Form, insbesondere in der Form einer Rechteckform, als Freiform oder in der Form eines Kreises, einer Ellipse, eines Dreiecks oder eines Vielecks, aufweist. Die äußere Form ist insbesondere eine Umrissform um die äußeren Leuchtelemente der Leuchtmatrix herum. Zusätzlich oder alternativ ist es möglich, dass die äußere Form der Leuchtmatrix mittels einer zusätzlichen opaken Maskenschicht mit transparentem Durchbruch so abgedeckt ist oder wird, dass die Leuchtmatrix im Ergebnis bevorzugt das Erscheinungsbild der äußeren Form des transparenten Durchbruchs aufweist. Beispielsweise ist es denkbar, dass eine rechteckige Leuchtmatrix mit einer Maske mit dreieckigem transparentem Durchbruch abgedeckt wird oder ist, sodass die Leuchtmatrix im Ergebnis ein dreieckiges Erscheinungsbild aufweist. In anderen Worten ist oder wird die zusätzliche opake Maskenschicht insbesondere in einem Bereich angeordnet, welcher die äußere Form der Leuchtmatrix umfasst, bevorzugt wobei die zusätzliche opake Maskenschicht in diesem Bereich opak ist und innerhalb in einem von diesem Bereich eingeschlossenen Bereich transparent ist.

Die Leuchtelemente weisen vorzugsweise eine Breite im Bereich von 1,5 mm bis 3 mm und/oder eine Länge im Bereich von 1,5 mm bis 3 mm auf. Insbesondere weisen die Leuchtelemente jeweils eine Fläche im Bereich von 2,25 mm² bis 9 mm² auf.

Es ist insbesondere denkbar, dass das dynamisch ansteuerbare Display 7 eine Dichte der Leuchtelemente im Bereich von 4000 Leuchtelemente pro m² bis 12000 Leuchtelemente pro m² aufweist. Das Display weist bevorzugt eine Pixel-Periode und/oder einen Pitch von 2,82 mm auf. Insbesondere ist eine Pixel-Periode und/oder ein Pitch in einem Bereich von 1,5 mm bis 3 mm denkbar. Die Bildwiederholfrequenz des dynamisch ansteuerbaren Displays 7 liegt vorzugsweise in einem Bereich von 25 **Hz** bis 200 **Hz,** bevorzugt in einem Bereich von 40 **Hz** bis 100 Hz.

Das dynamisch ansteuerbare Display 7 weist beispielsweise ein Displayelement mit einer Länge von 496 mm, einer Breite von 496 mm und einer Tiefe von 55 mm auf. Denkbar ist auch, dass das dynamisch ansteuerbare Display 7 zumindest ein Displayelement mit einer Länge und/oder Breite im Bereich von 100 mm bis 1500 mm aufweist. Weiter ist es möglich, dass das zumindest eine Displayelement 7 eine Tiefe im Bereich von 5 mm bis 55 mm aufweist. Weiter ist es denkbar, dass das dynamisch ansteuerbare Display mehrere Displayelemente, insbesondere mit den genannten Abmaßen, umfasst. Das zumindest eine Displayelement ist insbesondere eben oder 2D- oder 2,5D- oder 3D-gekrümmt.

Die Auflösung des dynamisch ansteuerbaren Displays beträgt beispielsweise 176 x 176 px. Weiter ist es denkbar, dass die Auflösung des dynamisch ansteuerbaren Displays 7 und/oder des zumindest einen Displayelements vorzugsweise bei mindestens 24 px x 24 px oder in einem Bereich von 12 x 12 px bis 350 x 350 px liegt.

Vorzugsweise weist das dynamisch ansteuerbare Display 7 einen Abstand von der ersten Dekorlage 3 und/oder der Trägerlage 2 in einem Bereich von 3 mm bis 30 mm, vorzugsweise in einem Bereich von 5 mm bis 15 mm, auf, wobei der Abstand bevorzugt ein maximaler Abstand ist. Beispielsweise beträgt der Abstand, insbesondere der maximale Abstand, hier bevorzugt 5 mm.

Es ist auch möglich, dass der ausgeschaltete Zustand und der eingeschaltete Zustand des dynamisch ansteuerbaren Displays 7 mittels einer elektronischen Steuerkomponente aktivierbar und deaktivierbar ist und/oder dass das dynamisch ansteuerbare Display 7 mittels einer elektronischen Steuerkomponente dynamisch ansteuerbar ist.

Zweckmäßigerweise weist die Steuerkomponente ein Speichermedium auf, in welchem, insbesondere mittels eines digitalen Datensatzes, vorzugsweise in einem digitalen Videoformat, die Ansteuerung des dynamisch ansteuerbaren Displays 7 zur Erzeugung eines dynamischen Motivs, insbesondere des zweiten Motivs 22, definiert ist. Das digitale Videoformat liegt beispielsweise im Format MPEG, MOV, AVI, WMV, FLV, MKV vor.

Das zweite Motiv 22, insbesondere das Video, die Animation und/oder der Film, ist bevorzugt auf die Dekorfolie 1 und/oder den Dekorfolienkörper 10 optimiert. Es ist insbesondere möglich, dass der digitale Datensatz Dekordaten über die Dekorfolie 1 und/oder den Dekorfolienkörper 10 berücksichtigt und/oder umfasst, welche insbesondere zur Ansteuerung des dynamisch ansteuerbaren Displays 7 verwendet werden. Die Dekordaten umfassen und/oder berücksichtigen beispielsweise Werte der Transparenz und/oder der Farbe in verschiedenen Bereichen der Dekorfolie 1 und/oder des Dekorfolienkörpers 10. Hierbei ist es möglich, dass die Dekordaten und/oder die verschiedenen Bereiche Leuchtelementen zugeordnet werden, wodurch insbesondere die Leuchtdichte und/oder Farbe der Leuchtelemente entsprechend der jeweiligen Dekordaten angepasst wird.

Weiter ist es möglich, dass die Steuerkomponente zumindest einen Sensor, insbesondere zumindest einen Helligkeitssensor, Annäherungssensor und/oder Touchsensor umfasst. Es ist beispielsweise möglich, dass mittels des zumindest einen Sensors ein Signal erzeugt und verarbeitet wird, derart, dass die Steuerkomponente das dynamisch ansteuerbare Display 7 einschaltet und insbesondere das dynamisch ansteuerbare Display 7 mittels des digitalen Datensatzes auf dem Speichermedium derart ansteuert, dass das zweite Motiv 22, vorzugsweise in der Form eines dynamischen Motivs, erzeugt wird und/oder das dynamisch ansteuerbare Display 7 ausgeschaltet wird.

Weiter ist es, insbesondere für den Fall, dass die Steuerkomponente einen Touchsensor aufweist, möglich, dass das erste Dekor 3, das erste Motiv 21 und/oder das zweite Motiv 22 ein oder mehrere Muster, bevorzugt Symbole, aufweisen oder beinhalten, vorzugsweise welche auf entsprechende Touchfunktionen hinweisen. Insbesondere ist es möglich, im zweiten Motiv 22 ein Symbol vorzusehen, welches das Stoppen und Weiterablaufen des zweiten Motivs 22 oder andere Steuermöglichkeiten anzeigen und bevorzugt mittels Touchfunktion ermöglichen.

Insbesondere ist oder wird der Touchsensor vollständig oder nur teilweise überlappend mit dem dynamisch ansteuerbaren Display 7 angeordnet oder alternativ nicht mit dem dynamisch ansteuerbaren Display 7 überlappend angeordnet, also vorzugsweise benachbart zu dem dynamisch ansteuerbaren Display 7 angeordnet. Weiter ist es möglich, dass benachbart zu dem dynamisch ansteuerbaren Display 7 ein Steuerbereich vorgesehen ist, in welchem Touchfunktionen vorliegen, die insbesondere zur Steuerung des dynamisch ansteuerbaren Displays 7 und/oder zur Steuerung anderer Funktionen dienen können, beispielsweise für den Fall, dass der Touchsensor vorzugsweise benachbart zum dynamisch ansteuerbaren Display 7 angeordnet ist.

Fig. 14c zeigt insbesondere, dass im eingeschalteten Zustand des dynamisch ansteuerbaren Displays 7, der Displaykörper 20 zumindest bereichsweise das erste Motiv 21 und zumindest bereichsweise das zweite Motiv 22 zeigen kann oder zeigt. Es ist also auch möglich, dass der Displaybereich 5 im eingeschalteten Zustand des dynamisch ansteuerbaren Displays 7 ein statisches und ein dynamisches Motiv aufweist. Somit ist es möglich, dass der Displaybereich 5 im eingeschalteten Zustand des dynamisch ansteuerbaren Displays 7 in einem ersten Bereich das erste Motiv 21 oder einen Teilbereich des ersten Motivs 21 und in einem zweiten Bereich das zweite Motiv 22 oder einen Teilbereich des zweiten Motivs 22 aufweist, wobei der erste und der zweite Bereich vorzugsweise nicht überlappen.

Fig. 15a zeigt schematisch einen Displaykörper 20, welcher bevorzugt mittels Spritzguss und/oder Spritzgießen hergestellt ist oder wird. Hierbei wird insbesondere der Abstandskörper 300 mittels Spritzgießen zwischen die erste Dekorlage 3 und die weitere Dekorlage 8 eingespritzt. Der zu Fig. 15a gezeigte Displaykörper 20 ist oder wird insbesondere wie in Fig. 1d beschrieben hergestellt. Vorzugsweise bildet die weitere Dekorlage 8 eine einem Betrachter im Gebrauch des Displaykörpers zugewandte Seite und/oder Vorderseite des Displaykörpers.

Zur Herstellung des Dekorfolienkörpers 20 ist insbesondere ein Verfahren mit den folgenden Schritten denkbar, insbesondere in der angegebenen Reihenfolge:
- Bereitstellen der Dekorfolie 1 mit der ersten Dekorlage 3,
- Erzeugen der ein oder mehreren Transparenzbereiche 4 in der Dekorfolie 1 und/oder der ersten Dekorlage 3,
- Bereitstellen einer weiteren Dekorfolie mit der weiteren Dekorlage 8;
- Einlegen der ersten Dekorlage 3 und der weiteren Dekorlage 8 in eine Spritzgussform mit einer ersten und zweiten Formhälfte, die gemeinsam eine Kavität zum Abformen des Dekorfolienkörpers 20 ausbilden, wobei die Dekorfolie 1 an einer ersten Wandung der Kavität und die weitere Dekorfolie an einer zweiten, der ersten Wandung gegenüber liegenden Wandung der Kavität angebracht wird;
- Hinterspritzen der Dekorfolie 1 und der weiteren Dekorfolie mit einer Spritzgussmasse, so dass die Dekorfolie 1 eine erste Oberfläche und die zweite Dekorfolie eine zweite, der ersten Oberfläche gegenüberliegende Oberfläche des Dekorfolienkörpers 20 ausbildet.

In einem weiteren Schritt wird bevorzugt das dynamisch ansteuerbare Display 7 mit dem Dekorfolienkörper 10 verbunden. Es ist auch denkbar, dass das dynamisch ansteuerbare Display 7 zumindest bereichsweise die zweite Wandung darstellt und beim Hinterspritzen mit dem Dekorfolienkörper, insbesondere mit der zweiten Oberfläche des Dekorfolienkörpers 10, verbunden wird.

Es ist möglich, dass die weitere Dekorlage 8 ähnlich wie die erste Dekorlage 3 ausgebildet ist. Insbesondere weist die weitere Dekorlage 8 bevorzugt zumindest eine Lage aus einem farblosen oder farbigen transparenten oder transluzenten thermoplastischen Material auf, insbesondere aus ABS, ABS/PC, PC/ABS, PC, PP oder PMMA. Diese dient bevorzugt als Trägerlage für die ein oder mehreren weiteren Schichten, insbesondere in der Form von ein oder mehreren Dekorschichten, der weiteren Dekorlage 8. Hinsichtlich der Ausgestaltung der ein oder mehreren weiteren Dekorschichten ist insbesondere auf die obigen Ausführungen verwiesen.

Bevorzugt umfassen die ein oder mehreren weiteren Schichten, insbesondere in der Form von ein oder mehreren Dekorschichten, der weiteren Dekorlage 8 wenigstens eine hochglänzende oder matte und/oder mit einer taktilen Struktur versehene Schutzlackschicht. Die Schutzlackschicht ist bevorzugt farblos oder farbig transluzent oder transparent oder weist auch opake Bereiche auf.

Weiter ist es möglich, dass die erste und/oder weitere Dekorlage 1, 8 vor dem Einlegen in die Spritzgussform vorzugsweise tiefgezogen wird. Dadurch können bevorzugt sogenannte Inserts erzeugt werden, die vor dem Hinterspritzen insbesondere vergleichsweise so stark dreidimensional verformt werden können, wie es während dem Hinterspritzen oftmals nicht möglich ist.

Hierbei werden beispielsweise übliche Tiefziehverfahren angewendet. Es ist möglich, dass die erste und/oder weitere Dekorlage 1, 8 als Bogenware bereitgestellt und in ein Tiefziehwerkzeug, welches die gewünschte Endkontur aufweist, eingelegt wird. Durch die Applikation von Wärme, bevorzugt einer Temperatur von 80°C bis 200°C, wird die erste und/oder weitere Dekorlage 1, 8 vorzugsweise verformbar gemacht. Insbesondere wird die erste/und oder weitere Dekorlage anschließend durch Applikation von Vakuum und/oder durch Applikation eines Formstempels und/oder Luftüberdruck an die Form des Tiefziehwerkzeuges angepasst und damit bevorzugt in die gewünschte Endkontur gebracht. Beim Abkühlen härtet das Material der ersten und/oder weiteren Dekorlage 1, 8 dann vorzugsweise wieder aus, so dass diese bevorzugt die Endkontur beibehält.

Vorzugsweise wird zum Ausbilden der taktilen Struktur beim Hinterspritzen ein insbesondere taktiles Oberflächenrelief in die von der Spritzgussmasse abgewandte Oberfläche der weiteren Dekorlage 8 abgeformt, insbesondere aufgrund einer Musterschicht, die zwischen der Wandung der Kavität und einer Trägerfolie, der weiteren Trägerlage der weiteren Dekorlage 8 oder der weiteren Dekorlage 8 angeordnet ist.

Die taktile Struktur bildet sich also vorzugsweise während des Spritzgießens, wenn die weitere Dekorlage 8 aufgrund der Hitze und des Drucks der eingespritzten Spritzgussmasse plastisch verformbar ist. Die Musterschicht ist oder wird bevorzugt direkt von der Wandung der Kavität gebildet oder vorzugsweise durch einen separaten Einleger, insbesondere durch die Trägerfolie, und/oder weitere Trägerlage der weiteren Dekorlage 8 selbst, bereitgestellt.

Fig. 15b zeigt einen Displaykörper, welcher bevorzugt hergestellt ist, indem das dynamisch ansteuerbare Display 7 auf die Dekorfolie 1 aufgebracht ist. Es ist insbesondere möglich, dass das dynamisch ansteuerbare Display 7 an die erste Dekorlage 3 mittels mechanischer Befestigung, beispielsweise mittels Clips und/oder Schrauben und/oder mittels Hinterspritzen und/oder Umspritzen befestigt ist oder wird. Weiter ist es denkbar, dass das dynamisch ansteuerbare Display 7 an die Trägerlage 2 mittels mechanischer Befestigung, beispielsweise mittels Clips und/oder Schrauben und/oder mittels Hinterspritzen und/oder Umspritzen befestigt ist.

Ein Displaykörper 20 und/oder ein Dekorfolienkörper 10 wird insbesondere verwendet als einer oder in einem der folgenden Gegenstände:
- Fahrzeugaußenteil, insbesondere Vorderseitenverkleidung, vorzugsweise Kühlergrill, Seitenverkleidung, vorzugsweise B-Säule, Rückseitenverkleidung, Beplankung und/oder Dachaufsatz, bevorzugt als Werbeanzeige, Informationsanzeige und/oder Warnhinweis,
- Fahrzeuginnenteil, insbesondere als Armaturenbrett, Armaturenbrettelement, Türverkleidung, Türverkleidungselement, Warnhinweis und/oder Informationsanzeige,
- Haushaltsgerät, insbesondere Kühlschrank, Waschmaschine, Geschirrspüler und/oder Herd
- Möbelstück,
- Informationsanzeige, insbesondere Werbeanzeige.

### Bezugszeichenliste:

- 1: Dekorfolie
- 2: Trägerlage
- 3: erste Dekorlage
- 31: erstes Dekor
- 310: zweites Dekor
- 311: Schutzschicht
- 312: Dekorschicht
- 3121, 3122, 3123, 333: Farblackschichten
- 3124, 3125, 3126: Druckschicht
- 313: Kleberschicht
- 314: Metallische Schicht
- 315: Lackschicht
- 316: weitere Dekorschicht
- 32: Kleberschicht
- 33: Pufferschicht
- 34: Sperrlackschicht
- 4: Transparenzbereich
- 5: Displaybereich
- 6: Laser
- 7: Display
- 8: weitere Dekorlage
- 91, 92, 93: Schritte
- 10: Dekorfolienkörper
- 20: Displaykörper
- 21: erstes Motiv
- 22: zweites Motiv
- 210: Steuerkomponente

## Patentansprüche

1. Dekorfolie (1) zum Aufbringen auf ein dynamisch ansteuerbares Display (7), umfassend:
- eine Trägerlage (2),
- eine erste Dekorlage (3),
wobei die erste Dekorlage (3) in einem Displaybereich (5) ein erstes Dekor (31) und ein oder mehrere Transparenzbereiche (4) aufweist, in denen die Dekorfolie (1) für von dem dynamisch ansteuerbaren Display (7) abgestrahltes Licht durchlässig ist,
wobei mittels der ein oder mehreren Transparenzbereiche (4) die erste Dekorlage (3) eine Lochmaske bildet,
und wobei die ein oder mehreren Transparenzbereiche (4), insbesondere in einer Draufsicht auf die erste Dekorlage (3), jeweils eine Fläche in einem Bereich von 0,04 mm² bis 0,5 mm² aufweisen und/oder die ein oder mehreren Transparenzbereiche (4) einen Anteil in einem Bereich von 0,5 % bis 3 % der Gesamtfläche des Displaybereichs (5) bedecken.

2. Dekorfolie (1) nach Anspruch 1,
**dadurch gekennzeichnet,**
**dass** die erste Dekorlage (3) und/oder das erste Dekor (31), insbesondere im Displaybereich (5), bevorzugt außerhalb der ein oder mehreren Transparenzbereiche (4), zumindest bereichsweise oder vollflächig opak oder semitransparent ist
und/oder dass die erste Dekorlage (3) und/oder das erste Dekor, vorzugsweise zumindest in dem Displaybereich (5), ein erstes Motiv oder einen ersten Teilbereich eines ersten Motivs bereitstellt, wobei das erste Motiv ein statisches Motiv ist.

3. Dekorfolie (1) nach einem der Ansprüche 1 oder 2,
**dadurch gekennzeichnet,**
**dass** die ein oder mehreren Transparenzbereiche (4), insbesondere bei einer Betrachtung in einer Draufsicht auf die Dekorfolie (1) und/oder auf die erste Dekorlage (3), in einem Raster angeordnet sind,
insbesondere wobei das Raster der ein oder mehreren Transparenzbereiche (4) eine Rasterweite in einem Bereich von 1 mm bis 5 mm aufweist und insbesondere die ein oder mehreren Transparenzbereiche (4) entlang zueinander parallel angeordneter Reihen angeordnet sind, wobei in jeder zweiten Reihe angeordnete Transparenzbereiche (4) in Richtung der Reihe zu Transparenzbereichen (4) der jeweils benachbarten Reihen um die Hälfte der Rasterweite versetzt angeordnet sind
und/oder dass die ein oder mehreren Transparenzbereiche (4), insbesondere in einer Draufsicht auf die erste Dekorlage (3), jeweils eine Kreisfläche bilden und/oder einen Durchmesser im Bereich von 0,25 mm bis 0,75 mm aufweisen.

4. Dekorfolie (1) nach einem der vorhergehenden Ansprüche,
**dadurch gekennzeichnet,**
**dass** die Dekorfolie (1) und/oder die erste Dekorlage (3) ein Verhältnis der Transparenz im sichtbaren Wellenlängenbereich im Displaybereich (5) außerhalb der ein oder mehreren Transparenzbereiche (4) zur Transparenz im sichtbaren Wellenlängenbereich der ein oder mehreren Transparenzbereiche (4) in einem Bereich von 5 % bis 90 % aufweist
und/oder dass die Dekorfolie (1) und/oder die erste Dekorlage (3) im Displaybereich (5) und außerhalb der ein oder mehreren Transparenzbereiche (4) einen Reflexionsgrad im Bereich von 5 % bis 90 % aufweist und/oder innerhalb der ein oder mehreren Transparenzbereiche (4) einen Reflexionsgrad im Bereich von 20 % bis 80 % aufweist
und/oder dass die Dekorfolie (1), insbesondere bei einer Betrachtung auf eine der Trägerlage (2) abgewandte Seite der Dekorfolie (1), und/oder die erste Dekorlage (3) ein Verhältnis des Reflexionsgrads im Displaybereich (5) außerhalb der ein oder mehreren Transparenzbereiche (4) zum Reflexionsgrad der ein oder mehreren Transparenzbereiche (4) in einem Bereich von 20 % bis 80 % aufweist.

5. Dekorfolie (1) nach einem der vorhergehenden Ansprüche,
**dadurch gekennzeichnet ,**
**dass** die erste Dekorlage (3), insbesondere zur Ausbildung des ersten Dekors (31), ein oder mehrere erste Dekorschichten aufweist
insbesondere dass zumindest eine erste Dekorschicht der ein oder mehreren ersten Dekorschichten eine Farbschicht, insbesondere in der Form einer Hintergrundfarbschicht, ist
und bevorzugt dass zumindest eine zweite Dekorschicht der ein oder mehreren ersten Dekorschichten eine opake Farbschicht und/oder eine metallische Schicht ist, wobei die zumindest eine zweite Dekorschicht der ein oder mehreren ersten Dekorschichten bevorzugt auf der der Trägerlage (2) abgewandten Seite der zumindest einen ersten Dekorschicht der ein oder mehreren ersten Dekorschichten angeordnet ist.

6. Dekorfolie (1) nach einem der vorhergehenden Ansprüche,
**dadurch gekennzeichnet ,**
**dass** die erste Dekorlage (3) auf ihrer der Trägerlage (2) abgewandten äußeren Seite eine Schutzschicht (311) aufweist
und/oder dass die erste Dekorlage (3) auf ihrer der Trägerlage (2) zugewandten äußeren Seite eine Kleberschicht (313) aufweist und/oder
**dass** die Dekorfolie (1) zwischen der ersten Dekorlage (3) und der Trägerlage (2) eine Pufferschicht umfasst, insbesondere welche vollflächig transparent ist und/oder
**dass** die erste Dekorlage (3) zumindest eine metallische Schicht aufweist,
insbesondere welche zumindest bereichsweise und/oder vollflächig transparent, semitransparent oder opak ist
insbesondere wobei die zumindest eine metallische Schicht zumindest bereichsweise in der Form einer Inselschicht aufgebracht ist, vorzugsweise mittels Bedampfung, wobei die metallische Schicht bevorzugt Indium umfasst oder daraus besteht.

7. Dekorfolienkörper (10) zum Aufbringen auf ein dynamisch ansteuerbares Display (7) mit einer Dekorfolie (1) nach einem der vorhergehenden Ansprüche,
**dadurch gekennzeichnet ,**
**dass** der Dekorfolienkörper (10) eine weitere Dekorlage (8) umfasst, insbesondere wobei die weitere Dekorlage (8) auf einer der Trägerlage (2) abgewandten Seite der ersten Dekorlage (3) oder einer der ersten Dekorlage (3) abgewandten Seite der Trägerlage (2) aufgebracht ist
und/oder die weitere Dekorlage (8) vollflächig auf die erste Dekorlage (3) aufgebracht ist und/oder die erste Dekorlage (3) überdeckt und/oder die ein oder mehreren Transparenzbereiche (4) überdeckt
und/oder wobei die weitere Dekorlage (8) zumindest bereichsweise oder vollflächig semitransparent ist und/oder zumindest bereichsweise oder vollflächig eine Transparenz im für das menschliche Auge sichtbaren Wellenlängenbereich in einem Bereich von 5% bis 100%, insbesondere in einem Bereich von 20 % bis 80 %, aufweist
und die weitere Dekorlage (8) insbesondere ein zweites Dekor aufweist, wobei das zweite Dekor, vorzugsweise zumindest in dem Displaybereich (5), ein statisches Motiv oder einen zweiten Teilbereich des ersten Motivs bereitstellt und/oder die weitere Dekorlage (8), insbesondere zur Ausbildung des zweiten Dekors, vorzugsweise ein oder mehrere Dekorschichten umfasst
und/oder wobei zwischen der weiteren Dekorlage (8) und der ersten Dekorlage (3) und/oder der Trägerlage (2) ein Abstandskörper (300) angeordnet ist insbesondere wobei
der Abstandskörper (300) eine Spritzgussmasse umfasst oder daraus besteht.

8. Displaykörper (20) umfassend ein dynamisch ansteuerbares Display (7) und eine Dekorfolie (1) nach einem der Ansprüche 1 bis 6 oder umfassend ein dynamisch ansteuerbares Display (7) und einen Dekorfolienkörper (10) nach Anspruch 7 insbesondere wobei das dynamisch ansteuerbare Display (7) in einen ausgeschalteten Zustand und einen eingeschalteten Zustand versetzbar ist vorzugsweise wobei im ausgeschalteten Zustand des dynamisch ansteuerbaren Displays (7) bei einer Betrachtung des Displaykörpers (20) von der Seite der Dekorfolie (1) der Displaykörper (20) im Displaybereich (5) und außerhalb der ein oder mehreren Transparenzbereiche (4) einen Reflexionsgrad im Bereich von 5 % bis 90 % aufweist und/oder innerhalb der ein oder mehreren Transparenzbereiche (4) einen Reflexionsgrad im Bereich von 20 % bis 80 % aufweist
und/oder wobei im ausgeschalteten Zustand des dynamisch ansteuerbaren Displays (7) bei einer Betrachtung des Displaykörpers (20) von der Seite der Dekorfolie (1) das Verhältnis des Reflexionsgrads im Displaybereich (5) außerhalb der ein oder mehreren Transparenzbereiche (4) zum Reflexionsgrad in den ein oder mehreren Transparenzbereichen (4) in einem Bereich von 5 % bis 90 %, insbesondere in einem Bereich von 40 % bis 70 %, liegt.

9. Displaykörper (20) nach Anspruch 8,
**dadurch gekennzeichnet ,**
**dass** bei einer Betrachtung des Displaykörpers (20) von der Seite der Dekorfolie (1) der Displaybereich (5) im ausgeschalteten Zustand des dynamisch ansteuerbaren Displays (7) ein, insbesondere für das menschliche Auge erkennbares, erstes Motiv (21) ausbildet, welches ein statisches Motiv ist, vorzugsweise wobei das dynamisch ansteuerbare Display (7) optisch verborgen ist
und/oder dass bei einer Betrachtung des Displaykörpers (20) von der Seite der Dekorfolie (1) der Displaybereich (5) im eingeschalteten Zustand des dynamisch ansteuerbaren Displays (7) ein, insbesondere für das menschliche Auge erkennbares, zweites Motiv (22) aufweist, welches dynamisch veränderbar und/oder ein dynamisches Motiv ist, vorzugsweise wobei das erste Motiv (21) optisch verborgen ist.

10. Displaykörper (20) nach einem der Ansprüche 8 bis 9,
**dadurch gekennzeichnet,**
**dass** das dynamisch ansteuerbare Display (7) eine Leuchtdichte von mindestens 300 cd/m², insbesondere mindestens 500 cd/m², aufweist.

11. Displaykörper (20) nach einem der Ansprüche 8 bis 10,
**dadurch gekennzeichnet,**
**dass** das dynamisch ansteuerbare Display (7) Leuchtelemente (200) aufweist die Leuchtelemente (200) teilweise oder vollständig überlappend mit den ein oder mehreren Transparenzbereichen (4) und/oder in den ein oder mehreren Transparenzbereichen (4) angeordnet sind, und/oder wobei
die Leuchtelemente (200) eine Breite im Bereich von 1,5 mm bis 3 mm und/oder eine Länge im Bereich von 1,5 mm bis 3 mm aufweisen und/oder jeweils eine Fläche im Bereich von 2,25 mm² bis 9 mm² aufweisen
und/wobei dass die Leuchtelemente (200) in einem Raster angeordnet sind, insbesondere mit einer Rasterweite in einem Bereich von 0,5 mm bis 10 mm, bevorzugt in einem Bereich von 1 mm bis 10 mm.

12. Displaykörper (20) nach einem der Ansprüche 8 bis 11,
**dadurch gekennzeichnet,**
**dass** das dynamisch ansteuerbare Display (7) eine Leuchtmatrix, bevorzugt aus Leuchtelementen, aufweist, insbesondere mit Leuchtelementen (200) in der Form von Mini-LEDs und/oder Mikro-LEDs
und/oder dass das dynamisch ansteuerbare Display (7) Leuchtelemente (200) in der Form von Pixeln aufweist
und/oder dass das dynamisch ansteuerbare Display (7) eine Dichte der Leuchtelemente (200) im Bereich von 4000 Leuchtelemente pro m² bis 12000 Leuchtelemente pro m² aufweist
und/oder dass das dynamisch ansteuerbare Display (7) eine Farbtiefe und/oder Graustufen im Bereich von 8 Bit bis 48 Bit aufweist
und/oder dass das dynamisch ansteuerbare Display (7) einen Abstand von der ersten Dekorlage (3) und/oder der Trägerlage (2) in einem Bereich von 3 mm bis 30 mm, vorzugsweise in einem Bereich von 5 mm bis 15 mm, aufweist.

13. Displaykörper (20) nach einem der Ansprüche 8 bis 12,
**dadurch gekennzeichnet,**
**dass** der ausgeschaltete Zustand und der eingeschaltete Zustand des dynamisch ansteuerbaren Displays (7) mittels einer elektronischen Steuerkomponente aktivierbar und deaktivierbar ist und/oder dass das dynamisch ansteuerbare Display (7) mittels einer elektronischen Steuerkomponente dynamisch ansteuerbar ist
insbesondere wobei die Steuerkomponente ein Speichermedium aufweist, in welchem, insbesondere mittels eines digitalen Datensatzes, vorzugsweise in einem digitalen Videoformat, die Ansteuerung des dynamisch ansteuerbaren Displays (7) zur Erzeugung eines dynamischen Motivs, insbesondere des zweiten Motivs, definiert ist
und/oder wobei die Steuerkomponente (210) zumindest einen Sensor, insbesondere zumindest einen Helligkeitssensor, Annäherungssensor und/oder Touchsensor umfasst.

14. Verfahren zum Herstellen einer Dekorfolie (1), insbesondere nach einem der Ansprüche 1 bis 6, zum Aufbringen auf ein dynamisch ansteuerbares Display (7) umfassend die folgenden Schritte, vorzugsweise in der angegebenen Reihenfolge:
- Bereitstellen einer Trägerlage (2),
- Aufbringen einer ersten Dekorlage (3) auf die Trägerlage (2), wobei die erste Dekorlage (3) ein erstes Dekor (8) in einem Displaybereich (5) aufweist,
- Erzeugen von ein oder mehreren Transparenzbereichen (4) in dem Displaybereich (5), wobei die Dekorfolie (1) in den ein oder mehreren Transparenzbereichen (4) für von dem dynamisch ansteuerbaren Display (7) abgestrahltes Licht durchlässig ist,
wobei mittels der ein oder mehreren Transparenzbereiche (4) die erste Dekorlage (3) eine Lochmaske bildet,
und wobei die ein oder mehreren Transparenzbereiche (4), insbesondere in einer Draufsicht auf die erste Dekorlage (3), jeweils eine Fläche in einem Bereich von 0,04 mm² bis 0,5 mm² aufweisen und/oder die ein oder mehreren Transparenzbereiche (4) einen Anteil in einem Bereich von 0,5 % bis 3 % der Gesamtfläche des Displaybereichs (5) bedecken.

15. Verfahren nach Anspruch 14,
**dadurch gekennzeichnet,**
**dass** die ein oder mehreren Transparenzbereiche (4) mittels Laser und/oder Lift-Off erzeugt werden
und/oder dass die erste Dekorlage (3), insbesondere zur Herstellung des ersten Dekors (31), in einem Druckverfahren, insbesondere in einem Tiefdruckverfahren, hergestellt wird
und/oder dass die erste Dekorlage (3) auf die Trägerlage (2) geprägt und/oder gedruckt wird.

16. Verfahren, insbesondere umfassend ein Verfahren nach einem der Ansprüche 14 bis 15, zum Herstellen eines Dekorfolienkörpers (10), vorzugsweise nach Anspruch 7, zum Aufbringen auf ein dynamisch ansteuerbares Display (7), wobei die erste Dekorlage (3) mit einer weiteren Dekorlage (8) verbunden wird, insbesondere mittels Heißprägen, Heißlaminieren, Kaltprägen, Laminieren und/oder Spritzgießen, insbesondere Inmould-Decoration und/oder Hinterspritzen vorzugsweise wobei zwischen die erste Dekorlage (3) und die weitere Dekorlage (8) ein Abstandskörper (300) mittels einer Spritzgussmasse eingespritzt wird und/oder die erste Dekorlage (3) gemeinsam mit der weiteren Dekorlage (8) von einer Spritzgussmasse hinterspritzt wird, insbesondere wobei sich die erste Dekorlage (3) und die weitere Dekorlage (8) verbinden
und/oder dass die weitere Dekorlage (8) vollflächig auf die erste Dekorlage (3) aufgebracht wird und/oder die erste Dekorlage (3) überdeckt und/oder die ein oder mehreren Transparenzbereiche (4) überdeckt.

17. Verfahren, insbesondere umfassend ein Verfahren nach einem der Ansprüche 14 bis 16, zum Herstellen eines Displaykörpers (20), vorzugsweise nach einem der Ansprüche 8 bis 13, umfassend die folgenden Schritte:
- Bereitstellen einer Dekorfolie (1) nach einem der Ansprüche 1 bis 6 oder eines Dekorfolienkörpers (20) nach Anspruch 7
- Verbinden der Dekorfolie (1) oder des Dekorfolienkörpers (20) mit einem dynamisch ansteuerbaren Display (7), insbesondere mittels Heißprägen, Heißlaminieren, Kaltprägen, Laminieren und/oder Spritzgießen, insbesondere Inmould-Decoration und/oder Hinterspritzen.

## Claims

1. Decorative film (1) for application onto a dynamically controllable display (7), comprising:
- a carrier layer (2),
- a first decorative layer (3),
wherein the first decorative layer (3) has, in a display region (5), a first decoration (31) and one or more transparent regions (4) in which the decorative film (1) is penetrable by light emitted from the dynamically controllable display (7),
wherein the first decorative layer (3) forms a shadow mask by means of the one or more transparent regions (4),
and wherein the one or more transparent regions (4), in particular in a top view of the first decorative layer (3), each have a surface area in a range of from 0.04mm² to 0.5mm² and/or the one or more transparent regions (4) cover a portion in a range of from 0.5% to 3% of the total surface area of the display region (5).

2. Decorative film (1) according to claim 1,
**characterised in that**
the first decorative layer (3) and/or the first decoration (31), in particular in a display region (5), preferably outside the one or more transparent regions (4), is opaque or semi-transparent at least in regions or all over,
and/or the first decorative layer (3) and/or the first decoration, preferably at least in the display region (5), provides a first motif or a first partial region of a first motif, wherein the first motif is a static motif.

3. Decorative film (1) according to one of claims 1 or 2,
**characterised in that**
the one or more transparent regions (4), in particular in a top view of the decorative film (1) and/or of the first decorative layer (3), are arranged in a screen,
in particular wherein the screen of the one or more transparent regions (4) has a screen ruling in a range of from 1mm to 5mm and in particular the one or more transparent regions (4) are arranged in rows running parallel to one another, wherein transparent regions (4) arranged in every second row are offset by half the screen ruling in the direction of the row relative to the transparent regions (4) of the respective adjacent rows,
and/or the one or more transparent regions (4), in particular in a top view of the first decorative layer (3), each form a circular area and/or have a diameter in the range of from 0.25mm to 0.75mm.

4. Decorative film (1) according to one of the preceding claims,
**characterised in that**
the decorative film (1) and/or the first decorative layer (3) has a ratio of transparency in the visible wavelength range in the display region (5) outside the one or more transparent regions (4) to the transparency in the visible wavelength range of the one or more transparent regions (4) in a range of from 5% to 90%,
and/or the decorative film (1) and/or the first decorative layer (3) has a reflectance in the range of from 5% to 90% in the display region (5) and outside the one or more transparent regions (4), and/or has a reflectance in the range of from 20% to 80% inside the one or more transparent regions (4),
and/or the decorative film (1), in particular when viewed on a side of the decorative film (1) facing away from the carrier layer (2), and/or the first decorative layer (3) has a ratio of the reflectance in the display region (5) outside the one or more transparent regions (4) to the reflectance of the one or more transparent regions (4) in a range of from 20% to 80%.

5. Decorative film (1) according to one of the preceding claims,
**characterised in that**
the first decorative layer (3), in particular to form the first decoration (31), has one or more first decorative coatings,
in particular that at least one first decorative coating of the one or more first decorative coatings is a colour coating, in particular in the form of a background colour coating,
and preferably that at least one second decorative coating of the one or more first decorative coatings is an opaque colour coating and/or a metallic coating, wherein the at least one second decorative coating of the one or more first decorative coatings is preferably arranged on the side of the at least one first decorative coating of the one or more first decorative coatings facing away from the carrier layer (2).

6. Decorative film (1) according to one of the preceding claims,
**characterised in that**
the first decorative layer (3) has a protective layer (311) on its outer side facing away from the carrier layer (2),
and/or the first decorative layer (3) has an adhesive layer (313) on its outer side facing the carrier layer (2) and/or
the decorative film (1) comprises a buffer layer between the first decorative layer (3) and the carrier layer (2), in particular which is completely transparent and/or
the first decorative layer (3) has at least one metallic coating,
in particular which is transparent, semi-transparent or opaque at least in regions and/or completely,
in particular wherein the at least one metallic coating is applied at least in regions in the form of an island coating, preferably by means of steaming, wherein the metallic coating preferably comprises indium or consists of it.

7. Decorative film body (10) for application onto a dynamically controllable display (7) having a decorative film (1) according to one of the preceding claims,
**characterised in that**
the decorative film body (10) comprises a further decorative layer (8),
in particular wherein the further decorative layer (8) is applied to a side of the first decorative layer (3) facing away from the carrier layer (2) or a side of the carrier layer (2) facing away from the first decorative layer (3),
and/or the further decorative layer (8) is applied to the first decorative layer (3) all over and/or covers the first decorative layer (3) and/or covers the one or more transparent regions (4),
and/or wherein the further decorative layer (8) is semi-transparent at least in regions or completely and/or has a transparency, at least in regions or completely, in the wavelength range visible to the human eye in a range of from 5% to 100%, in particular in a range of from 20% to 80%,
and the further decorative layer (8) in particular has a second decoration, wherein the second decoration, preferably at least in the display region (5), provides a static motif or a second partial region of the first motif,
and/or the further decorative layer (8), in particular to form the second decoration, preferably comprises one or more decorative coatings,
and/or wherein a spacer body (300) is arranged between the further decorative layer (8) and the first decorative layer (3) and/or the carrier layer (2),
in particular wherein
the spacer body (300) comprises an injection moulding compound or consists of it.

8. Display body (20) comprising a dynamically controllable display (7) and a decorative film (1) according to one of claims 1 to 6 or comprising a dynamically controllable display (7) and a decorative film body (10) according to claim 7,
in particular wherein the dynamically controllable display (7) can be set to a switched off state and a switched on state, preferably wherein in the switched off state of the dynamically controllable display (7), when viewing the display body (20) from the side of the decorative film (1), the display body (20) has a reflectance in the range of from 5% to 90% in the display region (5) and outside the one or more transparent regions (4), and/or has a reflectance in the range of from 20% to 80% inside the one or more transparent regions (4),
and/or wherein in the switched off state of the dynamically controllable display (7), when viewing the display body (20) from the side of the decorative film (1), the ratio of the reflectance in the display region (5) outside the one or more transparent regions (4) to the reflectance in the one or more transparent regions (4) lies in a range of from 5% to 90%, in particular in a range of from 40% to 70%.

9. Display body (20) according to claim 8,
**characterised in that**
when viewing the display body (20) from the side of the decorative film (1), the display region (5) forms a first motif (21), which is in particular visible to the human eye and which is a static motif, in the switched off state of the dynamically controllable display (7), preferably wherein the dynamically controllable display (7) is optically concealed,
and/or when viewing the display body (20) from the side of the decorative film (1), the display region (5) has a second motif (22), which is in particular visible to the human eye and which is dynamically changeable and/or a dynamic motif, in the switched on state of the dynamically controllable display (7), preferably wherein the first motif (21) is optically concealed.

10. Display body (20) according to one of claims 8 to 9,
**characterised in that**
the dynamically controllable display (7) has a luminance of at least 300cd/m², in particular at least 500cd/m².

11. Display body (20) according to one of claims 8 to 10,
**characterised in that**
the dynamically controllable display (7) has light elements (200),
the light elements (200) are partially or completely overlapping with the one or more transparent regions (4) and/or are arranged in the one or more transparent regions (4), and/or wherein the light elements (200) have a width in the range of from 1.5mm to 3mm and/or a length in the range of from 1.5mm to 3mm and/or a surface area in the range of from 2.25mm² to 9mm² respectively,
and/wherein the light elements (200) are arranged in a screen, in particular having a screen ruling in a range of from 0.5mm to 10mm, preferably in a range of from 1mm to 10mm.

12. Display body (20) according to one of claims 8 to 11,
**characterised in that**
the dynamically controllable display (7) has a light matrix, preferably made of light elements, in particular having light elements (200) in the form of mini-LEDs and/or micro-LEDs,
and/or the dynamically controllable display (7) has light elements (200) in the form of pixels,
and/or the dynamically controllable display (7) has a density of light elements (200) in the range of from 4,000 light elements per m² to 12,000 light elements per m²,
and/or the dynamically controllable display (7) has a colour depth and/or greyscale in the range of from 8 bits to 48 bits,
and/or the dynamically controllable display (7) has a distance from the first decorative layer (3) and/or the carrier layer (2) in a range of from 3mm to 30mm, preferably in a range of from 5mm to 15mm.

13. Display body (20) according to one of claims 8 to 12,
**characterised in that**
the switched off state and the switched on state of the dynamically controllable display (7) can be activated and deactivated by means of an electronic control component, and/or the dynamically controllable display (7) is dynamically controllable by means of an electronic control component,
in particular wherein the control component has a storage medium, in which, in particular by means of a digital dataset, preferably in a digital video format, the control of the dynamically controllable display (7) is defined to generate a dynamic motif, in particular the second motif,
and/or wherein the control component (210) comprises at least one sensor, in particular at least one brightness sensor, proximity sensor and/or touch sensor.

14. Method for producing a decorative film (1), in particular according to one of claims 1 to 6, for application onto a dynamically controllable display (7), comprising the following steps, preferably in the specified order:
- providing a carrier layer (2),
- applying a first decorative layer (3) onto the carrier layer (2), wherein the first decorative layer (3) has a first decoration (8) in a display region (5),
- generating one or more transparent regions (4) in the display region (5), wherein the decorative film (1) is penetrable by light emitted from the dynamically controllable display (7) in the one or more transparent regions (4),
wherein the first decorative layer (3) forms a shadow mask by means of the one or more transparent regions (4),
and wherein the one or more transparent regions (4), in particular in a top view of the first decorative layer (3), each have a surface area in a range of 0.04mm² to 0.5mm² and/or the one or more transparent regions (4) cover a portion in a range of 0.5% to 3% of the total surface area of the display region (5).

15. Method according to claim 14,
**characterised in that**
the one or more transparent regions (4) are generated by means of lasers and/or lift-off,
and/or the first decorative layer (3), in particular for producing the first decoration (31), is produced in a printing process, in particular in a gravure printing process, and/or the first decorative layer (3) is stamped and/or printed onto the carrier layer (2).

16. Method, in particular comprising a method according to one of claims 14 to 15, for producing a decorative film body (10), preferably according to claim 7, for application onto a dynamically controllable display (7),
wherein the first decorative layer (3) is connected to a further decorative layer (8), in particular by means of hot stamping, hot laminating, cold stamping, laminating and/or injection moulding, in particular in-mould decoration and/or back injection,
preferably wherein a spacer body (300) is injected between the first decorative layer (3) and the further decorative layer (8) by means of an injection moulding compound, and/or the first decorative layer (3), together with the further decorative layer (8), is back injected by an injection moulding compound, in particular wherein the first decorative layer (3) and the further decorative layer (8) join together,
and/or the further decorative layer (8) is applied to the first decorative layer (3) all over and/or covers the first decorative layer (3) and/or covers the one or more transparent regions (4).

17. Method, in particular comprising a method according to one of claims 14 to 16, for producing a display body (20), preferably according to one of claims 8 to 13, comprising the following steps:
- providing a decorative film (1) according to one of claims 1 to 6 or a decorative film body (20) according to claim 7,
- connecting the decorative film (1) or the decorative film body (20) to a dynamically controllable display (7), in particular by means of hot stamping, hot laminating, cold stamping, laminating and/or injection moulding, in particular in-mould decoration and/or back injection.

## Revendications

1. Film décoratif (1) à appliquer sur un dispositif d'affichage à commande dynamique (7), comprenant :
- une couche support (2),
- une première couche décorative (3),
dans lequel la première couche décorative (3) présente dans une zone d'affichage (5) un premier décor (31) et une ou plusieurs zones de transparence (4) dans lesquelles le film décoratif (1) est perméable à la lumière émise par le dispositif d'affichage à commande dynamique (7),
dans lequel la première couche décorative (3) forme un masque perforé au moyen des une ou plusieurs zones de transparence (4),
et dans lequel les une ou plusieurs zones de transparence (4), en particulier en vue de dessus sur la première couche décorative (3), présentent chacune une surface dans une plage de 0,04 mm² à 0,5 mm² et/ou les une ou plusieurs zones de transparence (4) recouvrent une proportion dans une plage de 0,5 % à 3 % de la surface totale de la zone d'affichage (5).

2. Film décoratif (1) selon la revendication 1,
**caractérisé en ce**
**que** la première couche décorative (3) et/ou le premier décor (31), en particulier dans la zone d'affichage (5), est de préférence opaque ou semi-transparente en dehors des une ou plusieurs zones de transparence (4), au moins par zones ou sur toute la surface
et/ou que la première couche décorative (3) et/ou le premier décor, de préférence au moins dans la zone d'affichage (5), fournit un premier motif ou une première zone partielle d'un premier motif, dans lequel le premier motif est un motif statique.

3. Film décoratif (1) selon l'une quelconque des revendications 1 ou 2,
**caractérisé en ce**
**que** les une ou plusieurs zones de transparence (4), en particulier lors d'une observation en vue de dessus sur le film décoratif (1) et/ou sur la première couche décorative (3), sont disposées en une grille,
en particulier dans lequel la grille des une ou plusieurs zones de transparence (4) présente une largeur de grille dans une plage de 1 mm à 5 mm
et en particulier les une ou plusieurs zones de transparence (4) sont disposées le long de rangées disposées parallèlement les unes aux autres, dans lequel des zones de transparence (4) disposées dans chaque deuxième rangée sont disposées décalées de la moitié de la largeur de grille dans la direction de la rangée par rapport aux zones de transparence (4) des rangées respectivement adjacentes
et/ou que les une ou plusieurs zones de transparence (4), en particulier en vue de dessus sur la première couche décorative (3), forment respectivement une surface circulaire et/ou présentent un diamètre dans la plage de 0,25 mm à 0,75 mm.

4. Film décoratif (1) selon l'une quelconque des revendications précédentes,
**caractérisé en ce**
**que** le film décoratif (1) et/ou la première couche décorative (3) présentent un rapport de transparence dans la plage de longueur d'onde visible dans la zone d'affichage (5) en dehors des une ou plusieurs zones de transparence (4) par rapport à la transparence dans la plage de longueur d'onde visible des une ou plusieurs zones de transparence (4) dans une plage de 5 % à 90 %
et/ou que le film décoratif (1) et/ou la première couche décorative (3) présente dans la zone d'affichage (5) et en dehors des une ou plusieurs zones de transparence (4) un degré de réflexion dans la plage de 5 % à 90 % et/ou présente au sein des une ou plusieurs zones de transparence (4) un degré de réflexion dans la plage de 20 % à 80 %
et/ou que le film décoratif (1), en particulier lors d'une observation d'une face du film décoratif (1) opposée à la couche support (2), et/ou le premier film décoratif (3) présente un rapport du degré de réflexion dans la zone d'affichage (5) en dehors des une ou plusieurs zones de transparence (4) par rapport au degré de réflexion des une ou plusieurs zones de transparence (4) dans une plage de 20 % à 80 %.

5. Film décoratif (1) selon l'une quelconque des revendications précédentes,
**caractérisé en ce**
**que** la première couche décorative (3), en particulier pour la réalisation du premier décor (31), présente une ou plusieurs premières couches décoratives
en particulier qu'au moins une première couche décorative des une ou plusieurs premières couches décoratives est une couche de couleur, en particulier sous la forme d'une couche de couleur de fond,
et de préférence qu'au moins une deuxième couche décorative des une ou plusieurs premières couches décoratives est une couche de couleur opaque et/ou une couche métallique, dans lequel l'au moins une deuxième couche décorative des une ou plusieurs premières couches décoratives est disposée de préférence sur la face opposée à la couche support (2) de l'au moins une première couche décorative des une ou plusieurs premières couches décoratives.

6. Film décoratif (1) selon l'une quelconque des revendications précédentes,
**caractérisé en ce**
**que** la première couche décorative (3) présente sur sa face extérieure opposée à la couche support (2) une couche de protection (311)
et/ou que la première couche décorative (3) présente sur sa face extérieure orientée vers la couche support (2) une couche de colle (313) et/ou
**que** le film décoratif (1) comprend entre la première couche décorative (3) et la couche support (2) une couche tampon, en particulier laquelle est transparente sur toute la surface et/ou
**que** la première couche décorative (3) présente au moins une couche métallique, en particulier laquelle est transparente, semi-transparente ou opaque au moins par zones et/ou sur toute la surface
en particulier dans lequel l'au moins une couche métallique est appliquée au moins par zones sous la forme d'une couche en îlot, de préférence par vaporisation, dans lequel la couche métallique comprend de préférence de l'indium ou en est constituée.

7. Corps de film décoratif (10) à appliquer sur un dispositif d'affichage à commande dynamique (7) avec un film décoratif (1) selon l'une quelconque des revendications précédentes,
**caractérisé en ce**
**que** le corps de film décoratif (10) comprend une autre couche décorative (8), en particulier dans lequel l'autre couche décorative (8) est appliquée sur une face de la première couche décorative (3) opposée à la couche support (2) ou sur une face de la couche support (2) opposée à la première couche décorative (3)
et/ou l'autre couche décorative (8) est appliquée sur toute la surface de la première couche décorative (3) et/ou recouvre la première couche décorative (3) et/ou recouvre les une ou plusieurs zones de transparence (4)
et/ou dans lequel l'autre couche décorative (8) est semi-transparente au moins par zones ou sur toute la surface et/ou présente au moins par zones ou sur toute la surface une transparence dans la plage de longueur d'onde visibles par l'œil humain dans une plage de 5 % à 100 %, en particulier dans une plage de 20 % à 80 %,
et l'autre couche décorative (8) présente en particulier un deuxième décor, dans lequel le deuxième décor, de préférence au moins dans la zone d'affichage (5), fournit un motif statique ou une deuxième zone partielle du premier motif et/ou l'autre couche décorative (8), en particulier pour la réalisation du deuxième décor, comprend de préférence une ou plusieurs couches décoratives
et/ou dans lequel un corps d'écartement (300) est disposé entre l'autre couche décorative (8) et la première couche décorative (3) et/ou la couche support (2), en particulier dans lequel le corps d'écartement (300) comprend une masse de moulage par injection ou en est constituée.

8. Corps d'affichage (20) comprenant un dispositif d'affichage à commande dynamique (7) et un film décoratif (1) selon l'une quelconque des revendications 1 à 6 ou comprenant un dispositif d'affichage à commande dynamique (7) et un corps de film décoratif (10) selon la revendication 7, en particulier dans lequel le dispositif d'affichage à commande dynamique (7) peut être amené dans un état éteint et un état allumé de préférence dans lequel, à l'état éteint du dispositif d'affichage à commande dynamique (7), lors d'une observation du corps d'affichage (20) à partir de la face du film décoratif (1), le corps d'affichage (20) présente dans la zone d'affichage (5) et en dehors des une ou plusieurs zones de transparence (4) un degré de réflexion dans la plage de 5 % à 90 % et/ou présente au sein des une ou plusieurs zones de transparence (4) un degré de réflexion dans la plage de 20 % à 80 %
et/ou dans lequel, à l'état éteint du dispositif d'affichage à commande dynamique (7), lors d'une observation du corps d'affichage (20) à partir de la face du film décoratif (1), le rapport du degré de réflexion dans la zone d'affichage (5) en dehors des une ou plusieurs zones de transparence (4) par rapport au degré de réflexion dans les une ou plusieurs zones de transparence (4) se situe dans une plage de 5 % à 90 %, en particulier dans une plage de 40 % à 70 %.

9. Corps d'affichage (20) selon la revendication 8,
**caractérisé en ce**
**que**, lors d'une observation du corps d'affichage (20) à partir de la face du film décoratif (1), la zone d'affichage (5), à l'état éteint du dispositif d'affichage à commande dynamique (7), réalise un premier motif (21), en particulier reconnaissable par l'œil humain, lequel est un motif statique, de préférence dans lequel le dispositif d'affichage à commande dynamique (7) est optiquement caché
et/ou que lors d'une observation du corps d'affichage (20) à partir de la face du film décoratif (1), la zone d'affichage (5) présente, à l'état allumé du dispositif d'affichage à commande dynamique (7), en particulier un deuxième motif (22) reconnaissable par l'œil humain, lequel est modifiable dynamiquement et/ou est un motif dynamique, de préférence dans lequel le premier motif (21) est optiquement caché.

10. Corps d'affichage (20) selon l'une quelconque des revendications 8 à 9,
**caractérisé en ce**
**que** le dispositif d'affichage à commande dynamique (7) présente une densité lumineuse d'au moins 300 cd/m², en particulier d'au moins 500 cd/m².

11. Corps d'affichage (20) selon l'une quelconque des revendications 8 à 10,
**caractérisé en ce**
**que** le dispositif d'affichage à commande dynamique (7) présente des éléments lumineux (200), les éléments lumineux (200) sont disposés en chevauchement partiel ou total avec les une ou plusieurs zones de transparence (4) et/ou dans les une ou plusieurs zones de transparence (4), et/ou dans lequel
les éléments lumineux (200) présentent une largeur dans la plage de 1,5 mm à 3 mm et/ou une longueur dans la plage de 1,5 mm à 3 mm et/ou présentent chacun une surface dans la plage de 2,25 mm² à 9 mm²
et/dans lequel les éléments lumineux (200) sont disposés en une grille, en particulier avec une largeur de grille dans une plage de 0,5 mm à 10 mm, de préférence dans une plage de 1 mm à 10 mm.

12. Corps d'affichage (20) selon l'une quelconque des revendications 8 à 11,
**caractérisé en ce**
**que** le dispositif d'affichage à commande dynamique (7) présente une matrice lumineuse, de préférence composée d'éléments lumineux, en particulier avec des éléments lumineux (200) sous forme de mini-LED et/ou de micro-LED
et/ou que le dispositif d'affichage à commande dynamique (7) présente des éléments lumineux (200) sous forme de pixels
et/ou que le dispositif d'affichage à commande dynamique (7) présente une densité des éléments lumineux (200) dans la plage de 4000 éléments lumineux par m² à 12 000 éléments lumineux par m²
et/ou que le dispositif d'affichage à commande dynamique (7) présente une profondeur de couleur et/ou des niveaux de gris dans la plage de 8 bits à 48 bits
et/ou que le dispositif d'affichage à commande dynamique (7) présente une distance par rapport à la première couche décorative (3) et/ou la couche support (2) dans une plage de 3 mm à 30 mm, de préférence dans une plage de 5 mm à 15 mm.

13. Corps d'affichage (20) selon l'une quelconque des revendications 8 à 12,
**caractérisé en ce**
**que** l'état éteint et l'état allumé du dispositif d'affichage à commande dynamique (7) peut être activé et désactivé au moyen d'un composant de commande électronique et/ou que le dispositif d'affichage à commande dynamique (7) peut être commandé dynamiquement au moyen d'un composant de commande électronique
en particulier dans lequel le composant de commande présente un support de stockage dans lequel, en particulier au moyen d'un jeu de données numériques, de préférence dans un format vidéo numérique, la commande du dispositif d'affichage à commande dynamique (7) pour la génération d'un motif dynamique, en particulier du deuxième motif, est définie
et/ou dans lequel le composant de commande (210) comprend au moins un capteur, en particulier au moins un capteur de luminosité, capteur de proximité et/ou capteur tactile.

14. Procédé pour la fabrication d'un film décoratif (1), en particulier selon l'une quelconque des revendications 1 à 6, à appliquer sur un dispositif d'affichage à commande dynamique (7) comprenant les étapes suivantes, de préférence dans l'ordre indiqué :
- la fourniture d'une couche support (2)
- l'application d'une première couche décorative (3) sur la couche support (2), dans lequel la première couche décorative (3) présente un premier décor (8) dans une zone d'affichage (5),
- la génération d'une ou plusieurs zones de transparence (4) dans la zone d'affichage (5), dans lequel le film décoratif (1) est perméable dans les une ou plusieurs zones de transparence (4) à la lumière émise par le dispositif d'affichage à commande dynamique (7),
dans lequel la première couche décorative (3) forme un masque perforé au moyen des une ou plusieurs zones de transparence (4),
et dans lequel les une ou plusieurs zones de transparence (4), en particulier en vue de dessus sur la première couche décorative (3), présentent chacune une surface dans une plage de 0,04 mm² à 0,5 mm² et/ou les une ou plusieurs zones de transparence (4) recouvrent une proportion dans une plage de 0,5 % à 3 % de la surface totale de la zone d'affichage (5).

15. Procédé selon la revendication 14,
**caractérisé en ce**
**que** les une ou plusieurs zones de transparence (4) sont générées au moyen d'un laser et/ou décollement
et/ou que la première couche décorative (3), en particulier pour la fabrication du premier décor (31), est fabriquée dans un procédé d'impression, en particulier dans un procédé d'impression en creux
et/ou que la première couche décorative (3) est estampée et/ou imprimée sur la couche support (2).

16. Procédé, comprenant en particulier un procédé selon l'une quelconque des revendications 14 et 15, pour la fabrication d'un corps de film décoratif (10), de préférence selon la revendication 7, à appliquer sur un dispositif d'affichage à commande dynamique (7), dans lequel la première couche décorative (3) est reliée à une autre couche décorative (8), en particulier au moyen d'un estampage à chaud, laminage à chaud, estampage à froid, laminage et/ou moulage par injection, en particulier d'une décoration en moule et/ou d'un surmoulage par injection, de préférence dans lequel entre la première couche décorative (3) et l'autre couche décorative (8) est injecté un corps d'écartement (300) au moyen d'une masse de moulage par injection et/ou la première couche décorative (3) est surmoulée par injection conjointement avec l'autre couche décorative (8) d'une masse de moulage par injection, en particulier dans lequel la première couche décorative (3) et l'autre couche décorative (8) se relient
et/ou que l'autre couche décorative (8) est appliquée sur toute la surface de la première couche décorative (3) et/ou recouvre la première couche décorative (3) et/ou recouvre les une ou plusieurs zones de transparence (4).

17. Procédé, comprenant notamment un procédé selon l'une quelconque des revendications 14 à 16, pour la fabrication d'un corps d'affichage (20), de préférence selon l'une quelconque des revendications 8 à 13, comprenant les étapes suivantes :
- la fourniture d'un film décoratif (1) selon l'une quelconque des revendications 1 à 6 ou d'un corps de film décoratif (20) selon la revendication 7
- la liaison du film décoratif (1) ou du corps de film décoratif (20) à un dispositif d'affichage à commande dynamique (7), en particulier au moyen d'un estampage à chaud, laminage à chaud, estampage à froid, laminage et/ou moulage par injection, en particulier d'une décoration en moule et/ou d'un surmoulage par injection.
